# EUROPÄISCHE PATENTSCHRIFT

(11) **EP 2 625 490 B1**
(45) Veröffentlichungstag und Bekanntmachung des Hinweises auf die Patenterteilung: **07.02.2018**
(21) Anmeldenummer: 11767021.6
(22) Anmeldetag: 10.10.2011
(51) Int. Cl.: G01F 1/26, G01F 15/02, G01F 15/14, G01F 15/18, B29C 45/17, B29C 45/76, G01F 1/24, G01F 15/00

(54) **MECHATRONISCHES STROEMUNGSMESSGERAET**
MECHATRONIC FLOW METER
APPAREIL DE MESURE DE DÉBIT MÉCATRONIQUE

(30) Priorität: 22.12.2010 DE 102010064005; 22.12.2010 DE 102010064004; 22.12.2010 DE 102010064002; 22.12.2010 DE 102010064003; 22.12.2010 DE 102010063999; 08.10.2010 DE 102010042213
(43) Veröffentlichungstag der Anmeldung: 14.08.2013
(73) Patentinhaber: IFM Electronic GmbH, 45128 Essen (DE)
(72) Erfinder: BUHL, Peter, 88079 Kressbronn (DE)
(86) Internationale Anmeldenummer: PCT/EP2011/067665
(87) Internationale Veröffentlichungsnummer: WO 2012/045890

(56) Entgegenhaltungen:
- EP-A1- 1 704 883
- WO-A1-2009/080633
- DE-A1- 19 608 780

## Beschreibung

Die Erfindung betrifft einen mechatronische Strömungsmesseinsatz gemäß dem Oberbegriff des Anspruchs 1 sowie ein mechatronisches Strömungsmessgerät und die Verwendung eines mechatronischen Strömungsmesseinsatzes.
Aus der DE19608780 ist ein Verteilerventil mit einer Wärmeisolierung aus Hohlräumen bekannt.

Schwebekörper-Durchdurchflussmesser sind beispielsweise aus der DE 34 11 156, DE 76 36 539 und der DE 196 08 780 bekannt. Ein anderes Prinzip mit einem Magnetsensor und einem auf einem Hebel angeordnetem Magneten zeigt die DE 38 01 770. In der DE 103 61 564 ist ein Hantelkopfsensor und in der WO 2008/083785 eine Lösung zur Reduzierung des Wärmeeintrages über das elektrische Zuleitungskabel des Strömungssensors beschrieben. Aus der DE 10 2004 028 759 ist ein gattungsgemäßes mechatronisches Strömungsmessgerätes mit einem einstückigen, y-förmigen Einschraubgehäuse bekannt, bei dem die Position eines Hubkörpers mit einem induktiven Messwertaufnehmer erfasst wird. Verschiedene mechatronische Strömungssensoren werden von der Anmelderin unter anderem unter der Bezeichnung SBY hergestellt und vertrieben. Andere derartige Strömungsmessgeräte benutzen einen Magnet-Messaufnehmer, z.B. einem GMR-Sensor. Beiden Typen gemeinsam ist, dass der Messwertaufnehmer keinen direkten Mediumskontakt hat und dass dieser prinzipbedingt (durch die kurze maximale Detektionsdistanz) nahe beim Beeinflussungs- bzw. Bedämpfungskörper (Metallteil oder Magnet) angeordnet ist. Der Messwertaufnehmer ist in manchen Fällen auf einer Leiterplatte aufgebracht, die auch eine integrierte Vorverarbeitungselektronik aufweisen kann. Oder eine Vorverarbeitungselektronik ist alternativ oder zusätzlich im Messwertaufnehmer integriert. Das ganze bildet dann eine Messwertaufnehmereinheit. Neben der Messwertaufnehmereinheit ist eine Ausgabeeinheit vorgesehen, die die entsprechende Elektronik, Mechanik und ggf. Anzeigemittel wie konventionelle Näherungsschalter und Sensoren aufweist, um das Messaufnehmersignal umzuformen, einstellbar zu machen und in einem Standardformat als Analog-, Digital- oder Schaltsignal für nachfolgende Einheiten, wie z.B. eine SPS, über Stecker- oder Kabelanschluss zur Verfügung zu stellen. Verschiedene mechatronische Strömungsmessgeräte werden von der Anmelderin unter anderem unter der Bezeichnung SBY hergestellt und vertrieben. Die bekannten mechatronischen Hubkörper-Strömungsmessgeräte ähnlich der DE 10 2004 028 759 weisen einen induktiven Standardnäherungsschalter mit einem Gewindegehäuse auf, der in einen Kunststoff-Adapter geschraubt ist, der wiederum in ein dreistutziges Messing-Gehäuse eingeschraubt ist, in dem das Medium, z.B. Wasser fließt. Der Adapter ist wegen der Hinterschnitte teuer in der Herstellung. Derartige Messgeräte sind für Mediums- bzw. Fluidtemperaturen bis ca. 80-120° C einsetzbar und sind deshalb nicht oder wenig für Hochtemperaturanwendungen (über 80-120° C, insbesondere ca. 200°C) geeignet. Derartige Temperaturen treten unter anderem beim Temperieren von Spitzgießwerkzeugen auf. Die Begrenzung ist in der Regel bzw. hauptsächlich durch die nahe des Hubkörpers gelagerte und somit mediumstemperaturbelastete Messwertaufnehmereinheit gegeben, deren Elektronikbauelemente, Lötverbindungen oder Messaufnehmer bzw. Sensorelemente solche hohe Temperaturen jedoch schlecht oder gar nicht aushalten. Im einfachsten Fall, wie bei induktiven mechatronischen Strömungsmessgeräten, besteht die Messwertaufnehmereinheit nur aus einem Messwertaufnehmer in Form einer Spule bzw. eines LC-Oszillators, der innerhalb des Gehäuses des induktiven Näherungsschalters angeordnet ist. Der preisgünstige Näherungsschalter ist in das Gehäuse des mechatronischen Strömungsmessgerätes eingeschraubt. Das Gehäuse derartiger Strömungsmessgeräte besteht nicht aus hochtemperaturbeständigem Kunststoff und ist für die dauerhafte Sicherstellung einer zulässigen Temperatur für die Messwertaufnehmereinheit bzw. den Messaufnehmer nicht geeignet.

Bekannt sind weiterhin Thermoformenverfahren, Thermoformenanlagen und Spritzgießwerkzeuge mit fluidheizten/fluidgekühlten Temperiereinrichtungen, die mehrere Strömungsmessgeräte aufweisen, wobei an die Strömungsmessgeräte z.T. hohe Temperaturbeständigkeitsforderungen gestellt werden, bedingt durch die hohe Verarbeitungstemperatur des Spritzgießmaterials selbst und/oder durch eine hohe Werkzeugtemperatur. Ein Spritzgießwerkzeug bzw. Spritzgusswerkzeug ist ein Werkzeug aus mehreren Baugruppen und verschiedenen Einzelteilen, vorwiegend aus Stahl, das zur Herstellung großer Stückzahlen von Kunststoffteilen dient. Ein Spritzgießwerkzeug kann über eine oder zwei Trennebenen und mehrere Kavitäten mit Formkernen pro Trennebene verfügen, d. h. es können mehrere Kunststoffteile gleichzeitig in einer Form produziert werden. Werkzeuge mit zwei Trennebenen verfügen oft über einen zweiseitigen Steilgewindetrieb, der das schnelle, parallele Öffnen und Schließen der beiden Formebenen ermöglicht. Weitere Grundbestandteile von Spritzgießwerkzeugen sind: a) Aufspannplatten zur Aufspannung des Werkzeugs auf die Spritzgießmaschine b) Anguss c) Kühlkreislauf d) Auswertereinheit. Der Kunststoff wird mittels des Zylinders der Spritzgussmaschine mit hohem Druck durch die Zuführkanäle in die Kavitäten des Werkzeugs eingespritzt, so dass die Luft entweicht. Durch spezielle Entlüftungskanäle in dem Formteil wird über einen Kühlkreislauf soweit abgekühlt, bis "entformt" werden kann. Die Dauer eines Zyklus (Zeit zwischen zwei Entformungen) ist abhängig von Werkstückgröße und Kühldauer. Die Entformung erfolgt durch so genannte Auswerfer, wobei zur Entnahme der Formteile Entnahmeroboter eingesetzt werden können. Die Standzeit der Spritzgussform hängt von verschiedenen Parametern des Spritzzyklus wie beispielsweise Temperatur und Temperaturdifferenzen oder dem Einspritzdruck ab. Man unterscheidet unter anderem zwischen Kaltkanal- und Heißkanalwerkzeugen. Bei Kaltkanalsystemen härtet der Kunststoff im Anguss aus und wird nach dem Auswerfen des Formteiles abgetrennt. Heißkanalsysteme können über so genannte Nadelverschlusssysteme verfügen, bei dem die Einspritzdüse direkt nach dem Nachdrücken durch eine Verschlussnadel geschlossen wird. Weitere Bauformen von Spritzgießformen sind: a) Dreiplattenwerkzeug b) Isolierkanalwerkzeug c) Etagenwerkzeug. Als Formwerkzeug bezeichnet man Bearbeitungswerkzeuge und Handwerkzeuge die in den Hauptgruppen der formenden Fertigungsverfahren, Urformen und Umformen, in Werkzeugmaschinen oder im Handwerk verwendet werden. Relevant ist vor allem die DIN 8580. Formwerkzeuge nehmen eine zentrale Stellung in vielen Bereichen der produzierenden und verarbeitenden Industrie ein. Eine besonders große Bedeutung haben sie: in der Metallindustrie, speziell in der blechverarbeitenden Industrie (z. B. Karosseriebau) und in der gesamten Gusstechnik, in der Kunststoffverarbeitung (vor allem bei Spritzgießverfahren) und in einigen Bereichen des Handwerks (z.B. bei Schmieden). Die Herstellung von Messgerätegehäusen oder Lebensmittelverpackungen, wie Becher, Deckel und Schalen aus Kunststoff, stellt höchste Anforderungen an die Präzision der Spritzgieß- und Thermoformwerkzeuge.

Das Thermoformen ist ein Verfahren zur Umformung thermoplastischer Kunststoffe. Früher wurde es als Warmformen, Tiefziehen oder Vakuumtiefziehen bezeichnet. Man unterscheidet die Thermoformverfahren nach dem Halbzeug: Dünnere Halbzeuge werden Folien genannt, dickere (ab ca. 1,5 mm) Platten. Folien-Halbzeuge können auf großen (bis Ø 1,8 m) Rollen den Thermoformautomaten zugeführt werden. Daneben sind die Thermoformen die Werkzeuge für das Thermoformen.

Beim Vakuum-Thermoformverfahren sind z.B. folgende Schritte bzw. Verfahrenshandlungen üblich und typisch: 1) Folie einlegen 2) Spannrahmen zu 3) Aufheizen 4) Vorblasen 5) Formhelfer ab; Tisch auf/ab 6) Vakuum ein 7) Kühlen 8) Entformen 9) Maschine öffnen; Die Zykluszeiten betragen etwa 30 sec bis 10 min. Je nach Kunststoff bzw. Ausgangsmaterial müssen die Werkzeuge gekühlt oder beheizt werden, ggf. ist auch eine Vorwärmstation erforderlich. Formwerkzeuge mit optimaler Kühlung, Heizung und Temperierung, vor allem einer automatisierten Temperierung, sowie eine effiziente Schnellwechseltechnik sind die Grundvoraussetzungen für qualitativ hochwertige Produkte und eine geringe Ausschussraten. POM-Formmassen können auf allen handelsüblichen Spritzgießmaschinen mit
herkömmlichen Universalschnecken verarbeitet werden. Das L/D-Verhältnis sollte etwa 18-22 D betragen bei einer Steigung von 0,8 bis -1,0 D. Rückstromsperren sind empfehlenswert, um den
Materialrückfluss zu verhindern. Angusskanäle, Anschnitte und Heißkanalsysteme sollten nicht zu klein
bemessen werden.

POM-Formmassen können im Spritzgießverfahren bei Massetemperaturen zwischen 180°C bis 230°C verarbeitet werden und lassen sich gut entformen. Bei höheren Temperaturen ist auf eine kurze Verweilzeit zu achten, da das Material thermisch geschädigt werden kann.

Die Werkzeugtemperatur für optimale Festigkeit, Steifigkeit und Härte sollte zwischen 60°C und 90°C
gewählt werden. Zur Verringerung der Nachschwindung kann die Temperatur bis 120°C angehoben
werden. Einem möglichen Teileverzug kann durch unterschiedliche Temperierung der Formhälften gegengesteuert werden. Eine gut ausgelegte Temperierung beeinflusst über die Werkzeugtemperatur die Oberflächengüte, die Schwindung und die Toleranzen der Formteile. Präzise Empfehlungen für die Formmassen bzw. Ausgangsmaterialien zu geben, ist schwierig, denn sie hängen u.a. von der Werkzeuggestaltung, der Werkzeugtemperierung und der eingesetzten Spritzgießmaschine ab und können nur nach Kenntnis aller Randbedingungen gegeben werden. Deshalb ist es wichtig, die Werkzeugtemperierung sehr präzise und zeitlich exakt vornehmen zu können.

Spritzgießwerkzeuge müssen verfahrensbedingt zonenabhängig temperiert werden. Dazu sind je nach Werkzeuggröße einer oder mehrere Temperierkreisläufe erforderlich. Die Durchflussmenge muss für jeden Temperierkreislauf separat regulierbar sein, um den geforderten Temperaturbereich für die jeweilige Zone im Spritzgießwerkzeug zu gewährleisten. Eine aus der Praxis bekannte einfache Art und Weise der Temperiermedienverteilung ist die Verteilung über so genannte Blindverteiler. Bei diesem System wird die Temperiermedienverteilung durch Einzelabgänge aus einem Zentralrohr realisiert. Die Einzelabgänge können absperrbar sein, auf eine Anzeige des Temperiermediendurchflusses je Einzelkanal wird in der Regel verzichtet. Blindverteiler haben den Nachteil, dass eine Regulierung und Visualisierung der Temperiermedienströme nicht möglich ist. Ist der Temperiermediendurchfluss in einer oder mehrerer Zonen des Spritzgießwerkzeuges gestört, so können Fehler erst an Hand aufgetretener Qualitätsmängel an den hergestellten Formteilen erkannt werden. Aus der DE 41 15 963 A1 ist es bekannt, zur Kühlung von Spritzgießwerkzeugen mit mehreren Kühlkreisläufen, die mit unterschiedlichen Durchflussmengen pro Zeiteinheit beaufschlagt werden, für jeden Kreislauf jeweils ein Schwebekörper-Durchflussmengen-Messgerät einzusetzen, die in Form eines Registers unmittelbar nebeneinander in Reihe angeordnet sind. Die Zu- und Abflüsse aller Kreisläufe werden dabei über Sammelkanäle zusammengefasst. Hierzu sind für den gemeinsamen Abfluss bzw. Rücklauf in der oberen Durchflussarmatur Querkanäle zwischen den einzelnen Messgeräten angeordnet und in analoger Weise Querkanäle in der unteren Durchflussarmatur, für den Zufluss bzw. Vorlauf. Die Durchflussmengen für die einzelnen Kreisläufe sind mittels Stellventilen manuell regulierbar, wobei die jeweilige Durchflussmenge für einen Kreislauf über den definierten Auftrieb eines Schwimmkörpers in einem transparenten Schauglas abgelesen und kontrolliert werden kann.

Derartige Systeme haben den Nachteil, dass sie nicht alle Anforderungen für eine elektronische Prozessüberwachung und Prozessregelung erfüllt. Die eingestellten Durchflüsse sind in Abhängigkeit vom anliegenden zentralen Temperiermedium und von den Druckverhältnissen im System Werkzeug - Temperierkreislauf instabil und können nicht automatisch beeinflusst werden. Das Ablesen von Durchflusswerten am Schauglas ist wesentlich von der vorhandenen Temperiermedienqualität abhängig, eine praxisübliche chemische Behandlung des Temperiermediums führt zu einer Verschmutzung der Schaugläser, die eine Kontrolle der Durchflussmenge erschwert. Für rechnergesteuerte Temperaturregelungen und Prozessüberwachungen ist die elektronische Erfassung von prozessrelevanten Daten sowie die Ansteuerung von elektrischen Stellelementen wesentliche Verfahrensgrundlage. Diese Mess- und Stelleinheiten müssen derzeit zusätzlich in die separaten Kühlkreisläufe eingebunden werden, was mit einem zusätzlichen Aufwand verbunden ist. Die zwangsläufig vorhandenen mechanisch betätigbaren Regelventile und Durchfluss-Schaugläser bleiben für die automatische, die Temperatur regelnde Prozesssteuerung ungenutzt und verursachen zusätzliche Kosten.

Z.B. wird der Fertigungsprozess für Datenträger auf Kunststoffbasis so eingestellt, dass eine hinreichend genaue Substratqualität bei möglichst kurzer Zykluszeit erzielt wird. Da eine gute Abformqualität der Informationsstruktur von optischen Datenträgern eine hohe Werkzeugtemperatur erfordert und eine kurze Zykluszeit eine niedrige Werkzeugtemperatur zur schnelleren Erstarrung der eingespritzten Kunststoffschmelze zur Bedingung hat, ist eine genaue Temperaturführung offensichtlich von größter Bedeutung. Es sind Zykluszeiten von 2,0 - 2,6 Sek. für DVDs erreicht worden. Heutzutage wird bei der Temperatureinstellung vor allem die radiale Verformung des Formlings berücksichtigt. Im Fertigungsprozess muss die Temperatur der Werkzeuge je nach Disk-Format in einem Temperaturbereich von ca. 40° bis 145°C - z. B. 120°C beim DVD-Spritzgießprozess gehalten werden. Bereits Abweichungen von nur 0,5 bis 1,0° C können schon dazu führen, dass die entstehenden Produkte nicht brauchbar sind. Die genaue Temperatursteuerung, ist daher entscheidende Voraussetzung für eine effektive Produktion.

Aufgabe der Erfindung ist es, mechatronische Hubkörper-Strömungsmesseinsätze, mechatronische Hubkörper-Strömungsmessgeräte, dementsprechende Gehäusekörper und Temperiereinrichtungen für Spritzgieß- und Thermoformanlagen zu verbessern, insbesondere temperaturbeständiger zu machen, vor allem bezüglich der Temperatur des Fluides, dessen Strömungsgeschwindigkeit erfasst werden soll.

Gelöst wird diese Aufgabe durch die in den unabhängigen Ansprüchen angegebenen Merkmale. Vorteilhafte Weiterentwicklungen der Erfindung sind in den Unteransprüchen angegeben.

Nachfolgend ist die Erfindung anhand eines in Zeichnungen dargestellten Ausführungsbeispiels näher erläutert.

Es zeigen:
Figur 1: Aufsicht eines hochleistungsfähigen mechatronischen Strömungsmessgerätes im eingebauten Zustand als Strömungsmessvorrichtung; teilweise geschnitten;
Figur 2: Längsschnitt dieses mechatronischen Strömungsmessgerätes gemäß Figur 1.
Figur 3: Aufsicht eines mechatronischen Strömungsmesseinsatzes 1 im nichteingebauten Zustand
Figur 4: Gehäusekörper 401 für eine achtkanalige Strömungsüberwachungsvorrichtung bzw. Strömungsmessvorrichtung 600
Figur 5: Gehäusekörper 401 für eine zweikanalige Strömungsüberwachungsvorrichtung bzw. Strömungsmessvorrichtung 600
Figur 6: Blockschaltbild einer Temperiereinrichtung 500 einer Ur- oder Umformeinrichtung 520
Figur 7: Perspektivische und Schnittdarstellung eines Wärmeleitkörpers 7 in Form einer Wärmeleithülse 7a
Figur 8: Aufsicht und Längsschnitt-Auschnitt eines mechatronischen Strömungsmessgerätes 4 mit Strömungsmesseinsatz 1 im eingeschraubten Zustand und mit Wärmeleithülse 7a
Figur 9: Perspektivische und Schnittdarstellung eines vierkanaligen Gehäusekörpers 401 mit einem Strömungsmesseinsatz 1 im befestigten bzw. eingeschraubten Zustand als Strömungsüberwachungs- oder Strömungsmessvorrichtung 600
Figur 10: Perspektivische Darstellung eines vierkanaligen Gehäusekörpers 401 mit einem vier Strömungsmesseinsätzen 1 im befestigten bzw. eingeschraubten Zustand als Strömungsüberwachungs- oder Strömungsmessvorrichtung 600
Figur 11: Perspektivische und Schnittdarstellung zweier miteinander verbundener, z.B. verschraubter, zweikanaligen Gehäusekörpers 401 mit je zwei Strömungsmesseinsätzen 1 im befestigten bzw. eingeschraubten Zustand als zwei Strömungsüberwachungs- oder Strömungsmessvorrichtungen 600
Figur 12: Perspektivische Darstellung zweier miteinander verbundener, z.B. verschraubter, zweikanaligen Gehäusekörpers 401 mit je zwei Strömungsmesseinsätzen 1 im befestigten bzw. eingeschraubten Zustand als zwei Strömungsüberwachungs- oder Strömungsmessvorrichtungen 600; entspricht Fig. 11

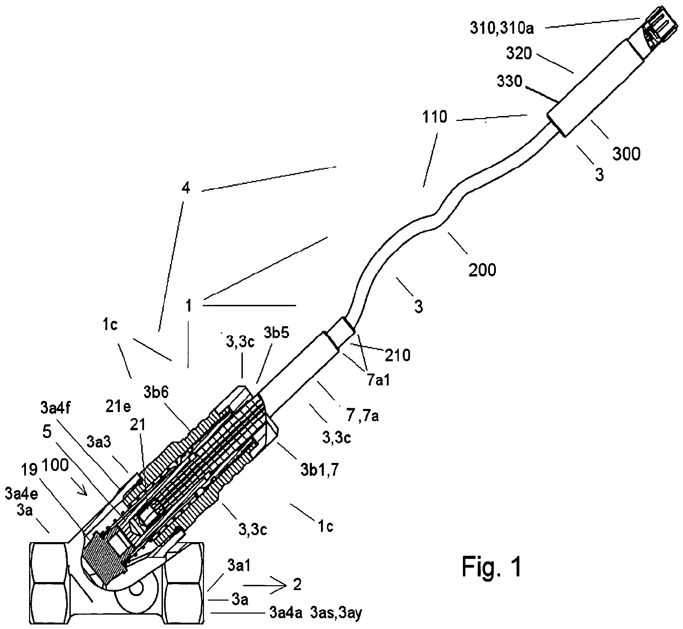

Die Figur 1 zeigt eine mechatronische Strömungsüberwachungsvorrichtung bzw. ein trömungsmessgerät 4, bestehend aus einem Strömungsmesseinsatz 1 mit einer Messeinheit 1c, die in ein Mediumgehäuse 3a mit ¾-Zoll-Gewindeanschluss 3a1g eingeschraubt ist. In dem Gehäuse 3b ist eine Führungshülse 10 mit einem Außengewinde 19a angeordnet. Auf der thermisch isolierenden Führungshülse 10 ist ein Schiebeelement 12 bzw. eine Hubkörpereinheit 18 verschiebbar gelagert. Das Schiebeelement 12 kann entgegen der Kraftwirkung einer Feder 14 in Richtung des Gehäuses 3b verschoben werden. Das Hubkörpermodul 18 besteht aus einem Verbindungselement in Form eines Führungsrohres 18b1 aus Kupfer, das durch den Gehäusemantel 3b6 und die Führungshülse 10 geführt ist. Im Im Hubkörper 18a bzw. im Hubkörpermodul 18 ist ein Magnet als Beeinflussungselement 20 für das Sensorelement 21e gehalten, der eine relativ hohe Curie-Temperatur besitzt. In die Führungsachse 10 ist ein Wärmeleitkörper in Form einer Wärmeleithülse 7a eingeschraubt. Im Innenraum am vorderen Ende der Wärmeleithülse 7a befindet sich die Messfühlereinheit 21 mit Sensorelement 21e, vorzugsweise ein GMR-Sensor mit Vorverarbeitungselektronik, die auf einer Sensorplatine 24 befestigt ist. Zur Funktionsweise derartiger mechatronischer Strömungsmesseinsätze mit einem induktiven oder Magnet-Sensorelelement und Strömungsmessgeräte wird auf DE 10 2004 028 759 und ähnliche Schriften verwiesen.

Die Ausgabeeinheit 300 weist neben einem zylinderförmigen Gehäuse 330 und einem Signalausgang 310, z.B. einem Kabel- oder Steckerausgang, zumindest eine Elektronikeinheit 320 auf, die das Signal der Messaufnahemereinheit 21 bzw. des Messaufnehmers bearbeitet und in ein standardisiertes Ausgangssignal umwandelt und an eine nachfolgende Einheit wie eine SPS abgibt, ggf. auch Anzeige-Elemente wie LEDs. Die Elektronikeinheit übernimmt ggf. auch die Programmierbarkeit und/oder Bedienbarkeit (leitungsgebunden und/oder mittels Schalter oder Potentiometer an der Auswerteeinheit). Die Auswerteeinheit ist nicht, wie bei konventionellen Lösungen, in das eigentliche Messgerät, in diesem Fall in die Messeinheit 1c, integriert, sondern bevorzugt über ein konventionelles zwei-, drei- oder vieradriges flexibles Kabel 200, z.B. einem Standard-PVC- oder einem höherbelastbaren Gummi-Kabel, mit der Messeinheit 1c verbunden. Die Ausgabeeinheit 300 weist ausgangsseitig einen Steckeranschluss 310a auf, z.B. einen drei- oder vierpoligen M8- oder M12-Rundsteckverbinder, so dass diese direkt und preiswert mit der nachfolgenden Einheit verbunden werden kann. Durch diesen modularen und den sonstigen modularen Aufbau des Strömungsmessgerätes 1 kann die Ausgabeeinheit 300 universell gestaltet und für viele Anwendungsfälle eingesetzt werden. Gleichzeitig kann durch den vorzugsweise modularen Aufbau der Messeinheit 1c, insbesondere durch die Verwendung dreier ineinander geschraubter Haupthülsen 3b6, 10, 7d/7a und der modularen Hubkörpereinheit 18, diese den Mediums- und Messbedingungen vor Ort leicht und individuell angepasst werden. Ggf. kann das flexible Kabel 200 auch über eine nicht dargestellte Steckverbindung mit der Ausgabeeinheit 300 verbunden werden. Dies gibt noch mehr Flexibilität hinsichtlich der Auswahl und des Einsatzes von Ausgabeeinheit 300 und Kabel 200 (Länge, Material usw.). Besonders bei Hochtemperaturanwendungen ist es von Vorteil, wenn der Platz innerhalb der Messeinheit 1c für Temperaturableitmittel bzw. den Wärmeleitkörper 7 und für die mechanische und thermische Stabilität dieser Einheit verwendet werden kann. Ein weiterer Vorteil ergibt sich insbesondere bei der Verwendung von preiswerten flexiblen Kabeln, die zumeist eine PVC-Ummantelung aufweisen, die bei hohen Temperaturen entweder nicht einsetzbar oder mechanisch wenig belastbar sind. Durch Verwendung eines Wärmeleitkörpers 7, dessen innerer Teil 7c sich im Gehäusemantel und im Deckel 3b1 befindet und der über die rückseitige Front 3b5 bzw. über den Deckel 3b1 hinausgeht (Äußerer Teil 7b) und in dem das Kabel 200 geführt ist, ist der Austrittspunkt im Bereich des rückseitigen Ausganges 7a1 bzw. des Kickschutzes 210 wenig temperaturbelastet, ggf. auch wenig medienbelastet durch evtl. austretenden heißes Medium, so dass das Strömungsmessgerät 1 bzw. das flexible Kabel 200 in diesem Bereich mechanische und chemische Belastungen besser verträgt bzw. der Einsatz preiswerter Kabel möglich ist. Die Ausgabeeinheit 300 ist weit entfernt vom heißen Medium und darum auch nur konventionellen Temperaturbelastungen ausgesetzt. Auch dies erfordert wiederum keinen Einsatz temperaturbelastbarer und teurer Materialien für Gehäuse, Elektronik u.a..

Das Mediumgehäuse 3a, üblicherweise aus Messing bestehend, weist insgesamt drei Stutzen 3a4 mit drei Gewindeanschlüsse auf, wobei zwei mediumseitige Gewindeanschlüsse 3a1g und ein strömungsmesseinsatzseitiger 3a2 vorhanden sind. Die Strömungsrichtung 2 des zu messenden flüssigen bzw. gasförmigen Mediums ist durch einen Pfeil gekennzeichnet. Aus dem mit einem Deckel 3b1 verschlossenen Gehäuse 3b des mediumseitigen Teil der Messeinheit 1c ragt ein Wärmeleitkörper 7 in Form einer Kupfer- oder Messing-Wärmeleithülse 7a, in der das Anschlusskabel 200 geführt wird. Das Ende der Wärmeleithülse 7a weist einen Knickschutz 210 für das flexible Anschlusskabel 200 auf. Es ist vorteilhaft, Knickschutz 210 und den äußeren Teil 7b des Wärmeleitkörpers 7 einstückig auszuführen, wobei sich Kupfer besonders eignet und die Wandstärke des Knickschutzes entsprechend dünn ausgeführt ist, so das durch umschließendes Verpressen mittels eines Mehrsegment-Werkzeuges ein Knickschutz in Verbindung mit einer ausgezeichneten flüssigkeitsdichten Verbindung mit dem mehr oder weniger elastischen Kabel 200 erreicht werden kann ohne das separate Maßnahmen für die dauerhafte Dichtigkeit in diesem Bereich betroffen werden müssen oder ein weitergehender Materialeinsatz in Form von speziellen Dichtungen notwendig ist.

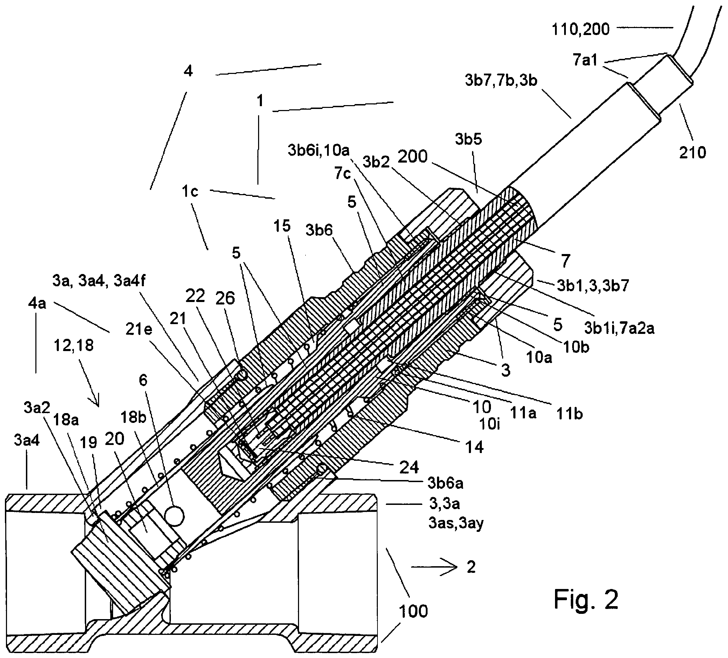

In Figur 2 ist eine Schnittdarstellung des Anmeldungsgemäßen mechatronischen Strömungsmessgerätes 4 mit einer entsprechenden Strömungsmesseinheit 1c gemäß Figur 1 vergrößert dargestellt. In dem unten offenen Gehäusemantel 3b6 ist eine unten geschlossene Führungshülse 10 aus temperaturbeständigem, aber thermisch schlecht leitendem Material wie PEEK oder PPS eingeschraubt, die den wesentlichen Teil der Isoliereinheit 5 darstellt, um die Messaufnehmereinheit 21 gegen die Hitze des Mediums zu schützen. Ein Dichtungselement 11a in Form eines O-Ringes verhindert, dass Medium bis zur Schraubverbindung gelangen bzw. aus dem Gerät austreten kann. Zwischen mittlerer Führungshülse 10 und äußerer 3b6 Hülse ist ein schmaler ringförmiger Hohlraum 15 für die Feder 14 und das Führungsrohr 18b. Dieses Führungsrohr 18b kann selber, vor allem im Falle des Einsatzes eines induktiven Näherungssensors bzw. einer Spule bzw. LC- oder LR-Oszillators als Messaufnehmereinheit 21, das Beeinflussungselement (entsprechend dem Magneten 20) für die Messaufnehmereinheit 21 sein oder kann ein solches Beeinflussungselement bzw. Schwingkreisbedämpfungselement beinhalten. Das Beeinflussungselement ist dann als Bedämpfungsring ausgeführt, der vorteilhafterweise aus nichtmagnetischem Edelstahl besteht. In vorliegenden Fall ist ein GMR-Messaufnehmereinheit 21 als integriertes Bauelement mit einem Magnet als Beeinflussungselement 20 dargestellt, der mit dem Hubkörper 18a des Hubkörpermodul 18 (mit Feder 14 und Führungsrohr 18b) fest verbunden bzw. in diesem verschlossen ist, so dass kein Mediumkontakt wegen möglicher Korrosion oder Verunreinigung des Mediums vorhanden ist. Es ist bei Magnet-Messaufnehmern im Gegensatz zu induktiven messenden Geräten üblich, dass das Messelement bzw. der Messaufnehmer Vorverarbeitungselektronik aufweist, die zusammen mit dem Messelement eine kompakte bzw. integrierte Einheit bilden. Messaufnehmereinheit 20 kann im Sinne dieser Anmeldung bedeuten, dass Vorverarbeitungselektronik in diese integriert ist oder aber die Messaufnehmereinheit nur den Messaufnehmer, z.B. eine Sensorspule, aufweist. Magnetfeldempfindliche Messaufnehmer in Sinne der beiden beschriebenen Verfahren bzw. Sensortypen sind für Hochtemperaturanwendungen besonders geeignet, da sie vor allem gegenüber optischen und kapazitiven Verfahren robust und schmutzunempfindlich sind.

Wie bereits erwähnt, ist das Messgerät 4 mit seinem Messeinsatz 1 besonders vorteilhaft durch seinen modularen Aufbau. Einerseits kann das Hubkörpermodul 18 leicht durch ein anderes ersetzt werden oder einzelne Bestandteile wie die Feder 14, das Führungsrohr 18b oder der Hubkörper 18a ausgewechselt werden. Anderseits ergibt sich eine größere Universalität und preiswerte Herstellbarkeit des Strömungsmesseinsatz 1 bzw. des Strömungsmessgerätes 4 durch den modularen Aufbau mittels dreier koaxialer, miteinander verschraubter und sich überlappender Haupthülsen, die sich oberhalb des Hubkörpers 18a befinden. Dies sind
a) der mediumsseitig offene Gehäusemantel 3b6 als äußere Hülse, die mittels eines unteren Außengewindes 3b6a und des Dichtungselementes 26 mediumsdicht in das Mediumgehäuse 3a eingeschraubt ist (3b6i, 10a);
b) die mediumsseitig geschlossene Führungshülse 10 als mittlere Hülse, die in den Gehäusemantel 3b6 eingeschraubt ist 3b2, 10a, mittels des Dichtungselementes 11a abgedichtet ist und mit diesem Gehäusemantel 3b6 einen hohlzylinderförmigen Hohlraum 15 zur Führung des Führungsrohres 18b der Hubkörpereinheit 18 und/oder zur Führung der Feder 14 bildet. Für hohe Mediumstemperaturen ist die Führungshülse 10 als Isolierhülse 10i aus hitzebeständigem thermisch isolierenden Material, insbesondere einem Kunststoff wie PEEK oder PPS, gebildet;
c) die Messaufnehmerhülse in Form einer Wärmeleithülse 7b, die an oder in deren mediumsseitiger Spitze die Messaufnehmereinheit 21 trägt und die in die mittlere Hülse, d.h. die Führungshülse 10 eingeschraubt ist 7a2a, 10b. Die Abdichtung erfolgt optional mittels des Dichtungselementes 11b. Für hohe Mediumstemperaturen von mindestens 120 bis 200 Grad Celsius ist diese Messaufnehmerhülse 7d als wärmebeständige und hochwärmeleitfähige Wärmeleithülse 7a ausgebildet (vorzugsweise mit einem einstückigen Mantel aus hochreinem Kupfer mit einem Wärmeleitkoeffizient größer als 300 W/Km und über die Rückfront 3b5 hinausragend), die durch den guten thermischen Kontakt mit der Messaufnehmereinheit 21 deren Wärme in den rückwärtigen Teil der Wärmeleithülse 7a transportiert, ggf. auch in einen sekundären Wärmeleitkörper 7, z.B. in eine vierte Hülse, die als Deckel 3b1 und Kontermutter ausgebildet ist. Durch den modularen Aufbau mittels dreier Haupthülsen, kann das Messgerät 1c oder einzelne Teile desselben wie die Wärmeleithülse 7a mit der Messaufnehmereinheit 21 sehr schnell ausgewechselt werden, z.B. im Fehlerfall. Es reicht dann, diese kleinere Einheit, d.h. eine der drei Haupthülsen auszuwechseln.

Die Führungshülse 10 als Hauptbestandteil der Isoliereinheit 5 aus thermisch isolierendem Material zu machen, hilft gegen die Temperaturbelastung der Messaufnehmereinheit 21. Wenn jedoch viel heißes Medium strömt oder die Temperatur sehr hoch ist, hilft diese Maßnahme wenig, da erkannt wurde, dass die Wärmeableitfähigkeit konventioneller mechatronischer Strömungsmessgeräte gering ist. Aus diesem Grunde ist der Einsatz einer Isoliereinheit 5 bzw. einer thermisch isolierenden Führungshülse 10 mit einem niedrigen Wärmeleitkoeffizienten mit dem Einsatz eines Wärmeleitkörpers 7 mit einem hohen Wärmeleitkoeffizienten innerhalb der Führungshülse 10 kombiniert. In die Führungshülse 10 ist von oben ein Wärmeleitkörper 7 in Form einer unten geschlossenen und oben offenen Wärmeleithülse 7a mit großer Wandstärke und somit sehr geringem Wärmewiderstand eingeschraubt. Zumindest deren Mantel ist sinnvollerweise einstückig, z.B. als Dreh- oder Tiefziehteil aus Kupfer, ausgebildet ist, um Wärmeleitungssperren bzw. Zonen mit verringerter Wärmeleitfähigkeit zu vermeiden. Das untere Ende der Wärmeleithülse 7a ist mit einem hartgelötetem Kupferdeckel verschlossen. Auf dem Deckel bzw. in der Wärmeleithülse 7a ist die Messaufnehmereinheit 21 mit einer Leiterplatte 24 angeordnet, die eine gute thermische Ankopplung an den Deckel bzw. an die Wärmeleithülse 7a hat, z.B. durch ein Verguss- oder Klebmitttel, das sinnvollerweise elektrisch isoliert, aber thermisch gut leitend ist (Wärmeleitpaste). An die Leiterplatte 24 sind die Litze 22 des flexiblen Kabels 200 angelötet, das durch die Wärmeleithülse 7a geführt ist (zumindest deren Adern). Der Wärmeleitkörper 7 ist zwar der Hauptbestandteil der Isoliereinheit 5, aber auch das Hubkörpermodul 18 mit dem Führungsrohr 18b (das zur Druckstoßdämpfung eine Dämpfungsöffnung 6 aufweist und bei Verwendung eines Magnet-Näherungssensors aus Kupfer, Messing oder einem Hochtemperaturwerkstück wie POM, PEEK oder PPS besteht), sowie der nur schmale Kanal 15, in der die Feder 14 geführt wird, tragen dazu bei, das der Temperaturgradient von der Hauptströmung des Mediums zur Messaufnehmereinheit 21 möglichst groß ist. Der Wärmeleitkörper 7 ist so gestaltet, das zumindest ein Teil (äußerer Teil 7b) von ihm zur äußeren Oberfläche des Gehäuses 3b des Messeinheit 1c gehört, insbesondere zur mediumsfernen Oberfläche. Dadurch kann wesentlich mehr Wärme durch die Messeinheit 1c bzw. den Strömungsmesseinsatz 1 an die Umgebung abgegeben werden (teilweise auch über die elektrischen Zuleitungen des flexiblen Kabels 200). Dies geschieht vor allem durch Wärmekonvektion und -strahlung. Dies ist realisiert durch die massive, wärmewiderstandsarme Wärmeleithülse 7a, die mit ihrem äußeren Teil 7b bis über die Rückfront 3b5 hinausreicht. Die Rückfront 3b5 ist hier in der besonders bevorzugten Ausgestaltung durch einen Deckel 3b1 in Form einer Metallmutter gebildet, die zugleich Kontermutter ist. Durch dessen Innengewinde 3b1i und den Kraftschluss bei Konterung ergibt sich ein niedriger Wärmewiderstand zur primären Wärmeleithülse 7a, so dass der Deckel 3b1 ein äußerer wärmeleitender, - konvektierender und -strahlender Gehäuseteil 3b7 und sekundärer Teil des Wärmeleitkörper 7 ist, zugleich auch eine hohlzylinderförmige Gehäuse-Mutter mit Innengewinde 3b1 i.

Der Gehäusemantel 3b6 und die Führungshülse 10 sind aus einem schlecht wärmeleitenden Material wie PEEK oder PPS (Polypropylensulfid) mit einem Wärmeleitkoeffizienten von ca. 0.3 W/K m. Das im Fluidgehäuse 3a bzw. in der Fluid-Anschlusseinheit 100 (dreistutziges Fluidgehäuse als Schrägsitzventilgehäuse) strömende Medium umgibt einen Teil der Führungshülse 10, die eine beliebige Querschnittsform haben kann. Sie hat aber bei kreishohlzylinderförmiger Ausbildung einige technische und ökonomische Vorteile. Aufgrund der hohen Temperatur des Mediums bis zu 200°C und darüber wird trotz des schlechten Wärmeleitkoeffizienten von PPS Restwärme von der Führungshülse 10 in Richtung Wärmeleithülse 7a transportiert. Die Führungshülse 10 dient als thermischer Isolator, der einen endlichen Wärmewiderstand aufweist. Aufgrund des sehr hohen Wärmeleitfähigkeitskoeffizienten des Wärmeleitkörpers 7, der bevorzugt als kreishohlzylinderförmige Wärmeleithülse 7a ausgeführt ist, wird die Wärme aber gut zum mediumsfernen Ende der Wärmeleithülse 7 abtransportiert, wo sie in die Umgebung nach außen abgeführt wird. Dadurch kann gewährleistet werden, dass die Messfühlereinheit 21 nicht mehr als 90°C warm wird.

Neben einer Messfühlereinheit 21 bzw. einem Messfühler für ein Beeinflussungselement 20 in Form eines Dauer-Magneten, für den ein GMR-Sensor bzw. GMR-Messfühler besonders geeignet ist, ist zur Erfassung der Position des Schiebeelements 12 bzw. des bewegten Hubkörpers 18a der Hubkörpereinheit 18 alternativ auch andere Sensortypen denkbar. Insbesondere sind induktive Näherungs-Sensoren oder induktive Näherungsschalter sehr geeignet, vor allem, wenn das Prinzip der Außenringbedämpfung benutzt wird, dass durch sehr kleine Hysteresen sehr hohe Genauigkeiten, besonders Schaltgenauigkeiten, ermöglicht.

Alternativ zu PPS POM kann als Material für das Gehäuse 3b und/oder den Gehäusemantel 3b6 und die Führungshülse 10 auch PPE, PEEK oder POM verwendet werden.

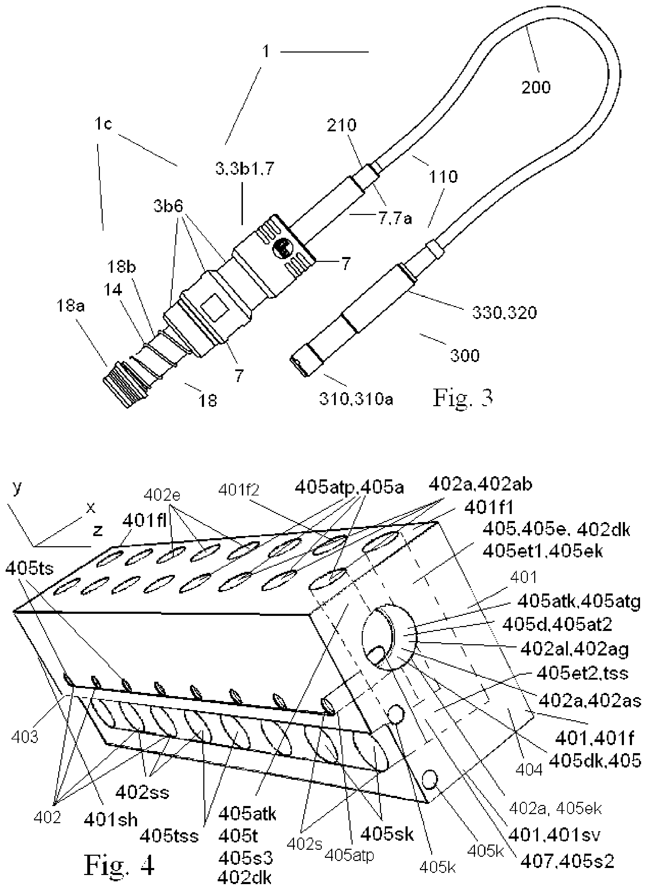

Fig. 3 zeigt einen Strömungsmesseinsatz 1, der im Gegensatz zu den Figuren 1 bis 2 einen größeren sekundären Wärmeleitkörper 7 in Form eines metallischen Deckels 3b1 mit Innengewinde 3b1i aufweist. Dadurch ist eine bessere Kühlung der Messaufnehmereinheit 21 gewährleistet. Der langgestreckte Gehäusemantel 3b6 ist ebenfalls aus thermisch isolierendem Material, so dass keine ungewollten Wärmebrücken mit niedrigem Wärmeleitkoeffizienten parallel zur Wärmebrücke Medium - Messfühereinheit entstehen können. Auch der Hubkörper ist leicht konisch und speziell ausgebildet, so eine hohe Messdynamik von über 1:100 erreicht werden kann. Dies bedeutet, dass ohne Wechseln des Hubkörpers bzw. der Hubkörperform ein Strömungsgeschwindigkeitsbereich von weniger als 100 ml/min bis über 100 l/min überwacht bzw. gemessen werden kann.

Die abgesetzte Ausgabeeinheit 300 weist neben einem zylinderförmigen Gehäuse 330 und einem Signalausgang 310, z.B. einem Kabel- oder Steckerausgang, zumindest eine Elektronikeinheit 320 auf, die das Signal der Messaufnahemereinheit 21 bzw. des Messaufnehmers bearbeitet und in ein standardisiertes Ausgangssignal umwandelt und an eine nachfolgende Einheit wie eine SPS abgibt, ggf. auch Anzeige-Elemente wie LEDs. Die Elektronikeinheit übernimmt ggf. auch die Programmierbarkeit und/oder Bedienbarkeit (leitungsgebunden und/oder mittels Schalter oder Potentiometer an der Auswerteeinheit). Die Auswerteeinheit ist nicht, wie bei konventionellen Lösungen, in das eigentliche Messgerät, in diesem Fall in die Messeinheit 1c, integriert, sondern bevorzugt über ein konventionelles zwei-, drei- oder vieradriges flexibles Kabel 200, z.B. einem Standard-PVC- oder einem höherbelastbaren Gummi-Kabel, mit der Messeinheit 1c verbunden. Die Ausgabeeinheit 300 weist ausgangsseitig einen Steckeranschluss 310a auf, z.B. einen drei- oder vierpoligen M8- oder M12-Rundsteckverbinder, so dass diese direkt und preiswert mit der nachfolgenden Einheit verbunden werden kann. Durch diesen modularen und den sonstigen modularen Aufbau des Strömungsmessgerätes 1 kann die Ausgabeeinheit 300 universell gestaltet und für viele Anwendungsfälle eingesetzt werden. Gleichzeitig kann durch den vorzugsweise modularen Aufbau der Messeinheit 1c, insbesondere durch die Verwendung dreier ineinander geschraubter Haupthülsen 3b6, 10, 7d/7a und der modularen Hubkörpereinheit 18, diese den Mediums- und Messbedingungen vor Ort leicht und individuell angepasst werden. Ggf. kann das flexible Kabel 200 auch über eine nicht dargestellte Steckverbindung mit der Ausgabeeinheit 300 verbunden werden. Dies gibt noch mehr Flexibilität hinsichtlich der Auswahl und des Einsatzes von Ausgabeeinheit 300 und Kabel 200 (Länge, Material usw.). Besonders bei Hochtemperaturanwendungen ist es von Vorteil, wenn der Platz innerhalb der Messseinheit 1c für Temperaturableitmittel bzw. den Wärmeleitkörper 7 und für die mechanische und thermische Stabilität dieser Einheit verwendet werden kann. Ein weiterer Vorteil ergibt sich insbesondere bei der Verwendung von preiswerten flexiblen Kabeln, die zumeist eine PVC-Ummantelung aufweisen, die bei hohen Temperaturen entweder nicht einsetzbar oder mechanisch wenig belastbar sind. Durch Verwendung eines Wärmeleitkörpers 7, der über die rückseitige Front 3b5 hinausgeht (Äußerer Teil 7b) und in dem das Kabel 200 geführt ist, ist der Austrittspunkt im Bereich des rückseitigen Ausganges 7a1 bzw. des Kickschutzes 210 wenig temperaturbelastet, ggf. auch wenig medienbelastet durch evtl. austretenden heißes Medium, so dass das Strömungsmessgerät 1 bzw. das flexible Kabel 200 in diesem Bereich mechanische und chemische Belastungen besser verträgt bzw. der Einsatz preiswerter Kabel möglich ist. Die Ausgabeeinheit 300 ist weit entfernt vom heißen Medium und darum auch nur konventionellen Temperaturbelastungen ausgesetzt. Auch dies erfordert wiederum keinen Einsatz temperaturbelastbarer und teurer Materialien für Gehäuse, Elektronik u.a..

Die Figur 4 zeigt einen achtkanaligen Gehäusekörper 401 mit acht Funktionsblöcken 401f für eine achtkanalige Strömungsüberwachungsvorrichtung bzw. Strömungsmessvorrichtung 600,. In den ein Strömungsmesseinsatz befestigt, vorzugsweise eingeschraubt werden kann. Jeder Funktionsblock weist mehrere zueinander rechtwinklig oder parallel angeordnete Fluidkanalstücke bzw. Teilstücke 405t, 405et, 405at auf, die bis zum Ventilsitz 407 für den Hubkörper 18a des Strömungsmesseinsatzes 1 einen fluidtechnisch gesehen aktiven Eingangskanal 405ek und einen aktiven Ausgangskanal 405ak bilden. Der Strömungsmesseinsatz 1 ist in die Öffnung 402ss bzw. das Kanalteilstück 405tss einschraubbar. Zusätzlich ist ein weiterer Sensor bzw. ein weiteres Sensormessgerät, vorzugsweise in Temeperatur- oder Druckmessgerät in die (kleineren) Öffnungen 402s einschraubbar. Durch insgesamt drei, einander überschneidende Sacklöcher 405s, 405s1, 405s2, 405s3 lassen sich die Kanale 405ak, 405ek herstellen, die für jeden Funktionsblock 401f gebraucht werden. Der Ventilsitz ist vorzugsweise in den Gehäusekörper 401 einstückig integriert, indem ein im Durchmesser erweiterter Sackkanal 405sk in Form des Kanalteilstückes 405tss für den Strömungsmesseinsatz 401 durch Bohren oder Fräsen hergestellt ist. Der Vorteil dieser Ausführung ist, dass der Grundkörper 401 einfach hergestellt werden kann, z.B. als Messingblock 401 durch Gießen, und die Sacklöcher 405s durch Bohren oder Fräsen. Es sind keine Blindstopfen notwendig, sofern auch der zweite Sensorkanal 405 bzw. Sensorteilstück 405et bzw. Sackkanal 405sk mit sekundären Sensoren bzw. Sensormessgeräten bestückt wird.

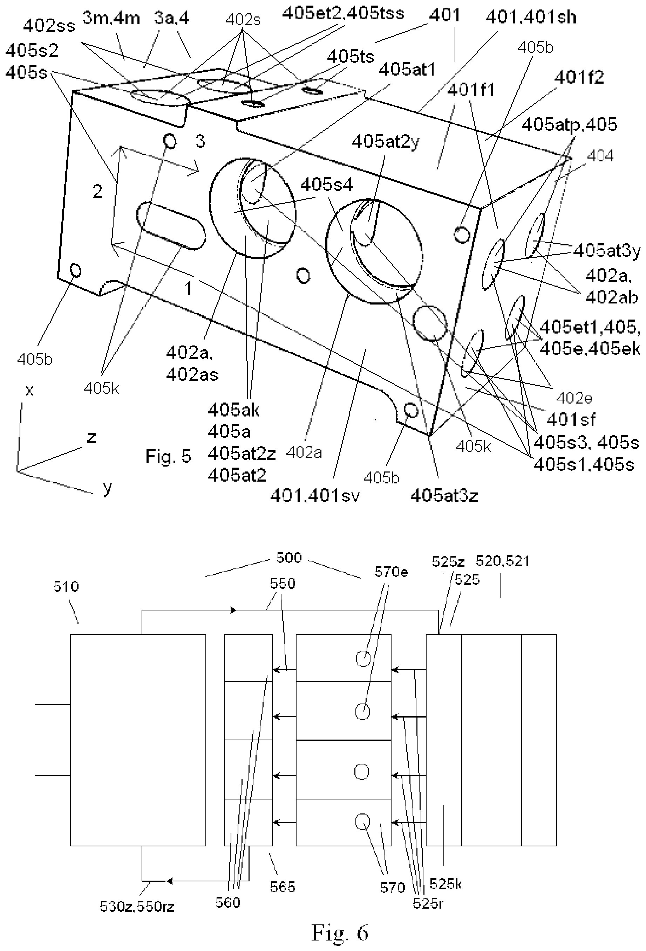

Figur 5 zeigt eine ähnliche Ausführung wie Figur 4, jedoch sind hier, bei mit Blindstopfen verschlossenen Einlasskanalöffnungen 402e und Auslasskanalöffnungen 402a auf der rechten Seite zwei parallele Fluid-Ausgänge 402a in z-Richtung vorhanden. Dies ist ein strömungswiderstandstechnischer Vorteil bei begrenzter Grundkörperhöhe und vielen Känalen und vielen aneinandergereihten und über die Befestigungsknäle 405b verschraubten Grundkörpern 401.

Fig. 6 zeigt eine Temperiereinrichtung 500 einer Ur- oder Umformeinrichtung 520 mit einem Gehäusekörper 401 bzw. 577, einem mit einem Temperiergerät 510, das zumindest eine Pumpe zum Pumpen des Fluides in den Zulauf, eine Temperaturänderungseinrichtung zum Heizen des Fluides und/oder zum Kühlen des Fluides sowie eine Temperaturregeleinrichtung für das zu pumpende Fluid aufweist. Das zu temperierende Formwerkzeug 525, insbesondere ein Spritzgießwerkzeug, weist mindestens einen Fluidkanal 525k, d.h. mindestens einem Zulauf 525z und mindestens einem Rücklauf 525z auf. D.h. dass der Fluidkanal 525k an mindestens eine Zulaufleitung 550z und mindestens eine Rücklaufleitung 550r hat. Im dargestellten Beispiel ist ein vierkanaliges Formwerkzeug 525 gezeigt und demzufolge ein vierkanaliger Rücklauf bis zum Strömungsmessgeräteblock 575 mit vier mechatronischen Strömungsmesseinsätzen 570e, die zusammen mit den vier Funktionsblöcken des Gehäusekörpers 401 vier mechatronische Strömungsmessgeräte 570 bilden, d.h. einen Messgeräteblock. An diesen schließt sich ein Regelventilblock 565 mit vier elektrischen Regelventilen 560 an, die entsprechend der Signale der zugeordneten Strömungsmessgeräte 570 gesteuert werden. Da die die Strömung zumindest eines der Strömungsmessgeräte 570 gemäß der Figuren 1 und 2 im Bereich des Hubkörpers so umgelenkt ist, so dass die Anströmrichtung des Fluides ungleich der Abströmrichtung ist, d.h. dass die Auslenkungsrichtung des Hubkörpers gegenüber der An- oder Abströmrichtung um einen bestimmten Winkel Wn bzw. Wb, der größer als Null Grad ist, differiert, und dass das Strömungsmessgerät 570 ein mechatronisches Hubkörperströmungsmessgerät ist, werden beträchtliche Vorteile erreicht. Dies sind z.B.: a) die Trübung oder Verschmutzung des Fuides ist unerheblich b) der Hubkörper wird von der Strömung weg bewegt. Dadurch ist Platz vorhanden, einen genauen Sensor bzw. ein Annäherungsmeßgerät zu platzieren, insbesondere ein elektronisches induktives oder Magnet-Näherungsmessgerät oder einen elektronischen induktiven oder Magnet-Näherungsschalter. Statt einer oder mehrerer Grundkörper können auch ein oder mehrere Fluidgehäuse 3a verwendet sein, wie sie in den Figuren 1 und 2 gezeigt sind.

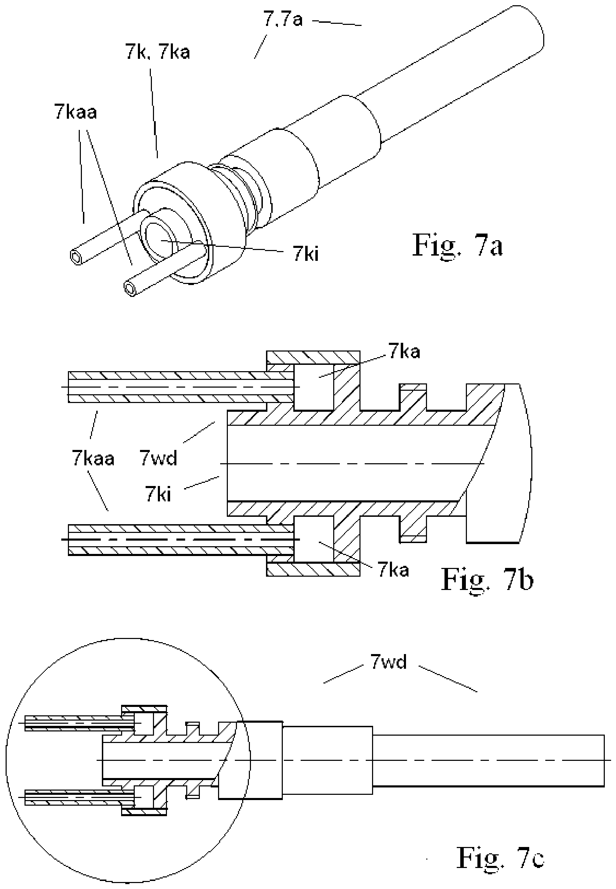

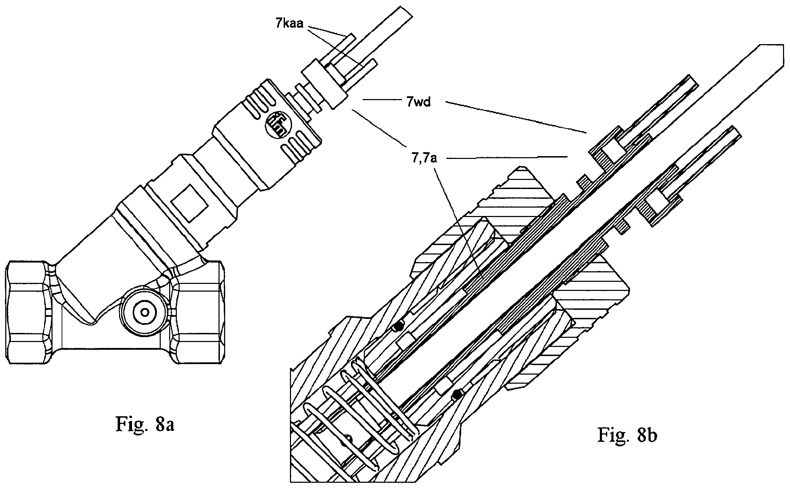

Fig. 7 und 8 zeigen eine Wärmeleithülse 7wd und ein Strömungsmessgerät 4 mit einer derartigen Wärmeleithülse 7wd. Wenn der mechatronische Strömungsmesseinsatz 1 in einer heißen Umgebung eingebaut ist, ist eine Wasserkühlung mittels eines doppelwandigen Wärmeleitkörpers 7wd bzw. der doppelwandigen Wärmeleithülse 7wd . Diese ragt aufgrund der besseres Kühlung erheblich weniger oder gar nicht aus dem Gehäuse 3c heraus du reduziert somit die Baulänge. Die Außenkammer ist bei Kühlbetrieb mit einer Kühlflüssigkeit, vorzugsweise Wasser gefüllt. Die Erfindung eignet sich besonders gut für Temperiereinrichtungen für Ur- und Umformeinrichtungen 520, insbesondere für Hochtemperaturspritzgussvorrichtungen bzw. Spritzgießmaschinen 525. Das Medium (Wasser, Öl oder Glykol) besitzt eine Temperatur von ca. 120 bis 200° Celsius und hat dabei einen Druck von ca. 3 bis 20 bar. Mit dem mechatronischen Strömungsmesseinsatz 1 und einem darauf basierenden Strömungsmessgerät 4 kann die Menge des strömenden Mediums sehr genau und trägheitsarm erfasst und der Prozess entsprechend geregelt werden. Damit kann mit einem zusätzlichen Temperatursensor der Wärmeeintrag oder der Wärmeabtrag in das bzw. aus dem Spritzgießwerkzeug heraus genau bestimmt werden und damit der Spritzgießprozess optimiert werden. Diese Lösung eignet sich mechatronischer Strömungsmesseinsatz 1 und/oder mechatronisches Strömungsmessgerät 4 sehr gut als hochtemparaturbeständige Strömungsüberwachungs- oder Strömungsmesseinrichtung 600 für Temperiereinrichtungen 500 von Ur- und Umformeinrichtungen 520.

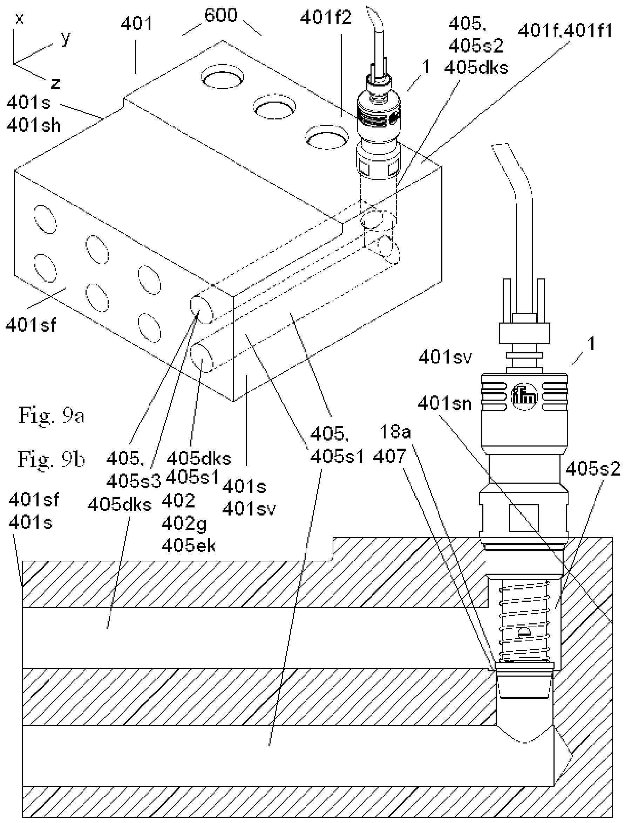

Figur 9 zeigt eine ähnliche Ausführung wie Figur 4, jedoch wurde hier auf den z-Kanal verzichtet. Er ist damit noch einfacher in der Herstellung und im Aufbau und ermöglicht strenge Kanaltrennung, so dass kein Fluid von einem in den anderen Kanal gelangen kann. Alle Ein- und Auslässe sind auf der gleichen Seite, so dass nur eine Aschlußseite existiert, was bei beengten Platzverhältnissen von Vorteil ist.

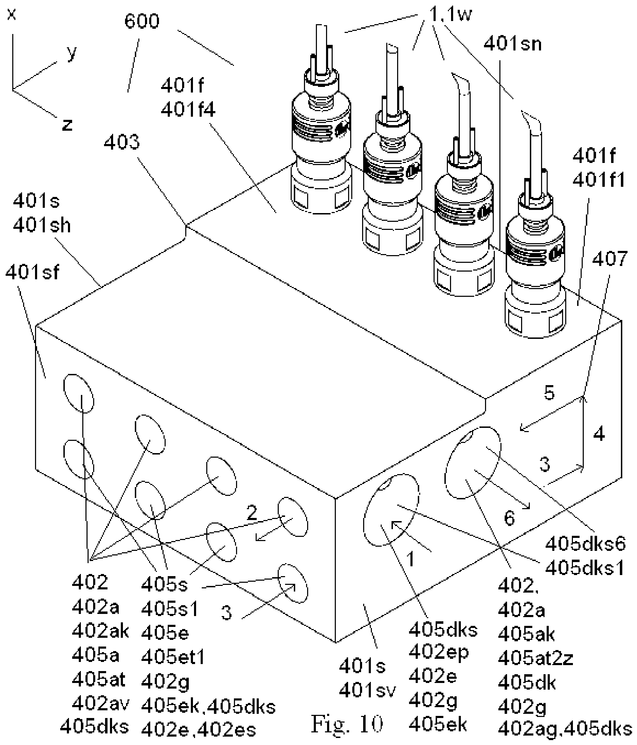

Figur 10 zeigt eine ähnliche Ausführung wie Figur 5, jedoch ist hier der Einlaßkanal 402e in z-Richtung strömungstechnisch vom Auslaßkanal 402 in z-Richtung getrennt. Im Bereich der Pfeile 2 und 3 ist der Vorlauf (oben) und der Rücklauf (unten) der hier anschließbaren, zu temperierenden bzw. zu messenden Maschine, vorzugsweise einer Spritzgießmaschine mit entsprechendem Formwerkzeug(en).

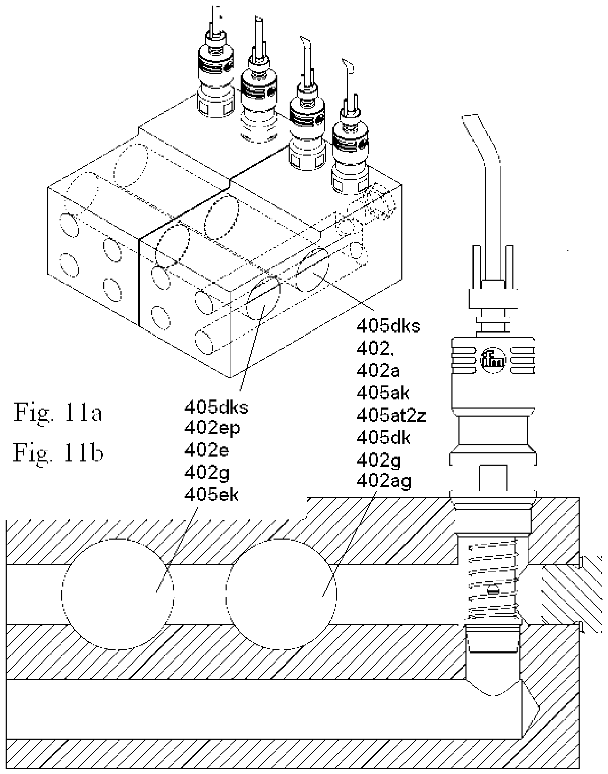

Figur 11 und 12 zeigt eine ähnliche Ausführung mit zwei aneinandergereihten, verschraubten 2-fach-Gehäusegrundkörpern 401 wie Figur 10, jedoch sind ein Kanal oder mehrere der oberen Kanäle als Durchgangsloch bzw. Durchgangslöcher 405dy in y-Richtung gestaltet. Dies ermöglich bei unwesentlich höherem Aufwand in der Herstellung neben dem Ausgangskanal 405a in z-Richtung auch aktive Ausgangskanäle 405ak in y-Richtung.

Nachfolgend ist die Funktion der ersten bis fünften Hauptvariante Beschreibung näher erläutert:
Die erste Hauptvariante der Erfindung betrifft einen mechatronischen Strömungsmesseinsatz (1) mit einer Elektronikeinheit (320) zur Erzeugung eines Ausgangssignales. Dieses kann unmittelbar einer Ausgabeeinheit (300) in analoger, binärer oder digitaler und in standardisierter Form, z.B. 0-10 V oder 4-20 mA, in zugeführt werden.

Der Strömungsmesseinsatz (1) hat ein Gehäuse 3 mit einem Gehäusemantel (3b6) und einer innerhalb des Gehäusemantels (36b) angeordneten Führungshülse (10). Auf dieser sitzt ein ein Schiebeelement (12) bzw. Hubkörper (18), der gegen die Rückstellkraft, insbesondere eine Federkraft, verschiebbar gelagert ist. Im Innenraum der Führungshülse 10 ist ein Sensorelement (21e) bzw. ein Messwertaufnehmereinheit (21) zur Erzeugung des Messsignales angeordnet das/die die von der Strömungsgeschwindigkeit des zu messenden Mediums abhängige Position des Schiebelements 12 bzw. des Hubkörpers (18a) erfasst. Der Strömungsmesseinsatz (1) ist so gestaltet, dass das zu messende Fluid nicht am Hubkörper in Längsachsrichtung vorbeifließt bzw. vorbeifließen kann, wie es z.B. bei den Schwebekörpern der Schwebekörper-Durchflußanzeiger oder der Schwebekörper-Durchflussmessgeräte der Fall ist, sondern im Bereich des Hubkörpers (18a) umgelenkt ist bzw. umlenkbar ist. Dadurch ist die Abströmrichtung des Fluides nach dem Passieren des Hubkörpers (18a) ungleich der Auslenkrichtung des Schiebeelementes (12) bzw. Hubkörpers (18a), wobei sich erheblich Vorteile bei der Anordnung des Sensorelementes 21e, insbesondere was die Auslenkbarkeit des Hubkörpers 18a bzw. der Hubkörpereinheit 18, die anwendbaren Messprinzipien und die mögliche Temperaturbeaständigkeit angeht. Es ist eine Wärmeleithülse (7a) mit einem hohen Wärmeleitkoeffizienten vorgesehen, die in die Führungshülse 10 mit einem niedrigeren Wärmeleitkoeffizienten einschraubbar und in der das Sensorelement (21e) bzw. die Messwertaufnehmereinheit (21) mit einem Anschlusskabel 200 angeordnet ist. Das Anschlusskabel (200) mündet nicht in einer Steckerbuchse oder einem Stecker, die/der wie üblich starr mit dem Gehäuse des Strömungsmesseinsatzes (1) verbunden bzw. in dieses eingesetzt ist, sondern über die Wärmeleithülse (7) hinausragt. Eine erste Variante besteht darin, dass die Wärmeleithülse 7a aus einem hochwärmeleitfähigen Material besteht mit einem Wärmeleitkoeffizienten, der mindestens 50 Mal größer ist als der der Führungshülse 10, aber mindestens 220 W/Km beträgt, vorzugsweise aus Kupfer oder Kupferlegierung besteht mit einem Mindestwärmeleitkoeffizienten von 300 W/Km. Die Isoliereinheit (5) und/oder der Gehäusemantel (3b6) besteht aus PPS (Polyphenylensulfid), POM (Polyoxymethylen, Polyacetal) oder PEEK (Polyetheretherketon), jeweils mit einem Wärmeleitkoeffizient kleiner 1 W/K m. Das Anschlusskabel 200 ist durchgängig flexibel und direkt mechanisch und elektrisch mit dem Sensorelement (21e) bzw. der Messwertaufnehmereinheit (21) verbunden ist, d.h. das die Adern des Kabels (200) einstückig ausgebildet sind. Das Sensorelement (21e) bzw. der Messwertaufnehmereinheit (21) ein induktiver oder Magnet-Näherungssensor ist, der keinen Kontakt mit dem zu messenden Fluid hat, sondern zumindest durch die Wandung der Isoliereinheit (5) von diesem Fluid getrennt ist, vorzugsweise auch durch die Wandung der Wärmeleithülse (7a). Die Ausgabeeinheit (300) und die innerhalb der Ausgabeeinheit (300) angeordnete Elektronikeinheit (320) sind so gestaltet und angeordnet sind, dass:
a) sie nicht in der Messeinheit (1c) des Strömungsmesseinsatzes (1) bzw. nicht in dessen Gehäuse (3b) angeordnet sind, sondern am Ende des über die Wärmeleithülse (7a) hinausgehenden Anschlusskabels (200)
b) und/oder dass das, durch die Elektronikeinheit erzeugte und mittels der Ausgabeeinheit (300) ausgegebene oder ausgebbare Signal ein Standardsignal ist, insbesondere ein binäres (Schaltsignal) oder analoges, lineares Signal, z.B. 0-10 V, 4-20 mA, ist,
c) und/oder dass die Ausgabeeinheit (300) auch optische Anzeigeelemente wie LEDs oder LCDs und/oder Einstellelemente wie Potentiometer, z.B. zur Einstellung des Schaltpunkte (Strömungsgrenzwerte u.a.) aufweist.

Ein weiterer Aspekt der Beschreibung betrifft ein mechatronisches Strömungsmessgerät (4) mit einem derartigen, in einem Fluidgehäuse (3a) oder Gehäusekörper (401) befestigten, insbesondere eingeschraubten Strömungsmesseinsatz (1) mit einem Hubkörper (18a), der strömungsgeschwindigkeitsabhängig durch ein Fluid auslenkbar ist bzw. ausgelenkt ist.

Das mechatronische Strömungsmessgerät (4) weist folgende Eigenschaften bzw. Merkmale auf:
a) der Strömungsmesseinsatz (1) und/oder das Strömungsmessgerät (4) sind so gestaltet, dass das zu messende Fluid nicht am Hubkörper (18a) in Längsachsrichtung vorbeifließt bzw. vorbeifließen kann, wie es z.B. bei Schwebekörpern der Schwebekörper-Durchflußanzeiger oder der Schwebekörper-Durchflussmessgeräte der Fall ist, sondern im Bereich des Hubkörpers (18a) umgelenkt ist bzw. umlenkbar ist, so dass die Abströmrichtung des Fluides nach dem Passieren des Hubkörpers (18a) ungleich der Auslenkrichtung des Schiebeelementes (12) bzw. Hubkörpers (18a) ist,
b) das Fluidgehäuse (3a) Form hat a) eines dreistutzigen (3a4), insbesondere y- oder T-förmigen Fluidgussgehäuses (3a, 3ay) mit zueinander koaxialen Ein- und Ausgangsstutzen (3a4e, 3a4a), oder b) eines quaderförmigen Mehrfachfluidgehäuses (3m) mit mehreren Funktionsblöcken, insbesondere eines einstückigen quaderförmigen Mehrfachfluidgehäuses (401) zur Aufnahme mehrerer, parallel angeordneter Strömungsmesseinsätze (1) oder c) eines quaderförmigen Einfachfluidgehäuses (401) mit einem Funktionsblock (401f), in dem ein oder mehrere Strömungsmesseinsätze (1) befestigt sind.

Das Mechatronisches Strömungsmessgerät (4) weist vorzugsweise ein Schrägsitzventil (19) und einem Schrägsitzventilgehäuse (3as) bzw. y-förmigen Fluidgehäuse (3ay) auf. Es besteht im Wesentlichen bestehend aus dem Hubkörper (18a), dem fluidfernen Stutzen (3a4f) und dem Ventilsitz (3a2, 407) dass bei strömendem Fluid in Strömungsrichtung (2) geöffnet und aus einer Grundstellung heraus bewegt ist und bei nichtströmendem Fluid oder Strömung in Gegenrichtung geschlossen und in Grundstellung ist.

Der Strömungsmesseinsatz (1) und/oder das Strömungsmessgerät (4) sind besonders geeignet zur Verwendung als Durchflussmesser bzw. Strömungsüberwachungs- oder Strömungsmessvorrichtung (600) mit einem Gehäusekörper (401) bzw. Fluidgehäuse (3a) zur Messung und/oder Überwachung der Strömungsgeschwindigkeit eines fluidischen Heiz- und/oder Kühlmittels in einer Temperiervorrichtung (500) für das Formwerkzeug (520). Sie ist auch geeignet zur Temperierung der Formmasse einer Ur- oder Umformeinrichtung (520), insbesondere einer Spritzgießmaschine (520a) oder Spritzgießanlage oder in einer Thermoumformeinrichtung, insbesondere als Hochtemperatur-Strömungsmessgerät für die Formmassestromkühlung und/oder -heizung, z.B. für POM ((Polyoxymethylen, Polyacetal), für Fluidtemperaturen von größer als 150 Grad und/oder die Werkzeugkühlung und/oder -heizung für Fluidtemperaturen von größer als 80 bis 120 Grad.

Die zweite Hauptvariante der Beschreibung betrifft einen mechatronischen Strömungsmesseinsatz (1), der für den Durchfluss und die Strömungsgeschwindigkeits- und/oder Strömungsvolumenmessung eines heißen Mediums geeignet ist. Er ist in bzw. an einem wärmebeständigen dreistutzigen Fluidgehäuse (3), insbesondere y-förmigen (3ay) oder Schrägsitzventil-Gehäuse (3as), befestigbar, insbesondere verschraubbar, ist. Er weist auf eine Messwertaufnehmereinheit 21 innerhalb einer Messeinheit 1c mit einem Gehäuse 3c, die die Strömungsgeschwindigkeit dieses Mediums ohne Mediumskontakt messen kann und die der Wärmebelastung durch das Medium nicht voll, aber zumindest teilweise ausgesetzt ist. Weiterhin ist ein Hubkörpermodul 18 vorhanden, das im Betriebszustand Mediumkontakt hat und dessen Hubkörper 18a entsprechend der Strömungsgeschwindigkeit dieses Mediums ausgelenkt wird. Dieses Hubkörpermodul 18 trägt ein auf den Messwert dieser Messwertaufnehmereinheit 21 wirkendes Beeinflussungselement 20. Alternativ stellt es selber einen Teil dieser Hubkörpereinheit 18 dieses Beeinflussungselement 20 dar. Die Auslenkung des Hubkörpers 18a ist ein Maß für die Strömungsgeschwindigkeit. Der Strömungsmesseinsatz (1) hat eine Ausgabeeinheit 300, die das Signal des Sensorelementes (21e) oder der Messwertaufnehmereinheit (21) (Sensorelement (21e) mit einer Vorverarbeitungselektronik), elektronisch verarbeitet und für ein nachfolgendes Gerät oder Einrichtung, wie z.B. eine SPS, am Signalausgang 310 des Strömungsmesseinsatzes 1, vorzugsweise am Kabel- oder Steckeranschluss 310a, z.B. einem Rundstecker, bereitstellt oder bereitstellen kann. Zwischen dieser Messwertaufnehmereinheit (21) und dem Medium befindet sich eine Isoliereinheit (5) mit einer Führungshülse (10) mit einem geringen Wärmeleitkoeffizienten. Diese Messwertaufnehmereinheit (21) ist thermisch mit einem Wärmeleitkörper (7, 7a) gekoppelt ist. Sein äußerer Teil (7b, 3b7, 3b1), zumindest ein Teil davon, ist Bestandteil der Außenseite dieses Gehäuses (3b) dieses Strömungsmesseinsatzes (1). Der Wärmeleitkörper (7, 7a) hat einen mindestens um den Faktor 50 höheren Wärmeleitkoeffizienten als die Isoliereinheit (5), so dass im Betriebsfall Fluidwärme, die zu dieser Messwertaufnehmereinheit (21) gelangt, in den Wärmeleitkörper (7, 7a) einschließlich eines oder mehrerer seiner äußeren Teile (7b, 3b7, 3b1) abgeleitet und zumindest von einem dieser äußeren Teile (7b, 3b7, 3b1) die Mediumswärme an die Umgebungsluft des Gehäuses (3b) bzw. der Messeinheit (1c) abgegeben ist bzw. wird.

Eine weitere Variante der Beschreibung besteht darin, dass die Messwertaufnehmereinheit (21) ein induktives oder Magnet-Sensorelement (21e) oder eine Messwertaufnehmereinheit (21) mit einem induktiven oder Magnet-Sensorelement (21e) enthält. Das Sensorelement (21e) bzw. die Messwertaufnehmereinheit (21) befinden sich im Wärmeleitkörper (7, 7a), der mediumsseitig geschlossen ist. Das Beeinflussungselement (20) für das Sensorelement (21e) befindet sich im oder auf dem Hubkörper (18a) oder dem Hubkörpermodul (18).

Eine Variante der Beschreibung besteht darin, dass die Isoliereinheit (5) eine Führungshülse (10) aus Kunststoff mit einem geringen Wärmeleitkoeffizienten und mit Gewinde (10a) ist, die in den mit einem Außengewinde (3b6a) versehenen Gehäusemantel (3b6) des Strömungsmesseinsatzes (1) eingeschraubt ist und in diese Führungshülse (10) der Wärmeleitkörper (7) in Form einer Wärmeleithülse (7a) eingeschraubt ist.

Eine weitere Variante der Beschreibung besteht darin, dass der Wärmeleitkörper (7) eine einstückige Wärmeleithülse (7a) aus einem hochleitfähigen Material wie hochreinem Kupfer ist, in deren Innenraum die Anschlussleitungen für diese Messwertaufnehmereinheit (21) geführt sind und dass diese Messwertaufnehmereinheit (21) im vorderen Ende der Wärmeleithülse (7a) angeordnet ist.

Eine weitere Variante der Beschreibung besteht darin, dass der Strömungseinsatz (1) auf der Rückfront (3b5) mit einem gut wärmeleitfähigem Deckel (3b1),insbesondere metallischem Deckel (3b1) versehen ist, der zugleich Kontermutter und äußerer Teil (7b) des Wärmeleitkörpers (7) ist. Somit ist durch Kraftschluss die Wärmeleithülse (7a) bezüglich des Gehäuses (3b) fixiert ist und durch die berührenden Gewinde (3b6i, 7a2a) und die Konterung auch ein guten Wärmeübergang vom inneren (7c) zum äußeren (7b) Teil des Wärmeleitkörpers (7) sichergestellt.

Eine weitere Variante der Beschreibung besteht darin, dass der Strömungsmesseinsatz (1) im wesentlichen aus drei ineinander geschraubten und einander in Längsrichtung überlappenden koaxialen Hülsen (10, 7a, 3b6) in Form des Gehäusemantels (3b6), der Führungshülse (10) und der Wärmeleithülse (7a) mit zumindest je einem Außengewinde (10a, 3b6a, 7a2) besteht. Die äußere Hülse ist der Gehäusemantel (3b6). Er ist mittels des Außengewindes (3b6a) in das vorzugsweise dreistutzige Mediumgehäuse (3a) oder Schrägsitzventilgehäuse oder den Grundkörper (401) einschraubbar und befestigbar. Die mittlere, einseitig, d.h. mediumsseitig geschlossene Hülse, d.h. die Führungshülse (10), ist der Hauptbestandteil der Isoliereinheit (5) ist und aus thermisch schlecht leitendem Material, insbesondere Kunststoff, vorzugsweise PEEK oder PPS. Eine weitere Variante der Erfindung betrifft die äußere Hülse, d.h. der Gehäusemantel (3b6) ist zumindest teilweise aus einem schlecht leitenden Material, insbesondere POM, PPS oder PEEK. Dadurch kommt Mediumswärme nicht bzw. in sehr geringem Maße über den messgerätseitigen Gewindeanschluss (3a3) bzw. den messgerätseitigen Stutzen (3a4) in den Gehäusemantel (3b6) und hierüber zur Messfühlereinheit (1c) und/oder zum Wärmeleitkörper (7) bzw. zur Wärmeleithülse (7a). Die Ausgabeeinheit mit integrierter Elektronik (320) zur Ausgabe eines Standardsignales über Kabel oder Stecker (310), z.B. 4-20 mA, 0-10V, analog, Schaltsignal usw., ist in einem separaten Gehäuse (3c) außerhalb der Messeinheit (1c) angeordnet ist und über ein flexibles elektrisches Kabel mit der Messwertaufnehmereinheit (21) bzw. Messeinheit (1c) verbunden. Dadurch ist sie weniger wärmebelastet und kann genaue Messwerte bzw. Schaltsignale und ggf. auch eine bessere Hysterese liefern.

Eine weitere Variante der Beschreibung betrifft ein mechatronisches Strömungsmessgerät (4) mit einem in einem Fluidgehäuse (3a) oder Gehäusekörper (401) befestigten, insbesondere eingeschraubten Strömungsmesseinsatz (1) mit einem Hubkörper (18a), der strömungsgeschwindigkeitsabhängig durch ein Fluid auslenkbar ist bzw. ausgelenkt ist. Das mechatronisches Strömungsmessgerät (4) hat folgende Merkmale:
a) der Strömungsmesseinsatz (1) und/oder das Strömungsmessgerät (4) so gestaltet ist, dass das zu messende Fluid nicht am Hubkörper (18a) in Längsachsrichtung vorbeifließt bzw. vorbeifließen kann, wie es z.B. bei Schwebekörpern der Schwebekörper-Durchflußanzeiger oder der Schwebekörper-Durchflussmessgeräte der Fall ist, sondern im Bereich des Hubkörpers (18a) umgelenkt ist bzw. umlenkbar ist. Dadurch ist die Abströmrichtung des Fluides nach dem Passieren des Hubkörpers (18a) ungleich der Auslenkrichtung des Schiebeelementes (12) bzw. Hubkörpers (18a) und ermöglicht genauere Messungen und besondere induktive und magnetische Messprinzipien.
b) das Fluidgehäuse (3a) Form hat
ba) eines dreistutzigen (3a4), insbesondere y- oder T-förmigen Fluidgussgehäuses (3a, 3ay) mit zueinander koaxialen Ein- und Ausgangsstutzen (3a4e, 3a4a), oder
bb) ein quaderförmiges Mehrfachfluidgehäuses (3m) mit mehreren Funktionsblöcken. zur Aufnahme mehrerer, parallel angeordneter Strömungsmesseinsätze (1) oder
bc) eines quaderförmigen Einfachfluidgehäuses (401) mit einem Funktionsblock (401f), in dem ein oder mehrere Strömungsmesseinsätze (1) befestigt sind. Günstig ist ein einstückiges quaderförmiges Mehrfachfluidgehäuse (401) mit mindestens zwei Funktionsblöcken. Dadurch können die herstell- und Montageaufwände verringert werden. Für hochgenaue Messungen ist aufgrund der Strömungsverhältnisse ein y-förmigen Fluidgehäuse (3ay) günstig. Der Hubkörper (18a) ist im fluidfernen Stutzen (3a4f) angeordnet und durch den in das Fluidgehäuse integrierten Ventilsitz (3a2, 407) begrenzt. Der Hubkörperventil ist bei strömendem Fluid in Strömungsrichtung (2) geöffnet und aus einer Grundstellung heraus bewegbar ist und bei nichtströmendem Fluid oder Strömung in Gegenrichtung geschlossen.

Der Strömungsmesseinsatz (1) und/oder das Strömungsmessgerät (4) sind besonders geeignet zur Verwendung als Durchflussmesser bzw. Strömungsüberwachungs- oder Strömungsmessvorrichtung (600) mit einem Gehäusekörper (401) bzw. Fluidgehäuse (3a) zur Messung und/oder Überwachung der Strömungsgeschwindigkeit eines fluidischen Heiz- und/oder Kühlmittels in einer Temperiervorrichtung (500) für das Formwerkzeug (520). Sie ist auch geeignet zur Temperierung der Formmasse einer Ur- oder Umformeinrichtung (520), insbesondere einer Spritzgießmaschine (520a) oder Spritzgießanlage oder in einer Thermoumformeinrichtung, insbesondere als Hochtemperatur-Strömungsmessgerät für die Formmassestromkühlung und/oder -heizung, z.B. für POM ((Polyoxymethylen, Polyacetal), für Fluidtemperaturen von größer als 150 Grad und/oder die Werkzeugkühlung und/oder -heizung für Fluidtemperaturen von größer als 80 bis 120 Grad.

Die wesentliche Idee der zweiten Hauptvariante der Erfindung besteht also darin, das die Messwertaufnehmereinheit 21, mit der die Position des Hubkörpers 18a mittels eines auf diesem angebrachten oder mit diesem starr verbundenen Beeinflussungselementes 20 erfasst wird, zumindest mediumsseitig mit einen thermischen Isolator oder Halbisolator als Führungshülse (10) zu umhüllen, der vor dem heißen Medium schützt. Zwangsläufig wird durch dessen begrenzte Isolierfähigkeit und der durch das verwendetet Messaufnehmerprinzip des elektronischen Annäherungssensor bzw. -schalters bedingte Aufbau und die technisch und sensorisch bedingte relativ dünne Wandstärke der Führungshülse bei einer Mediumstemperatur von mehr als 120 Grad Celsius trotzdem viel Wärme in dessen Innenraum gelangen, so dass der Messaufnehmer bzw. die Messaufnehmereinheit trotzdem stark erwärmt wird. Zweitens ist diese Messwertaufnehmereinheit 21 thermisch mit einem Wärmeleitkörper (7) gekoppelt, der so gestaltet ist, dass dessen äußerer Teil, zumindest ein Teil davon, Bestandteil der Außenseite des Gehäuses des Strömungsmesseinsatzes 1 ist. Anstatt die kritische Einheit, die Messaufnehmereinheit 21 , weiter vom heißen Medium zu entfernen, was zu einem Verlust an Empfindlichkeit und Messgenauigkeit führen würde, wurde somit ein anderer, besserer Weg erkannt, der diese Nachteile vermeidet. Da der Wärmeleitkörper 7 einen höheren, insbesondere einen deutlich höheren Wärmeleitkoeffizienten als die Isoliereinheit 5 aufweist (der Unterschied sollte möglichst groß gewählt werden), kann die Mediumswärme bzw. Restwärme, die zu dieser Messwertaufnehmereinheit über den thermischen Isolator bzw. die Isoliereinheit gelangt, in den Wärmeleitkörper 7einschließlich eines oder mehrerer seiner äußeren Teile 7b, 7c, 7a1, 7a2 abgeleitet und zumindest von einem dieser äußeren Teile die Mediumswärme an die Umgebung des Gehäuses 3b, 3b6 abgegeben werden. Der Wärmeleitkörper 7 ist bevorzugt hohlzylinderförmig, insbesondere kreishohlzylinderförmig, mit einem massiven Mantel ausgebildet und ist am mediumseitigen Ende vollständig geschlossen. Dies ermöglicht, die Messwertaufnehmereinheit 21, die im einfachsten Fall nur aus dem Messwertaufnehmer bzw. dem Sensorelement 21 bestehen kann, am oder im unteren Ende des Wärmeleitkörpers 7 bzw. einer Wärmeleithülse 7a anzubringen und die elektrischen Zuleitungen (Kabel) im Wärmeleitkörper zu führen. Dies ist besondern praktisch, da der möglichst dickwandige Wärmeleitkörper vorteilhafterweise über die Rückfront 3b5, des Gehäuses 3b hinaus geführt ist und damit kommt das Kabel 200 weit entfernt vom heißen Medium oder heißen Teilen an die Oberfläche. Somit ist ein effektiver mechanischer und thermischer Schutz, vor allem Knickschutz, gegeben. Da ein Teil des Wärmeleitkörper 7 bzw. der Wärmeleithülse 7a nun Teil des erweiterten Gehäuses des Strömungsmesseinsatzes 1 bzw. -gerätes ist, ist die Wärmeabführung durch die vergrößerte Wärmekapazität und Wärmeleitung besser, auch durch die langen, aber trotzdem relativ dünnen flexiblen Litze des Anschlusskabels 200, aber die Wärmeabführung durch Luftkonvektion und Wärmestrahlung ist vor allem durch die stark vergrößerte Oberfläche gut wärmeleitender Bereiche 3b7 (z.B. Deckel 3b1, Gehäusemantel 3b6,) es Gerätes 4,1 mit direktem Luftkontakt (Gehäuseoberflächen) verbessert, vor allem, weil die Wärmeabführung an die Umgebung im mediumsfernen Bereich des Gerätes 4 erfolgt. Damit eignet sich die Erfindung für Hochtemperaturanwendungen, insbesondere von ca. 120 bis 200°C und darüber hinaus, wie sie beispielsweise bei Öl- oder Hochdruckwasser-Medien bei Temperiereinrichtungen von Ur- und Umformmaschinen 520 (Fig. 6) auftreten können. Derartige Temperaturen in Richtung 200°C und darüber treten unter anderem beim Temperieren der Werkzeuge 525 bzw. Werkzeughälften 525 von Spitzgießmaschinen 525 auf. Vorzugsweise besteht der Wärmeleitkörper 7, vor allem die Wärmeleithülse 7a, aus Kupfer, vor allem aus einem hochreinen Kupfer mit einem Wärmeleitkoeffizient größer als 300 W/Km, und die thermische Isolatorhülse aus einem temperaturbeständigem Kunststoff, bevorzugt PPS, POM (Polyoxymethylen, Polyacetal) oder PEEK.

Das Gehäuse 3 und die Führungsachse 10 sind aus einem schlecht wärmeleitenden Material PPS (Polypropylensulfid) mit einem Wärmeleitkoeffizient von ca. 0.3 W/K m. Das im Y-Fitting 100 strömende Medium umgibt die Führungsachse 10. Aufgrund der hohen Temperatur des Mediums bis zu 200°C wird trotz des schlechten Wärmeleitkoeffizienten von PPS Restwärme von der Führungsachse 10 in Richtung Wärmeleithülse 7 transportiert. Die Führungsachse 10 dient als thermischer Isolator.

Aufgrund des sehr hohen Wärmeleitfähigkeitskoeffizienten der Wärmeleithülse 7 wird die Wärme aber relativ gut zum Ende der Wärmeleithülse 7 abtransportiert, wo sie in die Umgebung nach außen abgeführt wird. Dadurch kann gewährleitstet werden, dass das Sensorelement 22 nicht mehr als 90°C warm wird. Wenn der mechatronische Strömungssensor in einer heißen Umgebung eingebaut ist, ist eine Wasserkühlung an der Wärmeleithülse 7 vorgesehen. Sie ragt deshalb erheblich weniger aus dem Gehäuse 7 heraus. Neben einem GMR- Sensor zur Erfassung der Position des Schiebeelements 12 sind alternativ auch andere Sensoren insbesondere auch induktive Sensoren denkbar. Alternativ kann als Material PPE auch das Material PEEK für das Gehäuse 3 und die Führungsachse 10 verwendet werden. Die Erfindung eignet sich besonders gut für Hochtemperaturspritzgussvorrichtungen. Das Medium (Wasser, Öl oder Glykol) besitzt eine Temperatur von ca. 200° Celsius und hat dabei einen Druck von ca. 20 bar. Mit dem mechatronischen Strömungssensor 1 kann die Menge des strömenden Mediums erfasst und der Prozess entsprechend geregelt werden. Damit kann mit einem zusätzlichen Temperatursensor der Wärmeeintrag oder der Wärmeabtrag in das bzw. aus dem Spritzgusswerkzeug heraus genau bestimmt werden und damit der Spritzgussprozess optimiert werden. Die Erfindung ist nicht nur für mechatronische Strömungssensoren geeignet sondern auch für andere Sensoren wie z. B. Drucksensoren, wo auch empfindliche Elektronikbauteile relativ nahe zu einem heißen Medium angeordnet sind.

Nachfolgend ist die Funktion des mechatronischen Strömungsmesseinsatzes und des Strömungsmessgerätes noch weiter anhand der Figuren 1-3 ausgeführt. Durch das in dem Schrägsitzventilgehäuse Y-Fitting bzw. in der Anschlusseinheit 100 strömende Medium bzw. Fluid (Flüssigkeit oder Gas) wird das Schiebeelement 12 bzw. der Hubkörpereinsatz 18 je nach Strömungsgeschwindigkeit des Mediums mehr oder weniger in Richtung des mediumabgewandten Endes der Messeinheit 1c bzw. des Gehäusemantels 3b6 des Gehäuses 3 gedrückt. Mit Hilfe des mittels der Litze 22 kontaktierten Sensorelementes bzw. des Messfühlers bzw. der Messfühlereinheit 21 wird die Lage des Beeinflussungselementes 20, d.h. des Magneten, und damit die Position des Schiebeelements 12 bzw. Hubkörpereinheit 18 auf der Führungsachse bzw. der Führungshülse 10 erfasst und das entsprechende Messsignal mittels einer Auswerteeinheit weiterverarbeitet, ggf. linearisiert und/oder ein Schaltpunkt oder mehrere Schaltpunkte erzeugt und ausgegeben, vorzugsweise als Standardsignal im Form eines Schaltsignales und/oder digitalen Signales und/oder eines üblichen Analogsignales, z.B. 0-10 V oder 4-20 mA.

Das Mediumgehäuse 3a, üblicherweise aus Messing bestehend, weist insgesamt drei Stutzen 3a4 mit drei Anschlüssen 3a1, vorzugsweise Gewindeanschlüsse 3a1g auf, wobei zwei mediumseitige Gewindeanschlüsse 3a1g und ein strömungsmesseinsatzseitiger (beim Ventilsitz 3a2) vorhanden sind. Die Strömungsrichtung 2 des zu messenden flüssigen bzw. gasförmigen Mediums ist durch einen Pfeil gekennzeichnet. Aus dem mit einem Deckel 3b1 verschlossenen Gehäuse 3b des mediumseitigen Teil der Messeinheit 1c ragt ein Wärmeleitkörper 7 in Form einer Kupfer- oder Messing-Wärmeleithülse 7a, in der das Anschlusskabel 200 geführt wird. Das Ende der Wärmeleithülse 7a weist einen Knickschutz 210 für das flexible Anschlusskabel 200 auf. Es ist vorteilhaft, Knickschutz 210 und den äußeren Teil 7b des Wärmeleitkörpers 7 einstückig auszuführen, wobei sich Kupfer besonders eignet und die Wandstärke des Knickschutzes entsprechend dünn ausgeführt ist, so das durch umschließendes Verpressen mittels eines Mehrsegment-Werkzeuges ein Knickschutz in Verbindung mit einer ausgezeichneten flüssigkeitsdichten Verbindung mit dem mehr oder weniger elastischen Kabel 200 erreicht werden kann ohne das separate Maßnahmen für die dauerhafte Dichtigkeit in diesem Bereich betroffen werden müssen oder ein weitergehender Materialeinsatz in Form von speziellen Dichtungen notwendig ist.

Fig. 4 und 5 zeigt einen Gehäusekörper für eine achtkanalige bzw. zweikanalige Strömungsüberwachungsvorrichtung, der einstückig und vorteilhaft als Messinggussblock ausgeführt ist. Ein mechatronischer Strömungsmesseinsatz ist in der Öffnung 402ss befestigbar wie es in den Fig. 1-2 gezeigt ist. Optional auch ein Temperaturmesselement oder ein Temperaturmessgerät, für das die kleinere Öffnung 402ss bzw. das passive Ausgangskanalteilstück 405atp vorgesehen ist. Das Fluid gelangt über den Einlaß 402e in einen aktiven Kanal 405ek. Im Hubkörperbereich des mechatronischen Strömungsmessgerätes wird die Strömung umgelenkt und befindet sich dann im aktiven Ausgangskanal 405ak, der dann ein passives Kanalteilstück 405atp bildet, dass vorzugsweise mittels eines Blindstopfen verschlossen ist, da ein gemeinsamer Ausgangskanal bzw. ein gemeinsames Ausgangskanalstück 405atg vorhanden ist.

In Figur 1 ist ein mechatronischer Strömungssensor 1 bestehend aus einem Gehäuse 3 im eingebauten Zustand dargestellt. Das Gehäuse 3 ist in ein ¾ Zoll Gewindeanschluss am Y-Fitting 100 eingeschraubt. Das Y-Fitting 100 weist insgesamt drei Gewindeanschlüsse 102 auf. Die Strömungsrichtung des zu messenden flüssigen bzw. gasförmigen Mediums ist durch einen Pfeil gekennzeichnet.

Aus dem mit einem Deckel 5 verschlossenen Gehäuse 3 ragt eine Wärmeleithülse 7, in der ein Anschlusskabel 200 geführt wird. Am Ende des Anschlusskabels 200 ist eine Elektronikmodul 300 mit integriertem Stecker vorgesehen.

In Figur 2 ist eine Schnittdarstellung des mechatronischen Strömungsmessgerätes 4 mit einer entsprechenden Strömungsmesseinheit 1c gemäß Figur 1 vergrößert dargestellt. In dem unten offenen Gehäusemantel 3b6 ist eine unten geschlossene Führungshülse 10 aus temperaturbeständigem, aber thermisch schlecht leitendem Material wie PEEK oder PPS eingeschraubt, die den wesentlichen Teil der Isoliereinheit 5 darstellt, um die Messaufnehmereinheit 21 gegen die Hitze des Mediums zu schützen. Ein Dichtungselement 11a in Form eines O-Ringes verhindert, dass Medium bis zur Schraubverbindung gelangen bzw. aus dem Gerät austreten kann. Zwischen mittlerer (Führungshülse 10) und äußerer 3b6 Hülse ist ein schmaler ringförmiger Hohlraum 15 für die Feder 14 und das Führungsrohr 18b. Dieses Führungsrohr 18b kann selber, vor allem im Falle des Einsatzes eines induktiven Näherungssensors bzw. einer Spule bzw. LC- oder LR-Oszillators als Messaufnehmereinheit 21, das Beeinflussungselement (entsprechend dem Magneten 20) für die Messaufnehmereinheit 21 sein oder kann ein solches Beeinflussungselement bzw. Schwingkreisbedämpfungselement beinhalten. Das Beeinflussungselement ist dann als Bedämpfungsring ausgeführt, der vorteilhafterweise aus nichtmagnetischem Edelstahl besteht. In vorliegenden Fall ist ein GMR-Messaufnehmereinheit 21 als integriertes Bauelement mit einem Magnet als Beeinflussungselement 20 dargestellt, der mit dem Hubkörper 18a des Hubkörpermodul 18 (mit Feder 14 und Führungsrohr 18b) fest verbunden bzw. in diesem verschlossen ist, so dass kein Mediumkontakt wegen möglicher Korrosion oder Verunreinigung des Mediums vorhanden ist. Es ist bei Magnet-Messaufnehmern im Gegensatz zu induktiven messenden Geräten üblich, dass das Messelement bzw. der Messaufnehmer Vorverarbeitungselektronik aufweist, die zusammen mit dem Messelement eine kompakte bzw. integrierte Einheit bilden. Messaufnehmereinheit 20 kann im Sinne dieser Beschreibung bedeuten, dass Vorverarbeitungselektronik in diese integriert ist oder aber die Messaufnehmereinheit nur den Messaufnehmer, z.B. eine Sensorspule, aufweist. Magnetfeldempfindliche Messaufnehmer in Sinne der beiden beschriebenen Verfahren bzw. Sensortypen sind für Hochtemperaturanwendungen besonders geeignet, da sie vor allem gegenüber optischen und kapazitiven Verfahren robust und schmutzunempfindlich sind.

Wie bereits erwähnt, ist das Messgerät 4 mit seinem Messeinsatz 1 besonders vorteilhaft durch seinen modularen Aufbau. Einerseits kann das Hubkörpermodul 18 leicht durch ein anderes ersetzt werden oder einzelne Bestandteile wie die Feder 14, das Führungsrohr 18b oder der Hubkörper 18a ausgewechselt werden. Anderseits ergibt sich eine größere Universalität und preiswerte Herstellbarkeit des Strömungsmesseinsatz 1 bzw. des Strömungsmessgerätes 4 durch den modularen Aufbau mittels dreier koaxialer, miteinander verschraubter und sich überlappender Haupthülsen, die sich oberhalb des Hubkörpers 18a befinden. Dies sind
a) der mediumsseitig offene Gehäusemantel 3b6 als äußere Hülse, die mittels eines unteren Außengewindes 3b6a und des Dichtungselementes 26 mediumsdicht in das Mediumgehäuse 3a eingeschraubt ist (3b6i, 10a);
b) die mediumsseitig geschlossene Führungshülse 10 als mittlere Hülse, die in den Gehäusemantel 3b6 eingeschraubt ist (3b2, 10a), mittels des Dichtungselementes 11a abgedichtet ist und mit diesem Gehäusemantel 3b6 einen hohlzylinderförmigen Hohlraum 15 zur Führung des Führungsrohres 18b der Hubkörpereinheit 18 und/oder zur Führung der Feder 14 bildet. Für hohe Mediumstemperaturen ist die Führungshülse 10 aus hitzebeständigem thermisch isolierenden Material, insbesondere einem Kunststoff wie PEEK oder PPS, gebildet;
c) die Messaufnehmerhülse in Form einer Wärmeleithülse 7b, die an oder in deren mediumsseitiger Spitze die Messaufnehmereinheit 21 trägt und die in die mittlere Hülse, d.h. die Führungshülse 10 eingeschraubt ist (7a2a, 10b). Die Abdichtung erfolgt optional mittels des Dichtungselementes 11b. Für hohe Mediumstemperaturen von mindestens 120 bis 200 Grad Celsius ist diese Messaufnehmerhülse 7d als wärmebeständige und hochwärmeleitfähige Wärmeleithülse 7a ausgebildet (vorzugsweise mit einem einstückigen Mantel aus hochreinem Kupfer mit einem Wärmeleitkoeffizient größer als 300 W/Km und über die Rückfront 3b5 hinausragend), die durch den guten thermischen Kontakt mit der Messaufnehmereinheit 21 deren Wärme in den rückwärtigen Teil der Wärmeleithülse 7a transportiert, ggf. auch in einen sekundären Wärmeleitkörper 7, z.B. in eine vierte Hülse, die als Deckel 3b1 und Kontermutter ausgebildet ist. Durch den modularen Aufbau mittels dreier Haupthülsen, kann das Messgerät 1c oder einzelne Teile desselben wie die Wärmeleithülse 7a mit der Messaufnehmereinheit 21 sehr schnell ausgewechselt werden, z.B. im Fehlerfall. Es reicht dann, diese kleinere Einheit, d.h. eine der drei Haupthülsen auszuwechseln.

Die Führungshülse (10) als Hauptbestandteil der Isoliereinheit 5 aus thermisch isolierendem Material zu machen, hilft gegen die Temperaturbelastung der Messaufnehmereinheit 21. Wenn jedoch viel heißes Medium strömt oder die Temperatur sehr hoch ist, hilft diese Maßnahme wenig, da erkannt wurde, dass die Wärmeableitfähigkeit konventioneller mechatronischer Strömungsmessgeräte gering ist. Aus diesem Grunde ist der Einsatz einer Isoliereinheit 5 bzw. einer thermisch isolierenden Führungshülse 10 mit einem niedrigen Wärmeleitkoeffizienten mit dem Einsatz eines Wärmeleitkörpers 7 mit einem hohen Wärmeleitkoeffizienten innerhalb der Führungshülse 10 kombiniert. In die Führungshülse 10 ist von oben ein Wärmeleitkörper 7 in Form einer unten geschlossenen und oben offenen Wärmeleithülse 7a mit großer Wandstärke und somit sehr geringem Wärmewiderstand eingeschraubt. Zumindest deren Mantel ist sinnvollerweise einstückig, z.B. als Dreh- oder Tiefziehteil aus Kupfer, ausgebildet ist, um Wärmeleitungssperren bzw. Zonen mit verringerter Wärmeleitfähigkeit zu vermeiden. Das untere Ende der Wärmeleithülse 7a ist mit einem hartgelötetem Kupferdeckel verschlosssen. Auf dem Deckel bzw. in der Wärmeleithülse 7a ist die Messaufnehmereinheit 21 mit einer Leiterplatte 24 angeordnet, die eine gute thermische Ankopplung an den Deckel bzw. an die Wärmeleithülse 7a hat, z.B. durch ein Verguss- oder Klebmitttel, das sinnvollerweise elektrisch isoliert, aber thermisch gut leitend ist (Wärmeleitpaste). An die Leiterplatte 24 sind die Litze 22 des flexiblen Kabels 200 angelötet, das durch die Wärmeleithülse 7a geführt ist (zumindest deren Adern). Der Wärmeleitkörper 7 ist zwar der Hauptbestandteil der Isoliereinheit 5, aber auch das Hubkörpermodul 18 mit dem Führungsrohr 18b (das zur Druckstoßdämpfung eine Dämpfungsöffnung 6 aufweist und bei Verwendung eines Magnet-Näherungssensors aus Kupfer, Messing oder einem Hochtemperaturwerkstück wie POM, PEEK oder PPS besteht), sowie der nur schmale Kanal 15, in der die Feder 14 geführt wird, tragen dazu bei, das der Temperaturgradient von der Hauptströmung des Mediums zur Messaufnehmereinheit 21 möglichst groß ist. Der Wärmeleitkörper 7 ist so gestaltet, das zumindest ein Teil (äußerer Teil 7b) von ihm zur äußeren Oberfläche des Gehäuses 3b des Messeinheit 1c gehört, insbesondere zur mediumsfernen Oberfläche. Dadurch kann wesentlich mehr Wärme durch die Messeinheit 1c bzw. den Strömungsmesseinsatz 1 an die Umgebung abgegeben werden (teilweise auch über die elektrischen Zuleitungen des flexiblen Kabels 200). Dies geschieht vor allem durch Wärmekonvektion und -strahlung. Dies ist realisiert durch die massive, wärmewiderstandsarme Wärmeleithülse 7a, die mit ihrem äußeren Teil 7b bis über die Rückfront 3b5 hinausreicht. Die Rückfront 3b5 ist hier in der besonders bevorzugten Ausgestaltung durch einen Deckel 3b1 in Form einer Metallmutter gebildet, die zugleich Kontermutter ist. Durch dessen Innengewinde 3b1i und den Kraftschluss bei Konterung ergibt sich ein niedriger Wärmewiderstand zur primären Wärmeleithülse 7a, so dass der Deckel 3b1 ein äußerer wärmeleitender, - konvektierender und -strahlender Gehäuseteil 3b7 und sekundärer Teil des Wärmeleitkörper 7 ist, zugleich auch eine hohlzylinderförmige Gehäuse-Mutter mit Innengewinde 3b1 i.

Der Gehäusemantel 3b6 und die Führungshülse 10 sind aus einem schlecht wärmeleitenden Material wie PPS (Polypropylensulfid) mit einem Wärmeleitkoeffizienten von ca. 0.3 W/K m. Das im Y-Fitting bzw. der Anschlusseinheit 100 strömende Medium umgibt einen Teil der Führungshülse 10, die eine beliebige Querschnittsform haben kann. Sie hat aber bei kreishohlzylinderförmiger Ausbildung einige technische und ökonomische Vorteile. Aufgrund der hohen Temperatur des Mediums bis zu 200°C und darüber wird trotz des schlechten Wärmeleitkoeffizienten von PPS Restwärme von der Führungshülse 10 in Richtung Wärmeleithülse 7a transportiert. Die Führungshülse 10 dient als thermischer Isolator, der einen endlichen Wärmewiderstand aufweist. Aufgrund des sehr hohen Wärmeleitfähigkeitskoeffizienten des Wärmeleitkörpers 7, der bevorzugt als kreishohlzylinderförmige Wärmeleithülse 7a ausgeführt ist, wird die Wärme aber gut zum mediumsfernen Ende der Wärmeleithülse 7 abtransportiert, wo sie in die Umgebung nach außen abgeführt wird. Dadurch kann gewährleistet werden, dass die Messfühlereinheit 21 nicht mehr als 90°C warm wird.

Neben einer Messfühlereinheit 21 bzw. einem Messfühler für ein Beeinflussungselement 20 in Form eines Dauer-Magneten, für den ein GMR-Sensor bzw. GMR-Messfühler besonders geeignet ist, ist zur Erfassung der Position des Schiebeelements 12 bzw. des bewegten Hubkörpers 18a der Hubkörpereinheit 18 alternativ auch andere Sensortypen denkbar. Insbesondere sind induktive Näherungs-Sensoren oder induktive Näherungsschalter sehr geeignet, vor allem, wenn das Prinzip der Außenringbedämpfung benutzt wird, dass durch sehr kleine Hysteresen sehr hohe Genauigkeiten, besonders Schaltgenauigkeiten, ermöglicht.

Alternativ zu POM kann als Material für das Gehäuse 3c und die Führungshülse 10 auch PPE oder PEEK verwendet werden.

Fig. 3 zeigt einen Strömungsmesseinsatz 1, der im Gegensatz zu den Figuren 1 bis 2 einen größeren sekundären Wärmeleitkörper 7 in Form eines metallischen Deckels 3b1 mit Innengewinde 3b1i aufweist. Dadurch ist eine bessere Kühlung der Messaufnehmereinheit 21 gewährleistet. Der langgestreckte Gehäusemantel 3b6 ist ebenfalls aus thermisch isolierendem Material, so dass keine ungewollten Wärmebrücken mit niedrigem Wärmeleitkoeffizienten parallel zur Wärmebrücke Medium - Messfühereinheit entstehen können. Auch der Hubkörper ist leicht konisch und speziell ausgebildet, so eine hohe Messdynamik von über 1:100 erreicht werden kann. Dies bedeutet, dass ohne Wechseln des Hubkörpers bzw. der Hubkörperform ein Strömungsgeschwingkeitsbereich von weniger als 100 ml/min bis über 100 l/min überwacht bzw. gemessen werden kann.

Nachfolgend ist die Funktion des mechatronischen Strömungsmesseinsatzes und des Strömungsmessgerätes noch weiter anhand der Figuren 1-3 ausgeführt. Durch das in dem Schrägsitzventilgehäuse Y-Fitting bzw. in der Anschlusseinheit 100 strömende Medium bzw. Fluid (Flüssigkeit oder Gas) wird das Schiebeelement 12 bzw. der Hubkörpereinsatz 18 je nach Strömungsgeschwindigkeit des Mediums mehr oder weniger in Richtung des mediumabgewandten Endes der Messeinheit 1c bzw. des Gehäusemantels 3b6 des Gehäuses 3 gedrückt. Mit Hilfe des mittels der Litze 22 kontaktierten Sensorelementes bzw. des Messfühlers bzw. der Messfühlereinheit 21 wird die Lage des Beeinflussungselementes 20, d.h. des Magneten, und damit die Position des Schiebeelements 12 bzw. Hubkörpereinheit 18 auf der Führungsachse bzw. der Führungshülse 10 erfasst und das entsprechende Messsignal mittels einer Auswerteeinheit weiterverarbeitet, ggf. linearisiert und/oder ein Schaltpunkt oder mehrere Schaltpunkte erzeugt und ausgegeben, vorzugsweise als Standardsignal im Form eines Schaltsignales und/oder digitalen Signales und/oder eines üblichen Analogsignales, z.B. 0-10 V oder 4-20 mA.

Wenn der mechatronische Strömungssensor in einer heißen Umgebung eingebaut ist, ist eine Wasserkühlung mittels des Wärmeleitkörpers 7 bzw. der Wärmeleithülse 7a vorgesehen. Dieser ragt deshalb erheblich weniger oder gar nicht aus dem Gehäuse 3c heraus.

Die Erfindung eignet sich besonders gut für Temperiereinrichtungen für Hochtemperaturspritzgussvorrichtungen bzw. Spritzgießmaschinen. Das Medium (Wasser, Öl oder Glykol) besitzt eine Temperatur von ca. 80 bis 200° Celsius und hat dabei einen Druck von ca. 3 bis 20 bar. Mit dem mechatronischen Strömungsmesseinsatz 1 und einem darauf basierenden Strömungsmessgerät 4 kann die Menge des strömenden Mediums sehr genau und trägheitsarm erfasst und der Prozess entsprechend geregelt werden. Damit kann mit einem zusätzlichen Temperatursensor der Wärmeeintrag oder der Wärmeabtrag in das bzw. aus dem Spritzggießwerkzeug heraus genau bestimmt werden und damit der Spritzgießprozess optimiert werden.

Fig. 4 und 5 zeigt einen Gehäusekörper für eine achtkanalige bzw. zweikanalige Strömungsüberwachungsvorrichtung, der einstückig und vorteilhaft als einstückiger Messinggussblock ausgeführt ist. Ein mechatronischer Strömungsmesseinsatz 1, wie er in den Fig. 1-2 gezeigt ist, ist in der Öffnung 402ss befestigbar. Optional auch ein Temperaturmesselement oder ein Temperaturmessgerät, für das die kleinere Öffnung 402s bzw. das passive Ausgangskanalteilstück 405atp vorgesehen ist. Das Fluid gelangt über den Einlaß 402e in einen aktiven Kanal 405ek. Im Hubkörperbereich des mechatronischen Strömungsmessgerätes wird die Strömung umgelenkt und befindet sich dann im aktiven Ausgangskanal 405ak, der dann ein passives Kanalteilstück 405atp bildet, dass vorzugsweise mittels eines Blindstopfen verschlossen ist, da ein gemeinsamer Ausgangskanal bzw. ein gemeinsames Ausgangskanalstück 405atg vorhanden ist.

Fig. 6 zeigt eine Temperiereinrichtung 500 einer Ur- oder Umformeinrichtung 520 mit einem Gehäusekörper 401 bzw. 577, einem mit einem Temperiergerät 510, das zumindest eine Pumpe zum Pumpen des Fluides in den Zulauf, eine Temperaturänderungseinrichtung zum Heizen des Fluides und/oder zum Kühlen des Fluides sowie eine Temperaturregeleinrichtung für das zu pumpende Fluid aufweist. Das zu temperierende Formwerkzeug 525, insbesondere ein Spritzgießwerkzeug, weist mindestens einen Fluidkanal 525k, d.h. mindestens einem Zulauf 525z und mindestens einem Rücklauf 525z auf. D.h. dass der Fluidkanal 525k an mindestens eine Zulaufleitung 550z und mindestens eine Rücklaufleitung 550r hat. Im dargestellten Beispiel ist ein vierkanaliges Formwerkzeug 525 gezeigt und demzufolge ein vierkanaliger Rücklauf bis zum Strömungsmessgeräteblock 575 mit vier mechatronischen Strömungsmesseinsätzen 570e, die zusammen mit den vier Funktionsblöcken des Gehäusekörpers vier mechatronische Strömungsmessgeräte 570 bilden, d.h. einen Messgeräteblock. An diesen schließt sich ein Regelventilblock 565 mit vier elektrischen Regelventilen 560 an, die entsprechend der Signale der zugeordneten Strömungsmessgeräte 570 gesteuert werden. Da die die Strömung zumindest eines der Strömungsmessgeräte 570 gemäß der Figuren 1 und 2 im Bereich des Hubkörpers so umgelenkt ist, so dass die Anströmrichtung des Fluides ungleich der Abströmrichtung ist, d.h. dass die Auslenkungsrichtung des Hubkörpers gegenüber der An- oder Abströmrichtung um einen bestimmten Winkel Wn bzw. Wb, der größer als Null Grad ist, differiert, und dass das Strömungsmessgerät 570 ein mechatronisches Hubkörperströmungsmessgerät ist, werden beträchtliche Vorteile erreicht. Dies sind z.B.: a) die Trübung oder Verschmutzung des Fuides ist unerheblich b) der Hubkörper wird von der Strömung weg bewegt. Dadurch ist Platz vorhanden, einen genauen Sensor bzw. ein Annäherungsmeßgerät zu platzieren, insbesondere ein elektronisches induktives oder Magnet-Näherungsmessgerät oder einen elektronischen induktiven oder Magnet-Näherungsschalter.

Nachfolgend werden besondere Ausgestaltungen der Erfindung näher erläutert. Eine vorteilhafte Variante der Erfindung besteht darin, dass die Ausgabeeinheit, die ein messsignalrelevantes Ausgangssignal als Standardsignal über einen Stecker- oder Kabelausgang ausgibt, außerhalb des Gehäuses der mediumsnahen Messeinheit angeordnet und mit diesem über ein flexibles Kabel verbunden ist. Die Ausgabeeinheit mit einer integrierten Elektronikeinheit (z.B. mit für Kurzschlussschutz, elektrooptischen Anzeigeelementen, Anzeige- und Programmierungslogik usw.) die das Signal der Messaufnahmereinheit bzw. des Messaufnehmers bearbeitet und in ein standardisiertes Signal umwandelt und an eine nachfolgende Einheit wie eine SPS abgibt, ist bei bekannten mechatronischen Hubkörperströmungsmessgeräten im Näherungsschalter oder ein Analognäherungssensorgerät integriert, die die bei diesen Geräten üblichen Anzeige-Elemente wie LEDs aufweisen. Besonders für hohe Mediumstemperaturen ist es aber vorteilhaft, die Ausgabeeinheit als separate Einheit (Gerät, Modul) zu realisieren, weil dadurch eine Ausgabeeinheit mit integrierter Auswerteeinheit bzw. auswertender Elektronikeinheit, ggf. auch mit einer Programmier-, Bedien- und/oder Anzeigeeinheit, mit einem standardisierbaren, vom mediumsnahen Teil des Strömungsmesseinsatzes unabhängigen Teil geschaffen ist, die universell verwendbar und bei Hochtemperaturanwendungen weit weniger temperatur- und mediumsbelastet ist (thermische, chemische und mechanische Beständigkeit und Dichtigkeit). Um eine geringe Störbarkeit bzw. eine gute Zuverlässigkeit und Medien- und Feuchtigkeitsbeständigkeit zu erreichen, ist es vorteilhaft, beide Einheiten durch einen nichtsteckbare flexible Verbindung (Kabel) elektrisch zu kontaktieren, d.h. keine Steckverbinder zu benutzen, vorzugsweise auch keinen Kabelanschlussraum.

Eine weitere vorzugte Ausgestaltung der Erfindung besteht darin, dass der Strömungsmesseinsatz im wesentlichen aus drei koaxial angeordneten Kreishohlzylindern besteht, die miteinander verschraubt sind, wobei der innere die Wärmeleithülse, der mittlere die Isolatorhülse, die gleichzeitig Führungshülse für die Hubkörpereinheit und/oder die Hubkörper-Feder ist und der äußere der Gehäusemantel ist, der mit dem Mediumsgehäuse, z.B. einem Messing-Y-Stück bzw. Messing-Schrägsitzventilgehäuse mit Ventilsitz als Hubkörperanschlag verschraubbar ist. Das Gerät ist dadurch besonders stabil sowie effektiv und preiswert herstellbar.

Eine weitere vorzugte Ausgestaltung der Erfindung besteht darin, die Messwertaufnehmereinheit, mit der die Position des Hubkörpers mittels eines auf diesem angebrachten oder mit diesem starr verbundenen Beeinflussungselementes erfasst wird, zumindest mediumsseitig mit einen thermischen Isolator oder Halbisolator zu umhüllen, der vor dem heißen Medium schützt. Zwangsläufig wird durch dessen begrenzte Isolierfähigkeit und der durch das verwendetet Messaufnehmerprinzip des elektronischen Annäherungssensor bzw. -schalters bedingte Aufbau und die technisch und sensorisch bedingte relativ dünne Wandstärke der Führungshülse bei einer Mediumstemperatur von mehr als 120 Grad Celsius trotzdem viel Wärme in dessen Innenraum gelangen, so dass der Messaufnehmer bzw. die Messaufnehmereinheit trotzdem stark erwärmt wird. Zweitens ist diese Messwertaufnehmereinheit 21 thermisch mit einem Wärmeleitkörper gekoppelt, der so gestaltet ist, dass dessen äußerer Teil, zumindest ein Teil davon, Bestandteil der Außenseite des Gehäuses des Strömungsmesseinsatzes ist. Anstatt die kritische Einheit, die Messaufnehmereinheit, weiter vom heißen Medium zu entfernen, was zu einem Verlust an Empfindlichkeit und Messgenauigkeit führen würde, wurde somit ein anderer, besserer Weg erkannt, der diese Nachteile vermeidet. Da der Wärmeleitkörper einen höheren, insbesondere einen deutlich höheren Wärmeleitkoeffizienten als die Isoliereinheit 5 aufweist (der Unterschied sollte möglichst groß gewählt werden), kann die Mediumswärme bzw. Restwärme, die zu dieser Messwertaufnehmereinheit über den thermischen Isolator bzw. die Isoliereinheit gelangt, in den Wärmeleitkörper einschließlich eines oder mehrerer seiner äußeren Teile abgeleitet und zumindest von einem dieser äußeren Teile die Mediumswärme an die Umgebung des Gehäuses 3b abgegeben werden. Der Wärmeleitkörper ist bevorzugt hohlzylinderförmig, insbesondere kreishohlzylinderförmig, mit einem massiven Mantel ausgebildet und ist am mediumseitigen Ende vollständig geschlossen. Dies ermöglicht, die Messwertaufnehmereinheit, die im einfachsten Fall nur aus dem Messwertaufnehmer bestehen kann, am oder im Ende des Wärmeleitkörpers bzw. einer Wärmeleithülse anzubringen und die elektrischen Zuleitungen (Kabel) im Wärmeleitkörper zu führen. Dies ist besondern praktisch, da der möglichst dickwandige Wärmeleitkörper vorteilhafterweise über die Rückfront des Gehäuses hinaus geführt ist und damit kommt das Kabel weit entfernt vom heißen Medium oder heißen Teilen an die Oberfläche. Somit ist ein effektiver mechanischer und thermischer Schutz, vor allem Knickschutz, gegeben. Da ein Teil des Wärmeleitkörper bzw. der Wärmeleithülse nun Teil des erweiterten Gehäuses des Strömungsmesseinsatzes bzw. -gerätes ist, ist die Wärmeabführung durch die vergrößerte Wärmekapazität und Wärmeleitung besser, auch durch die langen, aber trotzdem relativ dünnen flexiblen Litze des Anschlusskabels, aber die Wärmeabführung durch Luftkonvektion und Wärmestrahlung ist vor allem durch die stark vergrößerte Oberfläche gut wärmeleitender Bereiche des Gerätes mit direktem Luftkontakt (Gehäuseoberflächen) verbessert, vor allem, weil die Wärmeabführung an die Umgebung im mediumsfernen Bereich des Gerätes erfolgt. Damit eignet sich die Erfindung für Hochtemperaturanwendungen, insbesondere von ca. 120 bis 200°C und darüber hinaus, wie sie beispielsweise bei Öl- oder Hochdruckwasser-Medien bei Temperiereinrichtungen von Ur- und Umformmaschinen auftreten können. Derartige Temperaturen in Richtung 200°C und darüber treten unter anderem beim Temperieren der Werkzeuge bzw. Werkzeughälften von Spitzgießmaschinen auf. Vorzugsweise besteht der Wärmeleitkörper, vor allem die Wärmeleithülse, aus Kupfer, vor allem aus einem hochreinen Kupfer mit einem Wärmeleitkoeffizient größer als 300 W/Km, und die thermische Isolatorhülse aus einem temperaturbeständigem Kunststoff, bevorzugt PPS, POM oder PEEK.

Die dritte Hauptvariante der Erfindung betrifft einen mechatronischer Strömungsmesseinsatz 1, der für den Durchfluss und die Strömungsgeschwindigkeits- und/oder Strömungsvolumenmessung eines heißen Mediums geeignet ist. Er ist in bzw. an einem wärmebeständigen dreistutzigen Fluidgehäuse (3), insbesondere y-förmigen (3ay) oder Schrägsitzventil-Gehäuse (3as), befestigbar, insbesondere verschraubbar, ist. Er weist eine Messwertaufnehmereinheit 21 innerhalb einer Messeinheit 1c mit einem Gehäuse 3c auf. Der in das Fluidgehäuse 3a fluiddicht eingesetzte bzw. eingeschraubte Strömungsmesseinsatz 1 kann die Strömungsgeschwindigkeit dieses Mediums ohne Mediumskontakt messen. Dies wird durch ein induktives oder ein Magnetsensorsensorelement 21e in Kombination mit einer Elektronikeinheit 320 ermöglicht. induktive oder Magnetsensorsensorelement 21e ist der Wärmebelastung durch das Medium konstruktions- und prinzipbedingt nicht voll, aber zumindest teilweise ausgesetzt. Das Hubkörpermodul 18 hat im Betriebszustand Fluidkontakt. Dessen Hubkörper 18a ist entsprechend der Strömungsgeschwindigkeit des Fluides in eine Richtung ausgelenkt, die ungleich der Hauptströmungsrichtung des Fluid, insbesondere ungleich dessen Abströmrichtung nach dem Hubkörper 18 ist. Das Hubkörpermodul 18 trägt ein auf den Messwert dieser Messwertaufnehmereinheit 21 wirkendes Beeinflussungselement 20 trägt. Das Beeinflussungselement 20 kann ein separates Teil (Magnet 20) oder ein Teil dieser Hubkörpereinheit 18 sein (das Führungsrohr 18b1 bzw. das Verbindungselement 18 zwischen Hubkörper 18a und dem Ringschlitz, der durch die äußere (Gehäusemantel 3b6) und die mittlere Hülse (Führungshülse 10) gebildet ist. Die Auslenkung des Hubkörpers 18a ein Maß für die Strömungsgeschwindigkeit. Es ist eine Ausgabeeinheit 300 vorhanden, die das Signal des Sensorelementes (21e) oder der Messwertaufnehmereinheit (21) (Sensorelement (21e) mit einer Vorverarbeitungselektronik), elektronisch verarbeitet und für ein nachfolgendes Gerät oder Einrichtung, wie z.B. eine SPS, am Signalausgang 310 des Strömungsmesseinsatzes 1, vorzugsweise am Kabel- oder Steckeranschluss 310a, z.B. einem Rundstecker, bereitstellt oder bereitstellen kann. Der Strömungsmesseinsatz (1) besteht im Bereich der Messwertaufnehmereinheit (21) aus drei ineinander geschraubten, einander überlappenden Hülsen (3b6, 10, 7a). Die äußere Hülse ist der Gehäusemantel (3b6), der mediumsseitig offen und in dem Mediummodul bzw. fluidfernen Stutzen 3a4f des Fluidgehäuse 3a, 3ay oder eines Grundkörpers 401 mediumsdicht befestigbar ist. Die mittlere Hülse ist die Führungshülse (10). Sie ist mediumsseitig verschlossen und mit der ersten Hülse verschraubt (3b6i, 10a). Die innere Hülse ist die Messaufnehmerhülse (7d). Sie trägt an oder in ihrer mediumsseitiger Spitze die Messaufnehmereinheit (21) und ist die in die mittlere Hülse, d.h. die Führungshülse (10), eingeschraubt ist (10a, 7a2a). Bzgl. der Wärmeabgabe günstig ist es, wenn der Wärmeleitkörper 7 oder Führungshülse 7a länger ist als die beiden anderen Hülsen, d.h., länger als der Gehäusemantel (3b6) und die Führungshülse 10. Die Wärmeableitung und Konstruktion ist weiter verbessert durch ein durchgehendes flexibles Anschlusskabel (200) mit mehreren Adern in Form von Kupferlitzen, das durch die Wärmeleithülse 7a verläuft und dessen Kupferlitze direkt mit den elektrischen Anschlüssen der Messaufnehmereinheit (21) kontaktiert bzw. verlötet sind. Dabei sollte der Durchmesser der Kupferlitze möglichst groß sein, mindestens 0,5 mm2.

Die Führungshülse (10) besteht aus thermisch halbisolierendem, oder besser noch isolierendem Material. Geeignet sind vor allem temperaturbeständigem Materialien wie PEEK oder PPS oder POM.

Für die Montage mit dem Fluidgehäuse 3a, 401 ist es günstig, wenn die äußerer Hülse (Gehäusemantel 3b6) neben dem Innengewinde (3b6i) am mediumsseitigen Ende ein Außengewinde (3b6a) sowie in Längsachsrichtung darüberliegende Schlüsselangriffsflächen aufweist. Die Messaufnehmereinheit (21) sollte thermisch mit der Messaufnehmerhülse (7d) gut gekoppelt sein. Die Messaufnehmerhülse (7d) besteht aus thermisch gut leitendem Material, vorzugsweise Kupfer. Sie hat einen äußeren Teil (7b), der über die Rückfront (3b5) der Messeinheit (1c) hinausreicht. Dadurch wird Mediumswärme, die zu dieser Messwertaufnehmereinheit (21) gelangt, in den Wärmeleitkörper (7) in Form der Wärmeleithülse (7a) einschließlich eines oder mehrerer seiner äußeren Teile (7b, 3b7, metallischer Deckel 3b1) abgeleitet. Diese äußeren Teile (7b, 3b7, 3b1) geben besonders effektiv Mediumswärme an die Umgebung des Gehäuses (3b) ab.

Es ist eine vierte Hülse (3b1, 3b7, 7d) mit guter thermischer Leitfähigkeit, vorhanden die als Deckel (3b1) bzw. Rückfront (3b5) der Messeinheit dient. Sie ist mit der Messaufnehmerhülse (7d) verschraubt ist und trägt vor allem in keramischer oder metallischer Ausführung zur Temperaturreduzierung der Messaufnehmereinheit (21) bei. Die Ausgabeeinheit (300) ist sinnvollerweise in einem separaten Gehäuse (330) angeordnet ist, dass über ein flexibles elektrisches Kabel (200) mit der Messeinheit (1c) bzw der Messaufnehmereinheit (21) verbunden ist.

Ein weiterer Aspekt der Beschreibung ist ein mechatronisches Strömungsmessgerät (4) mit einem in einem Fluidgehäuse (3a) oder Gehäusekörper (401) befestigten, insbesondere eingeschraubten Strömungsmesseinsatz (1). Dessen Hubkörper (18a) ist strömungsgeschwindigkeitsabhängig durch ein Fluid ausgelenkt. Der Strömungsmesseinsatz (1) und/oder das Strömungsmessgerät (4) ist so gestaltet, dass das zu messende Fluid nicht am Hubkörper (18a) in Längsachsrichtung vorbeifließt bzw. vorbeifließen kann, wie es z.B. bei Schwebekörpern der Schwebekörper-Durchflußanzeiger oder der Schwebekörper-Durchflussmessgeräte der Fall ist. Es ist sondern im Bereich des Hubkörpers (18a) umgelenkt bzw. umlenkbar, so dass die Abströmrichtung des Fluides nach dem Passieren des Hubkörpers (18a) ungleich der Auslenkrichtung des Schiebeelementes (12) bzw. Hubkörpers (18a) ist. Das Fluidgehäuse (3a) har die Form hat
a) eines dreistutzigen (3a4), insbesondere y- oder T-förmigen Fluidgussgehäuses (3a, 3ay) mit zueinander koaxialen Ein- und Ausgangsstutzen (3a4e, 3a4a), oder
b) eines quaderförmigen Mehrfachfluidgehäuses (3m) mit mehreren Funktionsblöcken, insbesondere eines einstückigen quaderförmigen Mehrfachfluidgehäuses (401) zur Aufnahme mehrerer, parallel angeordneter Strömungsmesseinsätze (1) oder
c) eines quaderförmigen Einfachfluidgehäuses (401) mit einem Funktionsblock (401f), in dem ein oder mehrere Strömungsmesseinsätze (1) befestigt sind.

Das mechatronische Strömungsmessgerät hat in einer bevorzugten Ausführung ein Schrägsitzventil (19) und ein Schrägsitzventilgehäuse (3as) bzw. y-förmigen Fluidgehäuse (3ay). Es besteht im Wesentlichen bestehend aus dem Hubkörper (18a), dem fluidfernen Stutzen (3a4f) und dem Ventilsitz (3a2, 407) dass bei strömendem Fluid in Strömungsrichtung (2) geöffnet und aus einer Grundstellung heraus bewegt ist und bei nichtströmendem Fluid oder Strömung in Gegenrichtung geschlossen und in Grundstellung ist.

Der Strömungsmesseinsatz (1) und/oder das Strömungsmessgerät (4) sind besonders geeignet zur Verwendung als Durchflussmesser bzw. Strömungsüberwachungs- oder Strömungsmessvorrichtung (600) mit einem Gehäusekörper (401) bzw. Fluidgehäuse (3a) zur Messung und/oder Überwachung der Strömungsgeschwindigkeit eines fluidischen Heiz- und/oder Kühlmittels in einer Temperiervorrichtung (500) für das Formwerkzeug (520). Sie ist auch geeignet zur Temperierung der Formmasse einer Ur- oder Umformeinrichtung (520), insbesondere einer Spritzgießmaschine (520a) oder Spritzgießanlage oder in einer Thermoumformeinrichtung, insbesondere als Hochtemperatur-Strömungsmessgerät für die Formmassestromkühlung und/oder -heizung, z.B. für POM ((Polyoxymethylen, Polyacetal), für Fluidtemperaturen von größer als 150 Grad und/oder die Werkzeugkühlung und/oder -heizung für Fluidtemperaturen von größer als 80 bis 120 Grad.

In Figur 2 ist eine Schnittdarstellung des mechatronischen Strömungsmessgerätes 4 mit einer entsprechenden Strömungsmesseinheit 1c gemäß Figur 1 vergrößert dargestellt. In dem unten offenen Gehäusemantel 3b6 ist eine unten geschlossene Führungshülse 10 aus temperaturbeständigem, aber thermisch schlecht leitendem Material wie PEEK oder PPS eingeschraubt, die den wesentlichen Teil der Isoliereinheit 5 darstellt, um die Messaufnehmereinheit 21 gegen die Hitze des Mediums zu schützen. Ein Dichtungselement 11a in Form eines O-Ringes verhindert, dass Medium bis zur Schraubverbindung gelangen bzw. aus dem Gerät austreten kann. Zwischen mittlerer (Führungshülse 10) und äußerer 3b6 Hülse ist ein schmaler ringförmiger Hohlraum 15 für die Feder 14 und das Führungsrohr 18b. Dieses Führungsrohr 18b kann selber, vor allem im Falle des Einsatzes eines induktiven Näherungssensors bzw. einer Spule bzw. LC- oder LR-Oszillators als Messaufnehmereinheit 21, das Beeinflussungselement (entsprechend dem Magneten 20) für die Messaufnehmereinheit 21 sein oder kann ein solches Beeinflussungselement bzw. Schwingkreisbedämpfungselement beinhalten. Das Beeinflussungselement ist dann als Bedämpfungsring ausgeführt, der vorteilhafterweise aus nichtmagnetischem Edelstahl besteht. In vorliegenden Fall ist ein GMR-Messaufnehmereinheit 21 als integriertes Bauelement mit einem Magnet als Beeinflussungselement 20 dargestellt, der mit dem Hubkörper 18a des Hubkörpermodul 18 (mit Feder 14 und Führungsrohr 18b) fest verbunden bzw. in diesem verschlossen ist, so dass kein Mediumkontakt wegen möglicher Korrosion oder Verunreinigung des Mediums vorhanden ist. Es ist bei Magnet-Messaufnehmern im Gegensatz zu induktiven messenden Geräten üblich, dass das Messelement bzw. der Messaufnehmer Vorverarbeitungselektronik aufweist, die zusammen mit dem Messelement eine kompakte bzw. integrierte Einheit bilden. Messaufnehmereinheit 20 kann im Sinne dieser Erfindung bedeuten, dass Vorverarbeitungselektronik in diese integriert ist oder aber die Messaufnehmereinheit nur den Messaufnehmer, z.B. eine Sensorspule, aufweist. Magnetfeldempfindliche Messaufnehmer in Sinne der beiden beschriebenen Verfahren bzw. Sensortypen sind für Hochtemperaturanwendungen besonders geeignet, da sie vor allem gegenüber optischen und kapazitiven Verfahren robust und schmutzunempfindlich sind.

Wie bereits erwähnt, ist das Messgerät 4 mit seinem Messeinsatz 1 besonders vorteilhaft durch seinen modularen Aufbau. Einerseits kann das Hubkörpermodul 18 leicht durch ein anderes ersetzt werden oder einzelne Bestandteile wie die Feder 14, das Führungsrohr 18b oder der Hubkörper 18a ausgewechselt werden. Anderseits ergibt sich eine größere Universalität und preiswerte Herstellbarkeit des Strömungsmesseinsatz 1 bzw. des Strömungsmessgerätes 4 durch den modularen Aufbau mittels dreier koaxialer, miteinander verschraubter und sich überlappender Haupthülsen, die sich oberhalb des Hubkörpers 18a befinden. Dies sind
a) der mediumsseitig offene Gehäusemantel 3b6 als äußere Hülse, die mittels eines unteren Außengewindes 3b6a und des Dichtungselementes 26 mediumsdicht in das Mediumgehäuse 3a eingeschraubt ist (3b6i, 10a);
b) die mediumsseitig geschlossene Führungshülse 10 als mittlere Hülse, die in den Gehäusemantel 3b6 eingeschraubt ist (3b2, 10a), mittels des Dichtungselementes 11a abgedichtet ist und mit diesem Gehäusemantel 3b6 einen hohlzylinderförmigen Hohlraum 15 zur Führung des Führungsrohres 18b der Hubkörpereinheit 18 und/oder zur Führung der Feder 14 bildet. Für hohe Mediumstemperaturen ist die Führungshülse 10 aus hitzebeständigem thermisch isolierenden Material, insbesondere einem Kunststoff wie PEEK oder PPS, gebildet;
c) die Messaufnehmerhülse in Form einer Wärmeleithülse 7b, die an oder in deren mediumsseitiger Spitze die Messaufnehmereinheit 21 trägt und die in die mittlere Hülse, d.h. die Führungshülse 10 eingeschraubt ist (7a2a, 10b). Die Abdichtung erfolgt optional mittels des Dichtungselementes 11b. Für hohe Mediumstemperaturen von mindestens 120 bis 200 Grad Celsius ist diese Messaufnehmerhülse 7d als wärmebeständige und hochwärmeleitfähige Wärmeleithülse 7a ausgebildet (vorzugsweise mit einem einstückigen Mantel aus hochreinem Kupfer mit einem Wärmeleitkoeffizient größer als 300 W/Km und über die Rückfront 3b5 hinausragend), die durch den guten thermischen Kontakt mit der Messaufnehmereinheit 21 deren Wärme in den rückwärtigen Teil der Wärmeleithülse 7a transportiert, ggf. auch in einen sekundären Wärmeleitkörper 7, z.B. in eine vierte Hülse, die als Deckel 3b1 und Kontermutter ausgebildet ist. Durch den modularen Aufbau mittels dreier Haupthülsen, kann das Messgerät 1c oder einzelne Teile desselben wie die Wärmeleithülse 7a mit der Messaufnehmereinheit 21 sehr schnell ausgewechselt werden, z.B. im Fehlerfall. Es reicht dann, diese kleinere Einheit, d.h. eine der drei Haupthülsen auszuwechseln.

Die Führungshülse (10) als Hauptbestandteil der Isoliereinheit 5 aus thermisch isolierendem Material zu machen, hilft gegen die Temperaturbelastung der Messaufnehmereinheit 21. Wenn jedoch viel heißes Medium strömt oder die Temperatur sehr hoch ist, hilft diese Maßnahme wenig, da erkannt wurde, dass die Wärmeableitfähigkeit konventioneller mechatronischer Strömungsmessgeräte gering ist. Aus diesem Grunde ist der Einsatz einer Isoliereinheit 5 bzw. einer thermisch isolierenden Führungshülse 10 mit einem niedrigen Wärmeleitkoeffizienten mit dem Einsatz eines Wärmeleitkörpers 7 mit einem hohen Wärmeleitkoeffizienten innerhalb der Führungshülse 10 kombiniert. In die Führungshülse 10 ist von oben ein Wärmeleitkörper 7 in Form einer unten geschlossenen und oben offenen Wärmeleithülse 7a mit großer Wandstärke und somit sehr geringem Wärmewiderstand eingeschraubt. Zumindest deren Mantel ist sinnvollerweise einstückig, z.B. als Dreh- oder Tiefziehteil aus Kupfer, ausgebildet ist, um Wärmeleitungssperren bzw. Zonen mit verringerter Wärmeleitfähigkeit zu vermeiden. Das untere Ende der Wärmeleithülse 7a ist mit einem hartgelötetem Kupferdeckel verschlosssen. Auf dem Deckel bzw. in der Wärmeleithülse 7a ist die Messaufnehmereinheit 21 mit einer Leiterplatte 24 angeordnet, die eine gute thermische Ankopplung an den Deckel bzw. an die Wärmeleithülse 7a hat, z.B. durch ein Verguss- oder Klebmitttel, das sinnvollerweise elektrisch isoliert, aber thermisch gut leitend ist (Wärmeleitpaste). An die Leiterplatte 24 sind die Litze 22 des flexiblen Kabels 200 angelötet, das durch die Wärmeleithülse 7a geführt ist (zumindest deren Adern). Der Wärmeleitkörper 7 ist zwar der Hauptbestandteil der Isoliereinheit 5, aber auch das Hubkörpermodul 18 mit dem Führungsrohr 18b (das zur Druckstoßdämpfung eine Dämpfungsöffnung 6 aufweist und bei Verwendung eines Magnet-Näherungssensors aus Kupfer, Messing oder einem Hochtemperaturwerkstück wie POM, PEEK oder PPS besteht), sowie der nur schmale Kanal 15, in der die Feder 14 geführt wird, tragen dazu bei, das der Temperaturgradient von der Hauptströmung des Mediums zur Messaufnehmereinheit 21 möglichst groß ist. Der Wärmeleitkörper 7 ist so gestaltet, das zumindest ein Teil (äußerer Teil 7b) von ihm zur äußeren Oberfläche des Gehäuses 3b des Messeinheit 1c gehört, insbesondere zur mediumsfernen Oberfläche. Dadurch kann wesentlich mehr Wärme durch die Messeinheit 1c bzw. den Strömungsmesseinsatz 1 an die Umgebung abgegeben werden (teilweise auch über die elektrischen Zuleitungen des flexiblen Kabels 200). Dies geschieht vor allem durch Wärmekonvektion und -strahlung. Dies ist realisiert durch die massive, wärmewiderstandsarme Wärmeleithülse 7a, die mit ihrem äußeren Teil 7b bis über die Rückfront 3b5 hinausreicht. Die Rückfront 3b5 ist hier in der besonders bevorzugten Ausgestaltung durch einen Deckel 3b1 in Form einer Metallmutter gebildet, die zugleich Kontermutter ist. Durch dessen Innengewinde 3b1i und den Kraftschluss bei Konterung ergibt sich ein niedriger Wärmewiderstand zur primären Wärmeleithülse 7a, so dass der Deckel 3b1 ein äußerer wärmeleitender, - konvektierender und -strahlender Gehäuseteil 3b7 und sekundärer Teil des Wärmeleitkörper 7 ist, zugleich auch eine hohlzylinderförmige Gehäuse-Mutter mit Innengewinde 3b1 i.

Der Gehäusemantel 3b6 und die Führungshülse 10 sind aus einem schlecht wärmeleitenden Material wie PPS (Polypropylensulfid) mit einem Wärmeleitkoeffizienten von ca. 0.3 W/K m. Das im Y-Fitting bzw. der Anschlusseinheit 100 strömende Medium umgibt einen Teil der Führungshülse 10, die eine beliebige Querschnittsform haben kann. Sie hat aber bei kreishohlzylinderförmiger Ausbildung einige technische und ökonomische Vorteile. Aufgrund der hohen Temperatur des Mediums bis zu 200°C und darüber wird trotz des schlechten Wärmeleitkoeffizienten von PPS Restwärme von der Führungshülse 10 in Richtung Wärmeleithülse 7a transportiert. Die Führungshülse 10 dient als thermischer Isolator, der einen endlichen Wärmewiderstand aufweist. Aufgrund des sehr hohen Wärmeleitfähigkeitskoeffizienten des Wärmeleitkörpers 7, der bevorzugt als kreishohlzylinderförmige Wärmeleithülse 7a ausgeführt ist, wird die Wärme aber gut zum mediumsfernen Ende der Wärmeleithülse 7 abtransportiert, wo sie in die Umgebung nach außen abgeführt wird. Dadurch kann gewährleistet werden, dass die Messfühlereinheit 21 nicht mehr als 90°C warm wird.

Neben einer Messfühlereinheit 21 bzw. einem Messfühler für ein Beeinflussungselement 20 in Form eines Dauer-Magneten, für den ein GMR-Sensor bzw. GMR-Messfühler besonders geeignet ist, ist zur Erfassung der Position des Schiebeelements 12 bzw. des bewegten Hubkörpers 18a der Hubkörpereinheit 18 alternativ auch andere Sensortypen denkbar. Insbesondere sind induktive Näherungs-Sensoren oder induktive Näherungsschalter sehr geeignet, vor allem, wenn das Prinzip der Außenringbedämpfung benutzt wird, dass durch sehr kleine Hysteresen sehr hohe Genauigkeiten, besonders Schaltgenauigkeiten, ermöglicht.

Alternativ zu POM kann als Material für das Gehäuse 3c und die Führungshülse 10 auch PPE oder PEEK verwendet werden.

Das Gehäuse 3 und die Führungsachse 10 sind aus einem schlecht wärmeleitenden Material PPS (Polypropylensulfid) mit einem Wärmeleitkoeffizient von ca. 0.3 W/K m. Das im Y-Fitting 100 strömende Medium umgibt die Führungsachse 10. Aufgrund der hohen Temperatur des Mediums bis zu 200°C wird trotz des schlechten Wärmeleitkoeffizienten von PPS Restwärme von der Führungsachse 10 in Richtung Wärmeleithülse 7 transportiert. Die Führungsachse 10 dient als thermischer Isolator.

Aufgrund des sehr hohen Wärmeleitfähigkeitskoeffizienten der Wärmeleithülse 7 wird die Wärme aber relativ gut zum Ende der Wärmeleithülse 7 abtransportiert, wo sie in die Umgebung nach außen abgeführt wird. Dadurch kann gewährleitstet werden, dass das Sensorelement 22 nicht mehr als 90°C warm wird. Wenn der mechatronische Strömungssensor in einer heißen Umgebung eingebaut ist, ist eine Wasserkühlung an der Wärmeleithülse 7 vorgesehen. Sie ragt deshalb erheblich weniger aus dem Gehäuse 7 heraus. Neben einem GMR- Sensor zur Erfassung der Position des Schiebeelements 12 sind alternativ auch andere Sensoren insbesondere auch induktive Sensoren denkbar. Alternativ kann als Material PPE auch das Material PEEK für das Gehäuse 3 und die Führungsachse 10 verwendet werden. Die Erfindung eignet sich besonders gut für Hochtemperaturspritzgussvorrichtungen. Das Medium (Wasser, Öl oder Glykol) besitzt eine Temperatur von ca. 200° Celsius und hat dabei einen Druck von ca. 20 bar. Mit dem mechatronischen Strömungssensor 1 kann die Menge des strömenden Mediums erfasst und der Prozess entsprechend geregelt werden. Damit kann mit einem zusätzlichen Temperatursensor der Wärmeeintrag oder der Wärmeabtrag in das bzw. aus dem Spritzgusswerkzeug heraus genau bestimmt werden und damit der Spritzgussprozess optimiert werden. Die Erfindung ist nicht nur für mechatronische Strömungssensoren geeignet sondern auch für andere Sensoren wie z. B. Drucksensoren, wo auch empfindliche Elektronikbauteile relativ nahe zu einem heißen Medium angeordnet sind.

Nachfolgend ist die Funktion des mechatronischen Strömungsmesseinsatzes und des Strömungsmessgerätes noch weiter anhand der Figuren 1-3 ausgeführt. Durch das in dem Schrägsitzventilgehäuse Y-Fitting bzw. in der Anschlusseinheit 100 strömende Medium bzw. Fluid (Flüssigkeit oder Gas) wird das Schiebeelement 12 bzw. der Hubkörpereinsatz 18 je nach Strömungsgeschwindigkeit des Mediums mehr oder weniger in Richtung des mediumabgewandten Endes der Messeinheit 1c bzw. des Gehäusemantels 3b6 des Gehäuses 3 gedrückt. Mit Hilfe des mittels der Litze 22 kontaktierten Sensorelementes bzw. des Messfühlers bzw. der Messfühlereinheit 21 wird die Lage des Beeinflussungselementes 20, d.h. des Magneten, und damit die Position des Schiebeelements 12 bzw. Hubkörpereinheit 18 auf der Führungsachse bzw. der Führungshülse 10 erfasst und das entsprechende Messsignal mittels einer Auswerteeinheit weiterverarbeitet, ggf. linearisiert und/oder ein Schaltpunkt oder mehrere Schaltpunkte erzeugt und ausgegeben, vorzugsweise als Standardsignal im Form eines Schaltsignales und/oder digitalen Signales und/oder eines üblichen Analogsignales, z.B. 0-10 V oder 4-20 mA.

Das Mediumgehäuse 3a, üblicherweise aus Messing bestehend, weist insgesamt drei Stutzen 3a4 mit drei Anschlüssen 3a1, vorzugsweise Gewindeanschlüsse 3a1g auf, wobei zwei mediumseitige Gewindeanschlüsse 3a1g und ein strömungsmesseinsatzseitiger (beim Ventilsitz 3a2) vorhanden sind. Die Strömungsrichtung 2 des zu messenden flüssigen bzw. gasförmigen Mediums ist durch einen Pfeil gekennzeichnet. Aus dem mit einem Deckel 3b1 verschlossenen Gehäuse 3b des mediumseitigen Teil der Messeinheit 1c ragt ein Wärmeleitkörper 7 in Form einer Kupfer- oder Messing-Wärmeleithülse 7a, in der das Anschlusskabel 200 geführt wird. Das Ende der Wärmeleithülse 7a weist einen Knickschutz 210 für das flexible Anschlusskabel 200 auf. Es ist vorteilhaft, Knickschutz 210 und den äußeren Teil 7b des Wärmeleitkörpers 7 einstückig auszuführen, wobei sich Kupfer besonders eignet und die Wandstärke des Knickschutzes entsprechend dünn ausgeführt ist, so das durch umschließendes Verpressen mittels eines Mehrsegment-Werkzeuges ein Knickschutz in Verbindung mit einer ausgezeichneten flüssigkeitsdichten Verbindung mit dem mehr oder weniger elastischen Kabel 200 erreicht werden kann ohne das separate Maßnahmen für die dauerhafte Dichtigkeit in diesem Bereich betroffen werden müssen oder ein weitergehender Materialeinsatz in Form von speziellen Dichtungen notwendig ist.

Fig. 4 und 5 zeigt einen Gehäusekörper für eine achtkanalige bzw. zweikanalige Strömungsüberwachungsvorrichtung, der einstückig und vorteilhaft als Messinggussblock ausgeführt ist. Ein mechatronischer Strömungsmesseinsatz ist in der Öffnung 402ss befestigbar wie es in den Fig. 1-2 gezeigt ist. Optional auch ein Temperaturmesselement oder ein Temperaturmessgerät, für das die kleinere Öffnung 402ss bzw. das passive Ausgangskanalteilstück 405atp vorgesehen ist. Das Fluid gelangt über den Einlaß 402e in einen aktiven Kanal 405ek. Im Hubkörperbereich des mechatronischen Strömungsmessgerätes wird die Strömung umgelenkt und befindet sich dann im aktiven Ausgangskanal 405ak, der dann ein passives Kanalteilstück 405atp bildet, dass vorzugsweise mittels eines Blindstopfen verschlossen ist, da ein gemeinsamer Ausgangskanal bzw. ein gemeinsames Ausgangskanalstück 405atg vorhanden ist.

In Figur 1 ist ein mechatronischer Strömungssensor 1 bestehend aus einem Gehäuse 3 im eingebauten Zustand dargestellt. Das Gehäuse 3 ist in ein ¾ Zoll Gewindeanschluss am Y-Fitting 100 eingeschraubt. Das Y-Fitting 100 weist insgesamt drei Gewindeanschlüsse 102 auf. Die Strömungsrichtung des zu messenden flüssigen bzw. gasförmigen Mediums ist durch einen Pfeil gekennzeichnet.

Aus dem mit einem Deckel 5 verschlossenen Gehäuse 3 ragt eine Wärmeleithülse 7, in der ein Anschlusskabel 200 geführt wird. Am Ende des Anschlusskabels 200 ist eine Elektronikmodul 300 mit integriertem Stecker vorgesehen.

Fig. 3 zeigt einen Strömungsmesseinsatz 1, der im Gegensatz zu den Figuren 1 bis 2 einen größeren sekundären Wärmeleitkörper 7 in Form eines metallischen Deckels 3b1 mit Innengewinde 3b1i aufweist. Dadurch ist eine bessere Kühlung der Messaufnehmereinheit 21 gewährleistet. Der langgestreckte Gehäusemantel 3b6 ist ebenfalls aus thermisch isolierendem Material, so dass keine ungewollten Wärmebrücken mit niedrigem Wärmeleitkoeffizienten parallel zur Wärmebrücke Medium - Messfühereinheit entstehen können. Auch der Hubkörper ist leicht konisch und speziell ausgebildet, so eine hohe Messdynamik von über 1:100 erreicht werden kann. Dies bedeutet, dass ohne Wechseln des Hubkörpers bzw. der Hubkörperform ein Strömungsgeschwingkeitsbereich von weniger als 100 ml/min bis über 100 l/min überwacht bzw. gemessen werden kann.

Nachfolgend ist die Funktion des mechatronischen Strömungsmesseinsatzes und des Strömungsmessgerätes noch weiter anhand der Figuren 1-3 ausgeführt. Durch das in dem Schrägsitzventilgehäuse Y-Fitting bzw. in der Anschlusseinheit 100 strömende Medium bzw. Fluid (Flüssigkeit oder Gas) wird das Schiebeelement 12 bzw. der Hubkörpereinsatz 18 je nach Strömungsgeschwindigkeit des Mediums mehr oder weniger in Richtung des mediumabgewandten Endes der Messeinheit 1c bzw. des Gehäusemantels 3b6 des Gehäuses 3 gedrückt. Mit Hilfe des mittels der Litze 22 kontaktierten Sensorelementes bzw. des Messfühlers bzw. der Messfühlereinheit 21 wird die Lage des Beeinflussungselementes 20, d.h. des Magneten, und damit die Position des Schiebeelements 12 bzw. Hubkörpereinheit 18 auf der Führungsachse bzw. der Führungshülse 10 erfasst und das entsprechende Messsignal mittels einer Auswerteeinheit weiterverarbeitet, ggf. linearisiert und/oder ein Schaltpunkt oder mehrere Schaltpunkte erzeugt und ausgegeben, vorzugsweise als Standardsignal im Form eines Schaltsignales und/oder digitalen Signales und/oder eines üblichen Analogsignales, z.B. 0-10 V oder 4-20 mA.

Wenn der mechatronische Strömungssensor in einer heißen Umgebung eingebaut ist, ist eine Wasserkühlung mittels des Wärmeleitkörpers 7 bzw. der Wärmeleithülse 7a vorgesehen. Dieser ragt deshalb erheblich weniger oder gar nicht aus dem Gehäuse 3c heraus.

Die Erfindung eignet sich besonders gut für Temperiereinrichtungen für Hochtemperaturspritzgussvorrichtungen bzw. Spritzgießmaschinen. Das Medium (Wasser, Öl oder Glykol) besitzt eine Temperatur von ca. 80 bis 200° Celsius und hat dabei einen Druck von ca. 3 bis 20 bar. Mit dem mechatronischen Strömungsmesseinsatz 1 und einem darauf basierenden Strömungsmessgerät 4 kann die Menge des strömenden Mediums sehr genau und trägheitsarm erfasst und der Prozess entsprechend geregelt werden. Damit kann mit einem zusätzlichen Temperatursensor der Wärmeeintrag oder der Wärmeabtrag in das bzw. aus dem Spritzggießwerkzeug heraus genau bestimmt werden und damit der Spritzgießprozess optimiert werden.

Fig. 4 und 5 zeigt einen Gehäusekörper für eine achtkanalige bzw. zweikanalige Strömungsüberwachungsvorrichtung, der einstückig und vorteilhaft als einstückiger Messinggussblock ausgeführt ist. Ein mechatronischer Strömungsmesseinsatz 1, wie er in den Fig. 1-2 gezeigt ist, ist in der Öffnung 402ss befestigbar. Optional auch ein Temperaturmesselement oder ein Temperaturmessgerät, für das die kleinere Öffnung 402s bzw. das passive Ausgangskanalteilstück 405atp vorgesehen ist. Das Fluid gelangt über den Einlaß 402e in einen aktiven Kanal 405ek. Im Hubkörperbereich des mechatronischen Strömungsmessgerätes wird die Strömung umgelenkt und befindet sich dann im aktiven Ausgangskanal 405ak, der dann ein passives Kanalteilstück 405atp bildet, dass vorzugsweise mittels eines Blindstopfen verschlossen ist, da ein gemeinsamer Ausgangskanal bzw. ein gemeinsames Ausgangskanalstück 405atg vorhanden ist.

Fig. 6 zeigt eine Temperiereinrichtung 500 einer Ur- oder Umformeinrichtung 520 mit einem Gehäusekörper 401 bzw. 577, einem mit einem Temperiergerät 510, das zumindest eine Pumpe zum Pumpen des Fluides in den Zulauf, eine Temperaturänderungseinrichtung zum Heizen des Fluides und/oder zum Kühlen des Fluides sowie eine Temperaturregeleinrichtung für das zu pumpende Fluid aufweist. Das zu temperierende Formwerkzeug 525, insbesondere ein Spritzgießwerkzeug, weist mindestens einen Fluidkanal 525k, d.h. mindestens einem Zulauf 525z und mindestens einem Rücklauf 525z auf. D.h. dass der Fluidkanal 525k an mindestens eine Zulaufleitung 550z und mindestens eine Rücklaufleitung 550r hat. Im dargestellten Beispiel ist ein vierkanaliges Formwerkzeug 525 gezeigt und demzufolge ein vierkanaliger Rücklauf bis zum Strömungsmessgeräteblock 575 mit vier mechatronischen Strömungsmesseinsätzen 570e, die zusammen mit den vier Funktionsblöcken des Gehäusekörpers vier mechatronische Strömungsmessgeräte 570 bilden, d.h. einen Messgeräteblock. An diesen schließt sich ein Regelventilblock 565 mit vier elektrischen Regelventilen 560 an, die entsprechend der Signale der zugeordneten Strömungsmessgeräte 570 gesteuert werden. Da die die Strömung zumindest eines der Strömungsmessgeräte 570 gemäß der Figuren 1 und 2 im Bereich des Hubkörpers so umgelenkt ist, so dass die Anströmrichtung des Fluides ungleich der Abströmrichtung ist, d.h. dass die Auslenkungsrichtung des Hubkörpers gegenüber der An- oder Abströmrichtung um einen bestimmten Winkel Wn bzw. Wb, der größer als Null Grad ist, differiert, und dass das Strömungsmessgerät 570 ein mechatronisches Hubkörperströmungsmessgerät ist, werden beträchtliche Vorteile erreicht. Dies sind z.B.: a) die Trübung oder Verschmutzung des Fuides ist unerheblich b) der Hubkörper wird von der Strömung weg bewegt. Dadurch ist Platz vorhanden, einen genauen Sensor bzw. ein Annäherungsmeßgerät zu platzieren, insbesondere ein elektronisches induktives oder Magnet-Näherungsmessgerät oder einen elektronischen induktiven oder Magnet-Näherungsschalter.

Nachfolgend werden besondere Ausgestaltungen der Erfindung näher erläutert. Eine vorteilhafte Variante der Beschreibung besteht darin, dass die Ausgabeeinheit, die ein messsignalrelevantes Ausgangssignal als Standardsignal über einen Stecker- oder Kabelausgang ausgibt, außerhalb des Gehäuses der mediumsnahen Messeinheit angeordnet und mit diesem über ein flexibles Kabel verbunden ist. Die Ausgabeeinheit mit einer integrierten Elektronikeinheit (z.B. mit für Kurzschlussschutz, elektrooptischen Anzeigeelementen, Anzeige- und Programmierungslogik usw.) die das Signal der Messaufnahmereinheit bzw. des Messaufnehmers bearbeitet und in ein standardisiertes Signal umwandelt und an eine nachfolgende Einheit wie eine SPS abgibt, ist bei bekannten mechatronischen Hubkörperströmungsmessgeräten im Näherungsschalter oder ein Analognäherungssensorgerät integriert, die die bei diesen Geräten üblichen Anzeige-Elemente wie LEDs aufweisen. Besonders für hohe Mediumstemperaturen ist es aber vorteilhaft, die Ausgabeeinheit als separate Einheit (Gerät, Modul) zu realisieren, weil dadurch eine Ausgabeeinheit mit integrierter Auswerteeinheit bzw. auswertender Elektronikeinheit, ggf. auch mit einer Programmier-, Bedien- und/oder Anzeigeeinheit, mit einem standardisierbaren, vom mediumsnahen Teil des Strömungsmesseinsatzes unabhängigen Teil geschaffen ist, die universell verwendbar und bei Hochtemperaturanwendungen weit weniger temperatur- und mediumsbelastet ist (thermische, chemische und mechanische Beständigkeit und Dichtigkeit). Um eine geringe Störbarkeit bzw. eine gute Zuverlässigkeit und Medien- und Feuchtigkeitsbeständigkeit zu erreichen, ist es vorteilhaft, beide Einheiten durch einen nichtsteckbare flexible Verbindung (Kabel) elektrisch zu kontaktieren, d.h. keine Steckverbinder zu benutzen, vorzugsweise auch keinen Kabelanschlussraum.

Eine weitere vorzugte Ausgestaltung der Erfindung besteht darin, dass der Strömungsmesseinsatz im wesentlichen aus drei koaxial angeordneten Kreishohlzylindern besteht, die miteinander verschraubt sind, wobei der innere die Wärmeleithülse, der mittlere die Isolatorhülse, die gleichzeitig Führungshülse für die Hubkörpereinheit und/oder die Hubkörper-Feder ist und der äußere der Gehäusemantel ist, der mit dem Mediumsgehäuse, z.B. einem Messing-Y-Stück bzw. Messing-Schrägsitzventilgehäuse mit Ventilsitz als Hubkörperanschlag verschraubbar ist. Das Gerät ist dadurch besonders stabil sowie effektiv und preiswert herstellbar.

Eine weitere vorzugte Ausgestaltung der Erfindung besteht darin, die Messwertaufnehmereinheit, mit der die Position des Hubkörpers mittels eines auf diesem angebrachten oder mit diesem starr verbundenen Beeinflussungselementes erfasst wird, zumindest mediumsseitig mit einen thermischen Isolator oder Halbisolator zu umhüllen, der vor dem heißen Medium schützt. Zwangsläufig wird durch dessen begrenzte Isolierfähigkeit und der durch das verwendetet Messaufnehmerprinzip des elektronischen Annäherungssensor bzw. -schalters bedingte Aufbau und die technisch und sensorisch bedingte relativ dünne Wandstärke der Führungshülse bei einer Mediumstemperatur von mehr als 120 Grad Celsius trotzdem viel Wärme in dessen Innenraum gelangen, so dass der Messaufnehmer bzw. die Messaufnehmereinheit trotzdem stark erwärmt wird. Zweitens ist diese Messwertaufnehmereinheit 21 thermisch mit einem Wärmeleitkörper gekoppelt, der so gestaltet ist, dass dessen äußerer Teil, zumindest ein Teil davon, Bestandteil der Außenseite des Gehäuses des Strömungsmesseinsatzes ist. Anstatt die kritische Einheit, die Messaufnehmereinheit, weiter vom heißen Medium zu entfernen, was zu einem Verlust an Empfindlichkeit und Messgenauigkeit führen würde, wurde somit ein anderer, besserer Weg erkannt, der diese Nachteile vermeidet. Da der Wärmeleitkörper einen höheren, insbesondere einen deutlich höheren Wärmeleitkoeffizienten als die Isoliereinheit 5 aufweist (der Unterschied sollte möglichst groß gewählt werden), kann die Mediumswärme bzw. Restwärme, die zu dieser Messwertaufnehmereinheit über den thermischen Isolator bzw. die Isoliereinheit gelangt, in den Wärmeleitkörper einschließlich eines oder mehrerer seiner äußeren Teile abgeleitet und zumindest von einem dieser äußeren Teile die Mediumswärme an die Umgebung des Gehäuses 3b abgegeben werden. Der Wärmeleitkörper ist bevorzugt hohlzylinderförmig, insbesondere kreishohlzylinderförmig, mit einem massiven Mantel ausgebildet und ist am mediumseitigen Ende vollständig geschlossen. Dies ermöglicht, die Messwertaufnehmereinheit, die im einfachsten Fall nur aus dem Messwertaufnehmer bestehen kann, am oder im Ende des Wärmeleitkörpers bzw. einer Wärmeleithülse anzubringen und die elektrischen Zuleitungen (Kabel) im Wärmeleitkörper zu führen. Dies ist besondern praktisch, da der möglichst dickwandige Wärmeleitkörper vorteilhafterweise über die Rückfront des Gehäuses hinaus geführt ist und damit kommt das Kabel weit entfernt vom heißen Medium oder heißen Teilen an die Oberfläche. Somit ist ein effektiver mechanischer und thermischer Schutz, vor allem Knickschutz, gegeben. Da ein Teil des Wärmeleitkörper bzw. der Wärmeleithülse nun Teil des erweiterten Gehäuses des Strömungsmesseinsatzes bzw. -gerätes ist, ist die Wärmeabführung durch die vergrößerte Wärmekapazität und Wärmeleitung besser, auch durch die langen, aber trotzdem relativ dünnen flexiblen Litze des Anschlusskabels, aber die Wärmeabführung durch Luftkonvektion und Wärmestrahlung ist vor allem durch die stark vergrößerte Oberfläche gut wärmeleitender Bereiche des Gerätes mit direktem Luftkontakt (Gehäuseoberflächen) verbessert, vor allem, weil die Wärmeabführung an die Umgebung im mediumsfernen Bereich des Gerätes erfolgt. Damit eignet sich die Erfindung für Hochtemperaturanwendungen, insbesondere von ca. 120 bis 200°C und darüber hinaus, wie sie beispielsweise bei Öl- oder Hochdruckwasser-Medien bei Temperiereinrichtungen von Ur- und Umformmaschinen auftreten können. Derartige Temperaturen in Richtung 200°C und darüber treten unter anderem beim Temperieren der Werkzeuge bzw. Werkzeughälften von Spitzgießmaschinen auf. Vorzugsweise besteht der Wärmeleitkörper, vor allem die Wärmeleithülse, aus Kupfer, vor allem aus einem hochreinen Kupfer mit einem Wärmeleitkoeffizient größer als 300 W/Km, und die thermische Isolatorhülse aus einem temperaturbeständigem Kunststoff, bevorzugt PPS, POM oder PEEK.

Die vierte Hauptvariante der Beschreibung betrifft ein mechatronischer Strömungsmesseinsatz (1), der für den Durchfluss und die Strömungsgeschwindigkeits- und/oder Strömungsvolumenmessung eines heißen Mediums geeignet ist. Er ist in bzw. an einem wärmebeständigen dreistutzigen Fluidgehäuse (3), insbesondere y-förmigen (3ay) oder Schrägsitzventil-Gehäuse (3as), und einem Grundkörper 401 mit mehreren Funktionsblöcken 401f befestigbar, insbesondere verschraubbar, ist. Erweist eine Messwertaufnehmereinheit 21 innerhalb einer Messeinheit 1c mit einem Gehäuse 3c auf. Diese Messwertaufnehmereinheit 21 kann die Strömungsgeschwindigkeit dieses Mediums ohne Mediumskontakt. Sie ist der Wärmebelastung durch das Medium nicht voll, aber zumindest teilweise ausgesetzt ist. Sie hat auch ein Hubkörpermodul 18, das im Betriebszustand Mediumkontakt hat und dessen Hubkörper 18a entsprechend der Strömungsgeschwindigkeit dieses Mediums ausgelenkt wird bzw. auslenkbar ist. Dieses Hubkörpermodul 18 trägt ein auf den Messwert dieser Messwertaufnehmereinheit 21 wirkendes Beeinflussungselement 20. Ein Teil dieser Hubkörpereinheit 18 selbst, wie das Verbindungselement 18b bzw. das Führungsrohr 18b1, kann dieses Beeinflussungselement 20 darstellen. Die Auslenkung des Hubkörpers 18a ist ein Maß für die Strömungsgeschwindigkeit. Der Strömungsmesseinsatz hat auch eine Ausgabeeinheit 300, die das Messsignal des Sensorelementes (21e) oder der Messwertaufnehmereinheit (21) (Sensorelement (21e) mit einer Vorverarbeitungselektronik), elektronisch verarbeitet. Sie stellt dieses normierte Messsignal für ein nachfolgendes Gerät oder Einrichtung, wie z.B. eine SPS, am Signalausgang 310 zur Verfügung, vorzugsweise am Kabel- oder Steckeranschluss 310a, z.B. einem Rundstecker. Die Ausgabeeinheit ist bezüglich der Messeinheit (1c) eine separate Ausgabeeinheit (300). Sie hat ein separates Gehäuse (330) und zumindest einen Signalausgang (310) in Form eines Kabel- oder Steckerausganges (310a). Sie weist auch eine Elektronikeinheit (320) auf, die über ein flexibles Kabel (200) mit der Messeinheit (1c) des Messeinsatzes (1) verbunden ist. Die Ausgabeeinheit (300) ist über ein mehradriges elektrisches flexibles Anschlusskabel (200) mit dem Messeinsatz (1c) verbunden. Die Kabelanschlüsse an beiden enden des Kabels sind fest bzw. ohne Anschlussraum mit der Messeinheit (1c) und der Ausgabeeinheit (300) verbunden. Die Ausgabeeinheit (300) ist ein zylinderförmiges Kunststoff-Gehäuse (330) ist, dessen ein- und ausgangsseitigen elektrischen Anschlüsse sich auf den beiden Stirnseiten befinden.

Die Ausgabeeinheit (300) übernimmt auch die Spannungsversorgung der Messwertaufnehmereinheit (21). Sie weist mindestens ein elektro-optisches Anzeigeelement, z.B. LED oder LCD, auf. Mindestens eine Anzeigeelement dient zur Schaltzustands-, Temperatur- und/oder Strömungsgrenzwertanzeige und/oder zur Betriebsspannungsanzeige. Die Ausgabeeinheit (300) hat ausgangsseitig einen Steckeranschluss (310), insbesondere einen Rundsteckeranschluss, z.B. einen M8- oderM12-Anschluß. Vorteilhaft, dass das flexible Anschlusskabel 200 der Ausgabeeinheit (300) nicht direkt in das Gehäuse (3b) der Messeinheit (1c) geht, z.B. über den Deckel (3b1) oder den Gehäusemantel (3b6), sondern über den, bzgl. des Gehäuses (3b) überstehenden wärmeleitenden Gehäuseteil (3b7), der zugleich äußerer Teil (7b) des Wärmeleitkörper (7) ist. Dadurch ist das Kabel in diesem Bereich gegen Beschädigung und/oder Hitze oder Medieneinfluss besser geschützt.

Auch konstruktiv bzw. funktionstechnilsch ist es sehr vorteilhaft, dass der Wärmeleitkörper (7) eine Wärmeleithülse (7a) ist, die zugleich Messaufnehmerhülse (7d) ist und mit dem Messaufnehmer (21) in wärmeleitendem Kontakt steht. Außerdem kann sie bei der Ausgestaltung mit Schraubgewinde zum verschrauben der drei Hülsen dienen (7a, 10, 3b6).

Die Litze des flexiblen Anschlusskabels (200) direkt mit den elektrischen Anschlüssen des Messaufnehmers (21) verbunden sind, um auch über die Litze eine größere Wärmeableitung zu ermöglichen.

Das mechatronisches Strömungsmessgerät (4) mit einem in einem Fluidgehäuse (3a) oder Gehäusekörper (401) befestigten, insbesondere eingeschraubten, derartigen Strömungsmesseinsatz (1) weist folgende Merkmale auf:
a) der Strömungsmesseinsatz (1) und/oder das Strömungsmessgerät (4) ist so gestaltet, dass das zu messende Fluid nicht am Hubkörper (18a) in Längsachsrichtung vorbeifließt bzw. vorbeifließen kann, wie es z.B. bei Schwebekörpern der Schwebekörper-Durchflußanzeiger oder der Schwebekörper-Durchflussmessgeräte der Fall ist, sondern im Bereich des Hubkörpers (18a) umgelenkt ist bzw. umlenkbar ist, so dass die Abströmrichtung des Fluides nach dem Passieren des Hubkörpers (18a) ungleich der Auslenkrichtung des Schiebeelementes (12) bzw. Hubkörpers (18a) ist.
b) das Fluidgehäuse (3a) Form hat ba) eines dreistutzigen (3a4), insbesondere y- oder T-förmigen Fluidgussgehäuses (3a, 3ay) mit zueinander koaxialen Ein- und Ausgangsstutzen (3a4e, 3a4a), oder
bb) eines quaderförmigen Mehrfachfluidgehäuses (3m) mit mehreren Funktionsblöcken, insbesondere eines einstückigen quaderförmigen Mehrfachfluidgehäuses (401) zur Aufnahme mehrerer, parallel angeordneter Strömungsmesseinsätze (1) oder
bc) eines quaderförmigen Einfachfluidgehäuses (401) mit einem Funktionsblock (401f), in dem ein oder mehrere Strömungsmesseinsätze (1) befestigt sind.

Das Gehäuse (3a, 401) des mechatronisches Strömungsmessgerätes 1 n mit einem Schrägsitzventil (19) und einem Schrägsitzventilgehäuse (3as) bzw. y-förmigen Fluidgehäuse (3ay), besteht im Wesentlichen aus dem fluidfernen Stutzen (3a4f) und dem Ventilsitz 3a2, 407, der mit dem Hubkörper 18 zusammenwirkt. 407), so dass bei strömendem Fluid das Ventil in Strömungsrichtung (2) geöffnet und aus einer Grundstellung heraus bewegt ist und bei nichtströmendem Fluid oder Strömung in Gegenrichtung geschlossen und in Grundstellung ist.

Der Strömungsmesseinsatz (1) und/oder das Strömungsmessgerät (4) sind besonders geeignet zur Verwendung als Durchflussmesser bzw. Strömungsüberwachungs- oder Strömungsmessvorrichtung (600) mit einem Gehäusekörper (401) bzw. Fluidgehäuse (3a) zur Messung und/oder Überwachung der Strömungsgeschwindigkeit eines fluidischen Heiz- und/oder Kühlmittels in einer Temperiervorrichtung (500) für das Formwerkzeug (520). Sie ist auch geeignet zur Temperierung der Formmasse einer Ur- oder Umformeinrichtung (520), insbesondere einer Spritzgießmaschine (520a) oder Spritzgießanlage oder in einer Thermoumformeinrichtung, insbesondere als Hochtemperatur-Strömungsmessgerät für die Formmassestromkühlung und/oder -heizung, z.B. für POM ((Polyoxymethylen, Polyacetal), für Fluidtemperaturen von größer als 150 Grad und/oder die Werkzeugkühlung und/oder -heizung für Fluidtemperaturen von größer als 80 bis 120 Grad.

Die fünfte Hauptvariante der Beschreibung betrifft einen mechatronischen Strömungsmesseinsatz (1), der für den Durchfluss und die Strömungsgeschwindigkeits- und/oder Strömungsvolumenmessung eines heißen Mediums geeignet ist. Er ist in bzw. an einem wärmebeständigen dreistutzigen Fluidgehäuse (3), insbesondere y-förmigen (3ay) oder Schrägsitzventil-Gehäuse (3as), und einem Grundkörper 401 mit mehreren Funktionsblöcken 401f befestigbar, insbesondere verschraubbar, ist. Er weist eine Messwertaufnehmereinheit 21 innerhalb einer Messeinheit 1c mit einem Gehäuse 3c auf. Diese Messwertaufnehmereinheit 21 kann die Strömungsgeschwindigkeit dieses Mediums ohne Mediumskontakt. Sie ist der Wärmebelastung durch das Medium nicht voll, aber zumindest teilweise ausgesetzt ist. Sie hat auch ein Hubkörpermodul 18, das im Betriebszustand Mediumkontakt hat und dessen Hubkörper 18a entsprechend der Strömungsgeschwindigkeit dieses Mediums ausgelenkt wird bzw. auslenkbar ist. Dieses Hubkörpermodul 18 trägt ein auf den Messwert dieser Messwertaufnehmereinheit 21 wirkendes Beeinflussungselement 20. Ein Teil dieser Hubkörpereinheit 18 selbst, wie das Verbindungselement 18b bzw. das Führungsrohr 18b1, kann dieses Beeinflussungselement 20 darstellen. Die Auslenkung des Hubkörpers 18a ist ein Maß für die Strömungsgeschwindigkeit. Der Strömungsmesseinsatz hat auch eine Ausgabeeinheit 300, die das Messsignal des Sensorelementes (21e) oder der Messwertaufnehmereinheit (21) (Sensorelement (21e) mit einer Vorverarbeitungselektronik), elektronisch verarbeitet. Sie stellt dieses normierte Messsignal für ein nachfolgendes Gerät oder Einrichtung, wie z.B. eine SPS, am Signalausgang 310 zur Verfügung, vorzugsweise am Kabel- oder Steckeranschluss 310a, z.B. einem Rundstecker. Erfindungsgemäß ist eine doppelwandige Wärmeleithülse (7a) mit mehreren Kammern 7k vorgesehen ist. Sie ist in die Führungshülse 10 mit einem niedrigeren Wärmeleitkoeffizienten einschraubbar. Sie hat eine äußeren Teil mit einer oder mehreren Kühlfluid-Kammern 7ka (und entsprechenden Kühlfluid-Anschlüssen für die Zirkulation eines Kühlfluides, insbesondere Wasser. In ihrem innerem Teil 7ki ist das Sensorelement (21e) bzw. die Messwertaufnehmereinheit (21) mit einem Anschlusskabel 200 angeordnet. Das Anschlußkabel (200) ragt aus der fluidfernen Seite der Wärmeleithülse (7a), z.B. im Bereich der Rückfront (3b5), heraus und ist somit leicht an eine Auswerteeinheit bzw. die Ausgabeeinheit 300 anschließbar. Die Wärmeleithülse 7a besteht aus einem hochwärmeleitfähigen Material besteht mit einem Wärmeleitkoeffizienten, der mindestens zehn Mal so groß ist als der der Führungshülse 10, aber mindestens 20 W/Km beträgt. Geeignet sind vor allem Messing, Kupfer, Messinglegierungen oder Kupferlegierungen. Sie haben einen Mindestwärmeleitkoeffizienten von 90 W/Km. Die Isoliereinheit (5) und/oder der Gehäusemantel (3b6) ist aus PPS (Polyphenylensulfid), POM (Polyoxymethylen, Polyacetal) oder PEEK (Polyetheretherketon), die bei guter Bearbeitkeit und Medienbeständigkeit einen ausreichend kleinen Wärmeleitkoeffizienten von kleiner 1 W/Km besitzen. Das Anschlusskabel 200 ist durchgängig flexibel und direkt mechanisch und elektrisch mit dem Sensorelement (21e) bzw. der Messwertaufnehmereinheit (21) verbunden, damit auch über die Litze eine gute wärmeableitung ohne "Bruchstellen" erfolgen kann. Als Sensorelement (21e) bzw. als Messwertaufnehmereinheit (21) sind induktive oder Magnet-Näherungssensoren überragend geeignet. Sie haben keinen Kontakt mit dem zu messenden Fluid, sondern sind zumindest durch die Wandung der Isoliereinheit (5) von diesem Fluid getrennt, vorzugsweise auch durch die Wandung der Wärmeleithülse (7a) von diesem Fluid.

Die Ausgabeeinheit (300) und die innerhalb der Ausgabeeinheit (300) angeordnete Elektronikeinheit (320) sind so gestaltet und angeordnet sind, dass
a) sie nicht in der Messeinheit (1c) des Strömungsmesseinsatzes (1) bzw. nicht in dessen Gehäuse (3b) angeordnet sind, sondern am Ende des über die Wärmeleithülse (7a) hinausgehenden Anschlusskabels (200)
b) und/oder dass das, durch die Elektronikeinheit erzeugte und mittels der Ausgabeeinheit (300) ausgegebene oder ausgebbare Signal ein Standardsignal ist, insbesondere ein binäres (Schaltsignal) oder analoges, lineares Signal, z.B. 0-10 V, 4-20 mA, ist,
c) und/oder dass die Ausgabeeinheit (300) auch optische Anzeigeelemente wie LEDs oder LCDs und/oder Einstellelemente wie Potentiometer, z.B. zur Einstellung des Schaltpunkte (Strömungsgrenzwerte u.a.) aufweist.

Das entsprechende mechatronisches Strömungsmessgerät (4) mit einem in einem Fluidgehäuse (3a) oder Gehäusekörper (401) befestigten, insbesondere eingeschraubten, Strömungsmesseinsatz (1) hat einen einen Hubkörper (18a), der strömungsgeschwindigkeitsabhängig durch ein Fluid auslenkbar ist bzw. ausgelenkt ist. Es hat folgende Merkmale:
a) der Strömungsmesseinsatz (1) und/oder das Strömungsmessgerät (4) so gestaltet ist, dass das zu messende Fluid nicht am Hubkörper (18a) in Längsachsrichtung vorbeifließt bzw. vorbeifließen kann, wie es z.B. bei Schwebekörpern der Schwebekörper-Durchflußanzeiger oder der Schwebekörper-Durchflussmessgeräte der Fall ist, sondern im Bereich des Hubkörpers (18a) umgelenkt ist bzw. umlenkbar ist, so dass die Abströmrichtung des Fluides nach dem Passieren des Hubkörpers (18a) ungleich der Auslenkrichtung des Schiebeelementes (12) bzw. Hubkörpers (18a) ist,
b) das Fluidgehäuse (3a) Form hat a) eines dreistutzigen (3a4), insbesondere y- oder T-förmigen Fluidgussgehäuses (3a, 3ay) mit zueinander koaxialen Ein- und Ausgangsstutzen (3a4e, 3a4a), oder
bb) eines quaderförmigen Mehrfachfluidgehäuses (3m) mit mehreren Funktionsblöcken, insbesondere eines einstückigen quaderförmigen Mehrfachfluidgehäuses (401) zur Aufnahme mehrerer, parallel angeordneter Strömungsmesseinsätze (1) oder
bc) eines quaderförmigen Einfachfluidgehäuses (401) mit einem Funktionsblock (401f), in dem ein oder mehrere Strömungsmesseinsätze (1) befestigt sind.

Vorteilhaft sind Strömungsmessgeräte (4) mit einem Schrägsitzventil (19) und einem Schrägsitzventilgehäuse (3as) bzw. y-förmigen Fluidgehäuse (3ay), wobei der fluidferne Meßstutzen 3a4f annähernd in Strömungsrichtung 2 zeigt, aber nicht gegen die Strömungsrichtung. Das Fluidgehäuse 3a besteht im Wesentlichen bestehend aus dem fluidfernen Stutzen (3a4f) und dem vorzugsweise integrierten Ventilsitz (3a2, 407), so dass das Ventil mit dem Hubkörper 18a bei strömendem Fluid in Strömungsrichtung (2) geöffnet und aus einer Grundstellung heraus bewegt ist und bei nichtströmendem Fluid oder Strömung in Gegenrichtung geschlossen und in Grundstellung ist.

Der Strömungsmesseinsatz (1) und/oder das Strömungsmessgerät (4) sind besonders geeignet zur Verwendung als Durchflussmesser bzw. Strömungsüberwachungs- oder Strömungsmessvorrichtung (600) mit einem Gehäusekörper (401) bzw. Fluidgehäuse (3a) zur Messung und/oder Überwachung der Strömungsgeschwindigkeit eines fluidischen Heiz- und/oder Kühlmittels in einer Temperiervorrichtung (500) für das Formwerkzeug (520). Sie ist auch geeignet zur Temperierung der Formmasse einer Ur- oder Umformeinrichtung (520), insbesondere einer Spritzgießmaschine (520a) oder Spritzgießanlage oder in einer Thermoumformeinrichtung, insbesondere als Hochtemperatur-Strömungsmessgerät für die Formmassestromkühlung und/oder -heizung, z.B. für POM ((Polyoxymethylen, Polyacetal), für Fluidtemperaturen von größer als 150 Grad und/oder die Werkzeugkühlung und/oder -heizung für Fluidtemperaturen von größer als 80 bis 120 Grad.

Die sechste Hauptvariante der Beschreibung betrifft einen Gehäusekörper (401) mit mindestens zwei Hubkörper-Ventilsitzen (407) je Funktionsblock 401f. Er ist für eine Strömungsüberwachungs- und/oder Strömungsmessvorrichtung mit einem mechatronischen Strömungsmesseinsatz (1) geeignet. Diese ist charakterisiert durch einen, das zu messende Fluid auslenkbaren Hubkörper (18a). Wesentlich ist die Strömungsumlenkung im Bereich des Hubkörpers (18a) bzw. Ventilsitzes (407), durch die genaue Messungen, hohe Temperaturbeständigkeit und eine geringe Hystere möglich sind. Besonders geeignet ist die Anordnung zur Strömungsüberwachung oder Strömungsgeschwindigkeits- oder Strömungsvolumenmessung heißer Fluide bei Ur- oder Umformeinrichtungen 520 . Der Gehäusekörper (401) hat wenigstens zwei, bezüglich der Gehäuselängsachse (z-Achse) des Gehäusekörpers (401) parallel angeordneten Funktionsblöcke (401f, 401f1, 401f2, 401fx 401fl) mit je einem Hubkörper-Ventilsitz (407),. Weitere Merkmale sind:
a) jeder Funktionsblock (401f, 401f1, 401f2, 401fx, 401fl) hat mindestens drei, aber nur in der x-y-Ebene und zueinander rechtwinklig angeordnete geradlinige Sacklöcher (405s),
b) das erste Sackloch (405s1) ist fluidtechnisch gesehen ein aktives Eingangskanalstück (405etk) des Eingangskanales (405e). Seine Sackloch-Öffnung (402) bildet auf der Oberfläche (404) den Einlass (402e) für die Fluidströmung.
c) das dritte Sackloch (405s3) ist ein aktives und zugleich das einzige Ausgangskanalstück (405atk), das den vollständigen Ausgangskanal (405a) bildet. Seine Sackloch-Öffnung (402) auf der Oberfläche (404) ist der der Auslass (402a) für die Fluidströmung im Strömungs- und Anschlußfall.
d) das zweite Sackloch (405s2) ist durch die Überschneidung mit dem dritten Sackloch 405s3 geteilt ist in das öffnungsseitige (402) Messgeräteinsatz-Kanalstück (405tss) und das öffnungsferne aktive Eingangskanalstück (405etk). Es ist zwischen beiden Ventilsitzen (407) angeordnet.
e) jeweils zwei Sacklöcher (405s) überlappen bzw. überschneiden sich zumindest partiell rechtwinklig. Sie ermöglichen so einen durchgehenden Kanal (402dk) aus zwei aktiven Eingangskanalstücken (405etk), dem Eingangskanal (405ek), und einem aktiven Ausgangskanalstück (405atk). Das Fluid kann bei eingesetztem (405tss) mechatronischen Strömungsmesseinsatz (1) nur vom Einlass (402e) über den Ventilsitz (407) und den Hubkörper (18a) zum Auslass (402a) fließen kann, sofern eine 100%-ige Ventilfunktion gegeben ist.

Gehäusekörper (401)und Ventilsitz (407) sind vorteilhafterweise einstückig ausgebildet. Dies kann in einfacher Weise durch eine Durchmesservergrößerung (Bohrung, Fräsung) des Messgeräteinsatz-Kanalstückes (405tss) gegenüber dem öffnungsfernen aktiven Eingangskanalstück (405etk) des zweiten Sackloches (405s2) erreicht werden. Der Gehäusekörper (401) kann weitere Sacklöcher (405ss) aufweisen, die als Sensorkanalteilstück (405ts) zur Aufnahme eines weiteren Sensors bzw. Sensorgerätes, z.B. eines Temperaturfühlers oder eines Drucksensors geeignet sind. Dieses weitere Sackloch (405ss) schneidet das dritte Sackloch (405) ebenfalls rechtwinklig.

Der Gehäusekörper (401) wird sehr stabil und robust, wenn er als einstückiges Gussteil ausgebildet is. Geeignet sind vor allem Buntmetall oder Buntmetall-Legierungen, insbesondere aus Messing. Sinnvollerweise sind die Öffnungen (402) mit Innengewinde (402g) zum leichten und fluiddichten, zuverlässigen Anschluß externer Teile und Einheiten..

Der Gehäusekörper (401) ist mit mindestens einem in z-Richtung verlaufenden Kühlkanal (405k) ausgestattet. Dieser ist der in der Nähe der Kanalteilstückes (405tss) für den Strömungsmesseinsatz (1) angeordnet ist. Er ermöglich noch höhere Fluidtemperaturen, da der Strömungsmesseinsatz dadurch noch besser gekühlt werden kann. Der Kühlkanal (405k) hat keine Kanal-Verbindung zu den Sacklöchern 1-3 hat (405s1, 405s2, 405s3).

Eine Strömungsüberwachungs- oder Strömungsmessvorrichtung (600) weist einen deratigen Gehäusekörper (1) auf. Sie hat mindestens, in der Öffnung (402ss) des Messgeräteinsatz-Kanalstückes (405tss) des Gehäusekörpers (1) fluiddicht befestigtem mechatronischen Strömungsmesseinsatz (1) mit einem durch das zu messende Fluid auslenkbaren Hubkörper (18a) und Strömungsumlenkung im Bereich des Hubkörpers (18a). Diese Einrichtung 600 ist insbesondere zur Strömungsüberwachung oder Strömungsgeschwindigkeits- oder Strömungsvolumenmessung heißer Medien mit Medientemperaturen von über 80 bis 200 Grad geeignet.

Der Gehäusekörpers (401) mit mindestens einem in das zweite Sackloch (405s2) jedes Funktionsblockes (401f) fluiddicht einsetzbaren oder eingesetzten Strömungsmesseinsatzes (1), insbesondere einem , ist zur Messung und/oder Überwachung der Strömungsgeschwindigkeit und/oder des Strömungsvolumens eines fluidischen Heiz- und/oder Kühlmittels in einer Spritzgießmaschine oder Spritzgießanlage oder in einer Thermoumformeinrichtung geeignet. Diese Zusammenstellung eignet sich besonders als Hochtemperatur-Strömungsmessgerät für die Formmassestromkühlung und/oder -heizung, z.B. für POM ((Polyoxymethylen, Polyacetal), für Fluidtemperaturen von größer als 150 Grad und/oder die Werkzeugkühlung und/oder -heizung für Fluidtemperaturen von größer als 80 bis 120 Grad.

Die sechste Hauptvariante der Beschreibung betrifft einen Gehäusekörper (401) mit mindestens zwei Hubkörper-Ventilsitzen (407) je Funktionsblock 401f. Er ist für eine Strömungsüberwachungs- und/oder Strömungsmessvorrichtung mit einem mechatronischen Strömungsmesseinsatz (1) geeignet. Diese ist charakterisiert durch einen, das zu messende Fluid auslenkbaren Hubkörper (18a). Wesentlich ist die Strömungsumlenkung im Bereich des Hubkörpers (18a) bzw. Ventilsitzes (407), durch die genaue Messungen, hohe Temperaturbeständigkeit und eine geringe Hystere möglich sind. Besonders geeignet ist die Anordnung zur Strömungsüberwachung oder Strömungsgeschwindigkeits- oder Strömungsvolumenmessung heißer Fluide bei Ur- oder Umformeinrichtungen 520 . Der Gehäusekörper (401) hat wenigstens zwei, bezüglich der Gehäuselängsachse (z-Achse) des Gehäusekörpers (401) parallel angeordneten Funktionsblöcke (401f, 401f1, 401f2, 401fx 401fl) mit je einem Hubkörper-Ventilsitz (407),. Weitere Merkmale sind:
a) jeder Funktionsblock (401f, 401f1, 401f2, 401fx, 401fl) hat mindestens drei, aber nur in der x-y-Ebene und zueinander rechtwinklig angeordnete geradlinige Sacklöcher (405s),
b) das erste Sackloch (405s1) ist fluidtechnisch gesehen ein aktives Eingangskanalstück (405etk) des Eingangskanales (405e). Seine Sackloch-Öffnung (402) bildet auf der Oberfläche (404) den Einlass (402e) für die Fluidströmung.
c) das dritte Sackloch (405s3) ist ein aktives und zugleich das einzige Ausgangskanalstück (405atk), das den vollständigen Ausgangskanal (405a) bildet. Seine Sackloch-Öffnung (402) auf der Oberfläche (404) ist der der Auslass (402a) für die Fluidströmung im Strömungs- und Anschlußfall.
d) das zweite Sackloch (405s2) ist durch die Überschneidung mit dem dritten Sackloch 405s3 geteilt ist in das öffnungsseitige (402) Messgeräteinsatz-Kanalstück (405tss) und das öffnungsferne aktive Eingangskanalstück (405etk). Es ist zwischen beiden Ventilsitzen (407) angeordnet.
e) jeweils zwei Sacklöcher (405s) überlappen bzw. überschneiden sich zumindest partiell rechtwinklig. Sie ermöglichen so einen durchgehenden Kanal (402dk) aus zwei aktiven Eingangskanalstücken (405etk), dem Eingangskanal (405ek), und einem aktiven Ausgangskanalstück (405atk). Das Fluid kann bei eingesetztem (405tss) mechatronischen Strömungsmesseinsatz (1) nur vom Einlass (402e) über den Ventilsitz (407) und den Hubkörper (18a) zum Auslass (402a) fließen kann, sofern eine 100%-ige Ventilfunktion gegeben ist.

Gehäusekörper (401)und Ventilsitz (407) sind vorteilhafterweise einstückig ausgebildet. Dies kann in einfacher Weise durch eine Durchmesservergrößerung (Bohrung, Fräsung) des Messgeräteinsatz-Kanalstückes (405tss) gegenüber dem öffnungsfernen aktiven Eingangskanalstück (405etk) des zweiten Sackloches (405s2) erreicht werden. Der Gehäusekörper (401) kann weitere Sacklöcher (405ss) aufweisen, die als Sensorkanalteilstück (405ts) zur Aufnahme eines weiteren Sensors bzw. Sensorgerätes, z.B. eines Temperaturfühlers oder eines Drucksensors geeignet sind. Dieses weitere Sackloch (405ss) schneidet das dritte Sackloch (405) ebenfalls rechtwinklig.

Der Gehäusekörper (401) wird sehr stabil und robust, wenn er als einstückiges Gussteil ausgebildet is. Geeignet sind vor allem Buntmetall oder Buntmetall-Legierungen, insbesondere aus Messing. Sinnvollerweise sind die Öffnungen (402) mit Innengewinde (402g) zum leichten und fluiddichten, zuverlässigen Anschluß externer Teile und Einheiten..

Der Gehäusekörper (401) ist mit mindestens einem in z-Richtung verlaufenden Kühlkanal (405k) ausgestattet. Dieser ist der in der Nähe der Kanalteilstückes (405tss) für den Strömungsmesseinsatz (1) angeordnet ist. Er ermöglich noch höhere Fluidtemperaturen, da der Strömungsmesseinsatz dadurch noch besser gekühlt werden kann. Der Kühlkanal (405k) hat keine Kanal-Verbindung zu den Sacklöchern 1-3 hat (405s1, 405s2, 405s3).

Eine Strömungsüberwachungs- oder Strömungsmessvorrichtung (600) weist einen deratigen Gehäusekörper (1) auf. Sie hat mindestens, in der Öffnung (402ss) des Messgeräteinsatz-Kanalstückes (405tss) des Gehäusekörpers (1) fluiddicht befestigtem mechatronischen Strömungsmesseinsatz (1) mit einem durch das zu messende Fluid auslenkbaren Hubkörper (18a) und Strömungsumlenkung im Bereich des Hubkörpers (18a). Diese Einrichtung 600 ist insbesondere zur Strömungsüberwachung oder Strömungsgeschwindigkeits- oder Strömungsvolumenmessung heißer Medien mit Medientemperaturen von über 80 bis 200 Grad geeignet.

Der Gehäusekörpers (401) mit mindestens einem in das zweite Sackloch (405s2) jedes Funktionsblockes (401f) fluiddicht einsetzbaren oder eingesetzten Strömungsmesseinsatzes (1), insbesondere einem , ist zur Messung und/oder Überwachung der Strömungsgeschwindigkeit und/oder des Strömungsvolumens eines fluidischen Heiz- und/oder Kühlmittels in einer Spritzgießmaschine oder Spritzgießanlage oder in einer Thermoumformeinrichtung geeignet. Diese Zusammenstellung eignet sich besonders als Hochtemperatur-Strömungsmessgerät für die Formmassestromkühlung und/oder -heizung, z.B. für POM ((Polyoxymethylen, Polyacetal), für Fluidtemperaturen von größer als 150 Grad und/oder die Werkzeugkühlung und/oder -heizung für Fluidtemperaturen von größer als 80 bis 120 Grad.

Die achte Hauptvariante der Beschreibung betrifft einen Gehäusekörper (401)
mit mindestens zwei Hubkörper-Ventilsitzen (407) je Funktionsblock 401f für eine Strömungsüberwachungs- und/oder Strömungsmessvorrichtung (600). Diese weist eine einen mechatronischen Strömungsmesseinsatz (1) mit einem Hubkörper (18a). Wesentlich ist die Strömungsumlenkung im Bereich des Hubkörpers (18a). Die Strömungsüberwachungs- und/oder Strömungsmessvorrichtung (600) ist besondere zur Strömungsüberwachung oder Strömungsgeschwindigkeits- oder Strömungsvolumenmessung heißer Medien geeignet. Der Gehäusekörper (401) weist wenigstens zwei, bezüglich der Gehäuselängsachse (z-Achse) des Gehäusekörpers (401) parallel angeordnete Funktionsblöcken (401f, 401f1, 401f2, 401fl) auf. Er hat folgende Merkmale:
a) jeder Funktionsblock (401f, 401f1, 401f2, 401fl) hat mindestens eine, als einen Einlass (402e) nutzbare Öffnung (402) mit einem Einlasskanal (405e) und mindestens zwei, als Auslässe (402a) nutzbare Öffnungen (402) mit einem Ausgangskanal (405a).
b) Jeder Funktionsblock (401f) ist dadurch charakterisiert, dass er genau einen, in einer Ebene (x-y-Ebene) verlaufenden Eingangskanal (405e) mit einem ersten Teilstück (405et1) in y-Richtung hat. Daran schließt sich im rechten Winkel ein zweites Teilstück (405et2) (in x-Richtung)an. Dieses mündet in ein in dieser x-y-Ebene verlaufendes erstes Teilstück (405at1) des Ausgangskanales (405a). das wiederum in ein zweites Teilstück (405at2) des Ausgangskanales (405a) mündet. Das zweite Teilstück (405at2) ist senkrecht zum erstes Teilstück (405at1) angeordnet ist. Es verläuft in z-Richtung, d.h. parallel zur Längsachse (z-Achse) des Gehäusekörper (401).
c) Jedes erste Teilstück (405at1) eines Ausgangskanales (405a), das in y-Richtung sich erstreckt, bzgl. der z-Richtung parallel zu einem gleichartigen Teilstück (405at1) eines anderes Ausgangskanales (405a) ausgerichtet ist, und jedes Teilstück (405et1) des Eingangskanales (405e), das in x- oder y-Richtung sich erstreckt, in z-Richtung parallel zu einem gleichartigen Teilstück (405et1) eines anderes Eingangskanales (405e) ausgerichtet ist.
d) Die Kanäle (405) und Kanalstücke (405at, 405et) benachbarter Funktionsblöcke (401f) innerhalb des Gehäusekörpers (1) sind nicht verbunden sind. Dd., es sind keine Funktionsblock-übergreifende (401f) Kanäle (405) und Kanalstücke (405at, 405et) in z-Richtung vorhanden.
e) Am Ende des zweiten Teilstückes eines Eingangskanales (405e) zumindest zweier Funktionsblöcke (401f), der zugleich der Anfang des dazugehörigen ersten Teilstückes des Ausgangskanales (405a) und der Beginn eines Kanalteilstückes (405tss) für die Aufnahme des mechatronischen Strömungsmesseinsatz (1) ist, ist genau ein Ventilsitz (407) je Funktionsblock (401f) für einen mechatronischen Strömungsmesseinsatz (1) mit einem Hubkörper (18a) und im Betriebfall Strömungsumlenkung im Bereich des Hubkörpers (18a) bzw. Ventilsitzes vorhanden ist. Außerdem ist eine Öffnung (402, 402s) im zweiten Kanalteilstück (405tss) des Eingangskanales (405e) zur druckdichten Befestigung dieses mechatronischen Strömungsmesseinsatzes (1) zum Erfassen der Geschwindigkeit des fluiden Mediums im Strömungsfall vorhanden. Dieses Kanalteilstücke (405tss) ist konzentrisch und im Durchmesser größer bezüglich der korrespondierenden zweiten Eingangskanalstücke (405et2) ausgebildet..

Der Gehäusekörper (401) ist einstückig ausgebildet ist. Vorzugsweise ist er aus einem Buntmetall, insbesondere Messing. Mindestens einer dieser Einlässe (402e), vorzugsweise alle, und/oder mindestens einer dieser Auslässe (402a), vorzugsweise alle, und/oder mindestens eine der Öffnungen (402ss) für die Befestigung eines mechatronischen Strömungsmesseinsatzes (1), vorzugsweise alle, weisen ein normiertes bzw. ein Standardgewinde (Zoll, metrisch) zum Anschluss von Gewinderohren, Gewindenippeln u.Ä. auf. Das zweite Teilstück (405at2) des Ausgangskanales mindestens eines Funktionsblockes (401f), dessen Längsachse in z-Richtung verläuft, ist konzentrisch bezüglich des zweiten Teilstückes (405at2) des Ausgangskanales (405a) seines benachbarten Funktionsblockes (401f) angeordnet ist. Dadurch ist dieses zweite Teilstück (405at2) gemeinsames Teilstück (405atg) ihrer Ausgangskanäle (5a). Vorteil ist, dass alle Funktionsblöcke (401f) identisch aufgebaut sind und/oder in z-Richtung anreihbar und/oder mit Öffnungen (402) mit Innengewinde (402g) versehen sind. Vorteilhaft ist auch, dass zumindest der Auslasskanal (405a) (ggf. auch der Einlasskanal (405e)) und zumindest ein Auslasskanal (405a) der in y- und z-Richtung gehenden Teilstücke (405at) der Auslasskanäle (405a) zumindest ein passives Teilstück (405atp) aufweist, das verschlossen ist. Dieses kann mit einem Temperaturfühler bzw. einem Temperaturmeßgerät oder einem Druckmessgerät oder einem Blindstopfen, insbesondere mit einem Gewindeblindstopfen versehen sein..

Eine vorteilhafte Ausbildung ist, dass ein passives Teilstück (405atp) des Ausgangskanales (405a) parallel zum aktiven Teilstück (405etk) des Eingangskanales (405e) verläuft, das direkt mit dem Einlaß (402e) verbunden ist. Der Gehäusekörper ist in quaderförmiger Ausführung leicht herstellbar und auch anreihbar mit anderen. Er weist eine Stufe (403) im Bereich einer Öffnung (402ss) für den mechatronischen Strömungsmesseinsatz (1) und/oder ebene und zueinander parallelen Stirnseiten (401s, 401sv, 401sh) sowie durchgehenden Löcher in z-Richtung hat, so dass mehrere Gehäusekörper (1) anreihbar und fluiddicht verschraubbar sind. Eine weitere Variante besteht darin, dass das dem Fluid-Einlaß (402e) nahe erste Teilstück (405et1) des Eingangskanales (405e) rechtwinklig angeordnet ist zum zweiten Teilstück (405et2). Dieses ist zugleich das Strömungsmesseinsatz-Kanalteilstück (405tss) mit der Öffnung (402ss) für die Befestigung des Strömungsmesseinsatz (1). Es ist rechtwinklig angeordnet ist zum letzten, gemeinsamen Teilstück (405atg) des zweiten Teilstückes (405at2) des Ausgangskanals (405a).

Eine Strömungsüberwachungs- oder Strömungsmessvorrichtung (600) hat einen der beschriebene Gehäusekörper (1) und mindestens einen, in der Öffnung (402ss) des Messgeräteinsatz-Kanalstückes (405tss) des Gehäusekörpers (1) fluiddicht befestigten mechatronischen Strömungsmesseinsatzes (1). Außerdem ist mit einn durch das zu messende Fluid auslenkbarer Hubkörper (18a) vorgesehen. Vorteilhaft ist die Strömungsumlenkung im Bereich des Hubkörpers (18a), insbesondere zur Strömungsüberwachung oder Strömungsgeschwindigkeits- oder Strömungsvolumenmessung heißer Medien.

Eine deratige Vorrichtung weist auch Gewinde-Öffnungen (402ss) im zweiten Sackloch 405s2. In diese ist mindestens ein erfindungemäßer mechatronischer Strömungsmesseinsatz (1) eingeschraubt. Dieser kanndie Strömungsgeschwindigkeit durch die Auslenkung eines Hubkörpers (18a) messen. Geeignet sind besonders induktive oder Magnet-Näherungsmessgeräte bzw. -Näherungsschalters.

Der Gehäusekörpers (401) mit mindestens einem in das zweite Sackloch (405s2) jedes Funktionsblockes (401f) fluiddicht einsetzbaren oder eingesetzten Strömungsmesseinsatzes (1), insbesondere einem , ist zur Messung und/oder Überwachung der Strömungsgeschwindigkeit und/oder des Strömungsvolumens eines fluidischen Heiz- und/oder Kühlmittels in einer Spritzgießmaschine oder Spritzgießanlage oder in einer Thermoumformeinrichtung geeignet. Diese Zusammenstellung eignet sich besonders als Hochtemperatur-Strömungsmessgerät für die Formmassestromkühlung und/oder -heizung, z.B. für POM ((Polyoxymethylen, Polyacetal), für Fluidtemperaturen von größer als 150 Grad und/oder die Werkzeugkühlung und/oder -heizung für Fluidtemperaturen von größer als 80 bis 120 Grad.

Die neunte Hauptvariante der Beschreibung betrifft einen Gehäusekörper (401)
mit mindestens zwei Hubkörper-Ventilsitzen (407) je Funktionsblock 401f für eine Strömungsüberwachungs- und/oder Strömungsmessvorrichtung (600). Diese weist eine einen mechatronischen Strömungsmesseinsatz (1) mit einem Hubkörper (18a). Wesentlich ist die Strömungsumlenkung im Bereich des Hubkörpers (18a). Die Strömungsüberwachungs- und/oder Strömungsmessvorrichtung (600) ist besondere zur Strömungsüberwachung oder Strömungsgeschwindigkeits- oder Strömungsvolumenmessung heißer Medien geeignet. Der Gehäusekörper (401) weist wenigstens zwei, bezüglich der Gehäuselängsachse (z-Achse) des Gehäusekörpers (401) parallel angeordnete Funktionsblöcken (401f, 401f1, 401f2, 401fl) auf.

Weitere Merkmale sind:
a) Jeder Funktionsblock (401f, 401f1, 401f2, 401fx, 401fl) weist mindestens drei, in der x-y-Ebene und zueinander rechtwinklig angeordnete und zu einem vom Fluid-Einlass (402e) bis zum Fluidauslass (402a) durchgehenden Kanal (405dk) miteinander verbundene geradlinige Sacklöcher (405s, 405s1, 405s2, 405s3).
b) Das erste Sackloch (405s1) ist fluidtechnisch gesehen keinen Sackkanal (405sk), sondern ein einen Durchgangskanalstück (405dks) bzw. ein aktives Eingangskanalstück (405etk) des Eingangskanales (405e). Dessen Sackloch-Öffnung (402) auf der Oberfläche (404) bildet den Einlass (402e) für die Fluidströmung.
c) Das dritte Sackloch (405s3) ist ein aktives und zugleich das erste Ausgangskanalstück (405atk) ist, das den Beginn des Ausgangskanales (405a) bildet.
d) Das zweite Sackloch (405s2) ist durch die rechtwinklige Überschneidung bzw. Durchdringung mit dem dritten Sackloch geteilt in das öffnungsseitige (402) Messgeräteinsatz-Kanalstück (405tss) und das öffnungsferne aktive Eingangskanalstück (405etk). Zwischen diesen beiden ist der Ventilsitz (407) angeordnet bzw. zu positionieren..
e) Es sind zwei in y-Richtung nebeneinander angeordnete Z-Löcher (Längsachse in Z-Richtung) in mindestens zwei Funktionsblöcken vorhanden. Sie sind als Durchgangslöcher (405d) oder Sacklöcher (405s) und als zweite Teilstücke (405at2) des Ausgangskanales (405a) ausgebildet sind. Sie münden sowohl direkt in den lokalen Auslass (402al) jedes dieser Funktionsblocke (401f) bzw. bilden diesen. Letztlich münden sie in den eigentlichen Auslass (402a) auf einer oder beiden Stirnseiten (401s, 401sv, 401sh). Im Falle der Ausbildung als Sackloch (405s) oder Sacklöcher (405s) gehen diese so tief, dass mindestens in zwei Funktionsblöcken (401f) je ein Durchgangskanal (405dk) zumindest in der x-y-Ebene vorhanden ist und diese Durchgangskanäle (405dk) durch die Durchgangslöcher in z-Richtung verbunden sind.
f) Jeweils zwei Sacklöcher (405s) überlappen bzw. überschneiden sich in jedem Funktionsblock zumindest partiell rechtwinklig. In Summe bilden sie einen durchgehenden Kanal (402dk) aus den zwei aktiven, zueinander rechtwinkligen Eingangskanalstücken (405etk, 405et1, 405et2), die den Eingangskanal (405ek) bilden, und dem ersten und weiteren aktiven Ausgangskanalstücken (405atk, 405at1, 405at2, 405at2z, 405at3z). Dabei verläuft das erste Ausgangskanalstück (405at1) in y-Richtung. Das Weitere verläuft in z- und in y-Richtung, wobei diejenigen in z-Richtung durch die zwei Sacklöcher (405s) in Z-Richtung gebildet sind.
g) Alle zweiten aktiven Ausgangskanalstücke (405atk, 405at2) bzw. z-Löcher (eines je Funktionsblock (401f)), die durch das dritte Sackloch (405s3) gebildet sind, koaxial hintereinander angeordnet sind. So sind bei eingesetzten (405tss) mechatronischen Strömungsmesseinsätzen (1) wahlweise in Abhängigkeit von der Verwendung und Anzahl der Blindstopfen o.Ä. mindestens drei verschiedene Betriebsmodi möglich:
g1) Die Auslässe (402ag) aller dritten Sacklöcher (405s3) auf der sensornahen Stirnseite (401sn) sind verschlossen. So können nur der gemeinsame Auslass (402ag) auf der vorderen oder hinteren Stirnseite (401 sv, 401 sh) oder auf beiden Stirnseiten (401 sv, 401 sh) aktiv sein.
g2) Die Auslässe (402ag) aller dritten Sacklöcher (405s3) auf der sensornahen Stirnseite (401 sn) sind offen und nur der gemeinsame Auslass (402ag) auf der vorderen und hinteren Stirnseite (401 sv, 401 sh) ist mit Blindstopfen o.Ä. verschlossen.
g3) Die Auslässe (402ag) aller dritten Sacklöcher (405s3) auf der sensornahen Stirnseite (401sn) sind offen und ebenso der gemeinsame Auslass (402ag) auf der vorderen und hinteren Stirnseite (401 sv, 401 sh). Der Gehäusekörper (401) weist einen Ventilsitz (407) auf, der vorzugsweise einstückig mit dem Gehäusekörper (401) ausgebildet ist. Durch Ausbildung als annähernd rechtwinklige Stufe ist der Ventilsitz 407 für Hubkörperlösungen mit T-förmigen Hubkörpern 18 gut geeignet. Er lßt sich leicht herstellen durch Durchmesservergrößerung des Messgeräteinsatz-Kanalstückes (405tss) gegenüber dem öffnungsfernen aktiven Eingangskanalstück (405etk) des zweiten Sackloches (405s2), vorzugsweise in Form eines Fräs- oder Bohrloches. Es ist ein weiteres Sackloch (405ss) als Sensorkanalteilstück (405ts) zur Aufnahme eines weiteren Sensors bzw. Sensorgerätes, z.B. eines Temperaturfühlers oder eines Drucksensors vorgesehen. Das weitere Sackloch (405ss) schneidet das dritte Sackloch (405) ebenfalls rechtwinklig. Ein als einstückiges Gussteil hergestellten Gehäusekörper (401) sehr sehr robust. Vorzugsweise ist er aus einem Buntmetall oder Buntmetall-Legierungen, insbesondere aus Messing. Mittels Öffnungen (402) mit Innengewinde (402g) sind fluiddichte Anschlüsse leicht herstellbar. Vorteilhaft ist auch mit mindestens einer, in z-Richtung verlaufender Kühlkanal (405k), der in der Nähe der Kanalteilstückes (405tss) für den Strömungsmesseinsatz (1) angeordnet ist, aber keine Kanal-Verbindung zu den Sacklöchern 1-3 hat (405s1, 405s2, 405s3) hat.

Die achte Hauptvariante der Beschreibung betrifft einen Gehäusekörper (401)

mit mindestens zwei Hubkörper-Ventilsitzen (407) je Funktionsblock 401f für eine Strömungsüberwachungs- und/oder Strömungsmessvorrichtung (600). Diese weist eine einen mechatronischen Strömungsmesseinsatz (1) mit einem Hubkörper (18a). Wesentlich ist die Strömungsumlenkung im Bereich des Hubkörpers (18a). Die Strömungsüberwachungs- und/oder Strömungsmessvorrichtung (600) ist besondere zur Strömungsüberwachung oder Strömungsgeschwindigkeits- oder Strömungsvolumenmessung heißer Medien geeignet. Der Gehäusekörper (401) weist wenigstens zwei, bezüglich der Gehäuselängsachse (z-Achse) des Gehäusekörpers (401) parallel angeordnete Funktionsblöcken (401f, 401f1, 401f2, 401fl) auf. Er hat genau einem, allen Funktionsblöcken (401f) gemeinsamen, in z-Richtung verlaufenden Eingangskanal (405e) und genau einen, allen Funktionsblöcken (401f) gemeinsamen, ebenfalls in z-Richtung verlaufenden Ausgangskanal (405a). Dieser ist in y-Richtung daneben angeordnet ist. Er hat folgende weitere Merkmale:
a) Der Eingangskanal (402e) und der Ausgangskanal (402a) ist ein Sackloch (405s) oder ein Durchgangsloch (405d),
b) Direkt zwischen dem Eingangskanal (405e) und dem Ausgangskanal (405a) ist keine Kanalverbindung (405) vorhanden ist,
c) Jeder Funktionsblock (401f, 401f1, 401f2, 401fx, 401fl) hat mehrere Durchgangskanalstücke (405dks) aufweist. Diese bilden einen Durchgangskanal (405dk) vom Einlass (402e) bis zum Auslass (402a).
d) Alle Fluid-Öffnungen (402) sind auf der sensornahen Schmalseite (401 sn) verschlossen, z.B. mit Blindstopfen,
e) Jeder Funktionsblock (401f, 401f1, 401f2, 401fx, 401fl) hat genau zwei, in der y-Richtung und ein in der x-Richtung verlaufende geradlinige Sacklöcher (405s, 405s1, 405s2, 405s3). Diese sind zueinander rechtwinklig oder parallel ausgerichtet. Zwei benachbarte Sacklöcher (405s) überschneiden bzw. überlappen einander zumindest partiell. Sie bilden so die Durchgangskanalstücke 3,4 und 5 (405dks3, 405dks4, 405dks5) und das fluidtechnisch passive Kanalstück (405tss) für den mechatronischen Strömungsmesseinsatz (1).
d) Jeder Funktionsblock (401f, 401f1, 401f2, 401fx, 401fl) weist in y-Richtung ein viertes Sackloch (405s4) an der sensorfernen Schmalseite (401sf) auf. Dieses überschneidet sich mit dem ersten Durchgangskanalstück (405dks1) in z-Richtung zumindest partiell, d.h. mit dem gemeinsamen aktiven Eingangskanal (405e, 405ek), nicht jedoch mit dem gemeinsamen Ausgangskanal (405atg, 405a, 405ak).

Gehäusekörper (401)und Ventilsitz (407) sind vorteilhafterweise einstückig ausgebildet. Dies kann in einfacher Weise durch eine Durchmesservergrößerung (Bohrung, Fräsung) des Messgeräteinsatz-Kanalstückes (405tss) gegenüber dem öffnungsfernen aktiven Eingangskanalstück (405etk) des zweiten Sackloches (405s2) erreicht werden. Der Gehäusekörper (401) kann weitere Sacklöcher (405ss) aufweisen, die als Sensorkanalteilstück (405ts) zur Aufnahme eines weiteren Sensors bzw. Sensorgerätes, z.B. eines Temperaturfühlers oder eines Drucksensors geeignet sind. Dieses weitere Sackloch (405ss) schneidet das dritte Sackloch (405) ebenfalls rechtwinklig.

Der Gehäusekörper (401) wird sehr stabil und robust, wenn er als einstückiges Gussteil ausgebildet ist. Geeignet sind vor allem Buntmetall oder Buntmetall-Legierungen, insbesondere aus Messing. Sinnvollerweise sind die Öffnungen (402) mit Innengewinde (402g) zum leichten und fluiddichten, zuverlässigen Anschluß externer Teile und Einheiten..

Der Gehäusekörper (401) ist mit mindestens einem in z-Richtung verlaufenden Kühlkanal (405k) ausgestattet. Dieser ist der in der Nähe der Kanalteilstückes (405tss) für den Strömungsmesseinsatz (1) angeordnet ist. Er ermöglich noch höhere Fluidtemperaturen, da der Strömungsmesseinsatz dadurch noch besser gekühlt werden kann. Der Kühlkanal (405k) hat keine Kanal-Verbindung zu den Sacklöchern 1-3 hat (405s1, 405s2, 405s3).

Eine Strömungsüberwachungs- oder Strömungsmessvorrichtung (600) weist einen deratigen Gehäusekörper (1) auf. Sie hat mindestens, in der Öffnung (402ss) des Messgeräteinsatz-Kanalstückes (405tss) des Gehäusekörpers (1) fluiddicht befestigtem mechatronischen Strömungsmesseinsatz (1) mit einem durch das zu messende Fluid auslenkbaren Hubkörper (18a) und Strömungsumlenkung im Bereich des Hubkörpers (18a). Diese Einrichtung 600 ist insbesondere zur Strömungsüberwachung oder Strömungsgeschwindigkeits- oder Strömungsvolumenmessung heißer Medien mit Medientemperaturen von über 80 bis 200 Grad geeignet.

Der Gehäusekörpers (401) mit mindestens einem in das zweite Sackloch (405s2) jedes Funktionsblockes (401f) fluiddicht einsetzbaren oder eingesetzten Strömungsmesseinsatzes (1), insbesondere einem , ist zur Messung und/oder Überwachung der Strömungsgeschwindigkeit und/oder des Strömungsvolumens eines fluidischen Heiz- und/oder Kühlmittels in einer Spritzgießmaschine oder Spritzgießanlage oder in einer Thermoumformeinrichtung geeignet. Diese Zusammenstellung eignet sich besonders als Hochtemperatur-Strömungsmessgerät für die Formmassestromkühlung und/oder -heizung, z.B. für POM ((Polyoxymethylen, Polyacetal),

Die elfte Hauptvariante der Beschreibung betrifft eine Temperiereinrichtung (500) einer Ur- oder Umformeinrichtung 520 mit
a) einem Temperiergerät 510. Dieses Temperiergerät (510) weist zumindest
aa) eine Pumpe zum Pumpen des Fluides in den ein- oder mehrkanaligen Zulauf des Formwerkzeuges (525), das auch eine Einrichtung (525e) zur Temperierung der Formmasse selbst sein kann,
ab) eine Temperaturänderungseinrichtung zum Heizen des Fluides und/oder zum Kühlen des Fluides sowie
ac) eine Temperaturregeleinrichtung für das zu pumpende Fluid auf.
sie weist weiterhin auf: b) ein zu temperierendes Formwerkzeug (525), insbesondere eine Spritz, Gieß- oder Thermoformwerkzeug. Das Formwerkzeug (525) hat mindestens einen Fluidkanal (580if).
c) mindestens einen Vorlaufkanal (580v,580ev) und mindestens einen Rücklaufkanal (580r, 580er),

In mindestens einem dieser Kanäle (580v,580ev, 580r, 580er) ist eine Strömungsüberwachungs- oder Strömungsmessvorrichtung (600) oder ein Strömungsmessgerät (4, 4m, 4me) angeordnet. Diese weisen einen mechatronischen Strömungsmesseinsatz (1) mit einem berührungslos arbeitenden Näherungssensorelement (21e), ein zugehöriges Fluidgehäuse (3a) bzw. Gehäusekörper (401) und einen durch die Fluidströmung auslenkbarem Hubkörper (18a) zur elektronischen Messung der Strömungsgeschwindigkeit und/oder der Strömungsänderung und/oder des Strömungsvolumens des temperierenden Fluides auf. Dieser Strömungsmesseinsatz (1) und/oder dessen zugehöriges Fluidgehäuse (3a, 3as, 3ay) bzw. Gehäusekörper (401) ist so gestaltet ist, dass das zu messende Fluid nicht am Hubkörper (18a) in dessen Längsachs- bzw. Auslenrichtungrichtung vorbeifließt bzw. vorbeifließen kann, wie es z.B. bei den Schwebekörpern der Schwebekörper-Durchflußanzeiger oder der Schwebekörper-Durchflussmessgeräte der Fall ist. Es ist bzw. wird im Bereich des Hubkörpers (18a) und/oder Ventilsitzes umgelenkt, so dass die Abströmrichtung des Fluides nach dem Passieren des Hubkörpers (18a) ungleich der Auslenkrichtung des Hubkörpers (18a) ist.

Besonders vorteilhaft ist die Verwendung eines induktiven oder Magnet-Näherungssensorelement (21e) und/oder eines induktiven oder Magnet-Näherungssensorgerät oder -schalters, da eine sehr geringe Hystere und hohe Empfindlichkeiten erreichbar sind.

Das metallische Guss-Fluidgehäuse (3a) ein dreistutziges, y-förmiges, wobei der Strömungsmesseinsatz (1) in den seitlichen, fluidfernen Stutzen (3a4f) eingeschraubt ist. Alternativ ist ein erfinduingsgemäßer Grundkörper 401 mit mindestens zwei Funktionsblöcken verwendbar.

für hohe Fluidtemperaturen ist ein mechatronischer Strömungsmesseinsatz (1) mit einer Wärmeleithülse (7a) mit einem hohen Wärmeleitkoeffizienten sinnvoll. Dieser ist in die Führungshülse 10 mit einem niedrigeren Wärmeleitkoeffizienten einschraubbar ist. In dieser ist das Sensorelement (21e) bzw. die Messwertaufnehmereinheit (21) mit einem Anschlusskabel 200 angeordnet sind. Das Anschlusskabel (200) mündet nicht in einer Steckerbuchse oder einem Stecker, die/der starr mit dem Gehäuse des Strömungsmesseinsatzes (1) verbunden bzw. in dieses eingesetzt ist, sondern ragt über die Wärmeleithülse (7) hinaus.

Die Temperiereinrichtung (500) ist vorteilhaft ausgebildet durch die Verwendung mindestens ein Regelventils (560). Dabei ist das zugeordnete Strömungsmessgerät (4) bzw. das Mehrfachströmungsmessgeärt (4m) bzw. die Strömungsüberwachungs- oder Strömungsmessvorrichtung (600) bezüglich des Regelventiles (560) in Richtung des Formwerkzeuges (525) angeordnet.

Weitere erfinderische Lösungsvarianten und bevorzugte erfinderische Untervarianten sind nachfolgend beschrieben:
10. Mechatronischer Strömungsmesseinsatz (1), der für den Durchfluss und die Strömungsgeschwindigkeits- und/oder Strömungsvolumenmessung eines heißen Mediums geeignet ist und der in bzw. an einem wärmebeständigen dreistutzigen Fluidgehäuse (3), insbesondere y-förmigen (3ay) oder Schrägsitzventil-Gehäuse (3as), befestigbar, insbesondere verschraubbar, ist, aufweisend eine Messwertaufnehmereinheit 21 innerhalb einer Messeinheit 1c mit einem Gehäuse 3c, die die Strömungsgeschwindigkeit dieses Mediums ohne Mediumskontakt messen kann und die der Wärmebelastung durch das Medium nicht voll, aber zumindest teilweise ausgesetzt ist, weiterhin aufweisend ein Hubkörpermodul 18, das im Betriebszustand Mediumkontakt hat und dessen Hubkörper 18a entsprechend der Strömungsgeschwindigkeit dieses Mediums ausgelenkt wird, wobei dieses Hubkörpermodul 18 ein auf den Messwert dieser Messwertaufnehmereinheit 21 wirkendes Beeinflussungselement 20 trägt oder ein Teil dieser Hubkörpereinheit 18 dieses Beeinflussungselement 20 selber darstellt und wobei die Auslenkung des Hubkörpers 18a ein Maß für die Strömungsgeschwindigkeit ist, aufweisend eine Ausgabeeinheit 300, die das Signal des Sensorelementes (21e) oder der Messwertaufnehmereinheit (21) (Sensorelement (21e) mit einer Vorverarbeitungselektronik), elektronisch verarbeitet und für ein nachfolgendes Gerät oder Einrichtung, wie z.B. eine SPS, am Signalausgang 310 des Strömungsmesseinsatzes 1, vorzugsweise am Kabel- oder Steckeranschluss 310a, z.B. einem Rundstecker, bereitstellt oder bereitstellen kann, dadurch gekennzeichnet, dass zwischen dieser Messwertaufnehmereinheit (21) und dem Medium sich eine Isoliereinheit (5) mit einer Führungshülse (10) mit einem geringen Wärmeleitkoeffizienten befindet und dass
   diese Messwertaufnehmereinheit (21) thermisch mit einem Wärmeleitkörper (7, 7a) gekoppelt ist, dessen äußerer Teil (7b, 3b7, 3b1), zumindest ein Teil davon, Bestandteil der Außenseite dieses Gehäuses (3b) dieses Strömungsmesseinsatzes (1) ist, und der einen mindestens um den Faktor 50 höheren Wärmeleitkoeffizienten als die Isoliereinheit (5) aufweist, so dass im Betriebsfall Fluidwärme, die zu dieser Messwertaufnehmereinheit (21) gelangt, in den Wärmeleitkörper (7, 7a) einschließlich eines oder mehrerer seiner äußeren Teile (7b, 3b7, 3b1) abgeleitet und zumindest von einem dieser äußeren Teile (7b, 3b7, 3b1) die Mediumswärme an die Umgebungsluft des Gehäuses (3b) bzw. der Messeinheit (1c) abgegeben ist bzw. wird.
11. Strömungsmesseinsatz nach Absatz 10 dadurch gekennzeichnet, dass die Messwertaufnehmereinheit (21) einen induktives oder Magnet-Sensorelement (21e) oder eine Messwertaufnehmereinheit (21) mit einem induktiven oder Magnet-Sensorelement (21e) aufweist, die das Sensorelement (21e) bzw. die Messwertaufnehmereinheit (21) sich im Wärmeleitkörper (7, 7a) befindet, der mediumsseitig geschlossen ist und das Beeinflussungselement (20) für das Sensorelement (21e) sich im oder auf dem Hubkörper (18a) oder dem Hubkörpermodul (18) befindet.
12. Strömungsmesseinsatz nach einem der vorhergehenden Absätze dadurch gekennzeichnet, daß die Isoliereinheit (5) eine Führungshülse (10) aus Kunststoff mit einem geringen Wärmeleitkoeffizienten und mit Gewinde (10a) ist, die in den mit einem Außengewinde (3b6a) versehenen Gehäusemantel (3b6) des Strömungsmesseinsatzes (1) eingeschraubt ist und in diese Führungshülse (10) der Wärmeleitkörper (7) in Form einer Wärmeleithülse (7a) eingeschraubt ist.
13. Strömungsmesseinsatz 1 nach einem der vorhergehenden Absätze dadurch gekennzeichnet, dass der Wärmeleitkörper (7) eine einstückige Wärmeleithülse (7a) aus einem hochleitfähigen Material wie hochreinem Kupfer ist, in deren Innenraum die Anschlussleitungen für diese Messwertaufnehmereinheit (21) geführt sind und dass diese Messwertaufnehmereinheit (21) im vorderen Ende der Wärmeleithülse (7a) angeordnet ist.
14. Strömungsmesseinsatz 1 nach einem der vorhergehenden Absätze dadurch gekennzeichnet, dass das Strömungsmesseinsatz 1 auf der Rückfront (3b5) mit einem gut wärmeleitfähigem Deckel (3b1),insbesondere metallischem Deckel (3b1) versehen ist, der zugleich Kontermutter und äußerer Teil (7b) des Wärmeleitkörpers (7) ist und somit durch Kraftschluss die Wärmeleithülse (7a) bezüglich des Gehäuses (3b) fixiert ist und durch die berührenden Gewinde (3b6i, 7a2a) und die Konterung auch ein guten Wärmeübergang vom inneren (7c) zum äußeren (7b) Teil des Wärmeleitkörpers (7) sichergestellt ist.
15. Strömungsmesseinsatz 1 nach einem der vorhergehenden Absätze dadurch gekennzeichnet, dass es im wesentlichen aus drei ineinander geschraubten und einander in Längsrichtung überlappenden koaxialen Hülsen in Form des Gehäusemantels (3b6), der Führungshülse (10) und der Wärmeleithülse (7a) mit zumindest je einem Außengewinde (10a, 3b6a, 7a2) besteht, wobei die äußere Hülse der Gehäusemantel (3b6) ist, der mittels des Außengewindes (3b6a) in das Mediumgehäuse (3a) einschraubbar und befestigbar ist und die mittlere, einseitig, d.h. mediumsseitig geschlossene Hülse, d.h. die Führungshülse (10), der Hauptbestandteil der Isoliereinheit (5) ist und aus thermisch schlecht leitendem Material, insbesondere Kunststoff, vorzugsweise PEEK oder PPS, besteht.
16. Strömungsmesseinsatz 1 nach einem der vorhergehenden Absätze dadurch gekennzeichnet, dass die äußere Hülse, d.h. der Gehäusemantel (3b6) zumindest teilweise aus einem schlecht leitenden Material, insbesondere POM, PPS oder PEEK, besteht, so dass Mediumswärme nicht bzw. in sehr geringem Maße über den messgerätseitigen Gewindeanschluss (3a3) bzw. den messgerätseitigen Stutzen (3a4) in den Gehäusemantel (3b6) und hierüber zur Messfühlereinheit (1c) und/oder zum Wärmeleitkörper (7) bzw. zur Wärmeleithülse (7a) gelangen kann.
17. Strömungsmesseinsatz 1 nach einem der vorhergehenden Absätze dadurch gekennzeichnet, dass die Ausgabeeinheit mit integrierter Elektronik (320) zur Ausgabe eines Standardsignales über Kabel oder Stecker (310), z.B. 4-20 mA, 0-10V, analog, Schaltsignal usw., in einem separaten Gehäuse (3c) außerhalb der Messeinheit (1c) angeordnet ist und über ein flexibles elektrisches Kabel mit der Messwertaufnehmereinheit (21) bzw. Messeinheit (1c) verbunden ist.
18. Mechatronisches Strömungsmessgerät (4) mit einem in einem Fluidgehäuse (3a) oder Gehäusekörper (401) befestigten, insbesondere eingeschraubten Strömungsmesseinsatz (1) nach einem der vorhergehenden Absätze mit einem Hubkörper (18a), der strömungsgeschwindigkeitsabhängig durch ein Fluid auslenkbar ist bzw. ausgelenkt ist, wobei
   a) der Strömungsmesseinsatz (1) und/oder das Strömungsmessgerät (4) so gestaltet ist, dass das zu messende Fluid nicht am Hubkörper (18a) in Längsachsrichtung vorbeifließt bzw. vorbeifließen kann, wie es z.B. bei Schwebekörpern der Schwebekörper-Durchflußanzeiger oder der Schwebekörper-Durchflussmessgeräte der Fall ist, sondern im Bereich des Hubkörpers (18a) umgelenkt ist bzw. umlenkbar ist, so dass die Abströmrichtung des Fluides nach dem Passieren des Hubkörpers (18a) ungleich der Auslenkrichtung des Schiebeelementes (12) bzw. Hubkörpers (18a) ist,
   b) das Fluidgehäuse (3a) Form hat a) eines dreistutzigen (3a4), insbesondere y- oder T-förmigen Fluidgussgehäuses (3a, 3ay) mit zueinander koaxialen Ein- und Ausgangsstutzen (3a4e, 3a4a), oder b) eines quaderförmigen Mehrfachfluidgehäuses (3m) mit mehreren Funktionsblöcken, insbesondere eines einstückigen quaderförmigen Mehrfachfluidgehäuses (401) zur Aufnahme mehrerer, parallel angeordneter Strömungsmesseinsätze (1) oder
   c) eines quaderförmigen Einfachfluidgehäuses (401) mit einem Funktionsblock (401f), in dem ein oder mehrere Strömungsmesseinsätze (1) befestigt sind.
19. Mechatronisches Strömungsmessgerät nach Absatz 18 mit einem Schrägsitzventil (19) und einem Schrägsitzventilgehäuse (3as) bzw. y-förmigen Fluidgehäuse (3ay), im Wesentlichen bestehend aus dem Hubkörper (18a), dem fluidfernen Stutzen (3a4f) und dem Ventilsitz (3a2, 407) dass bei strömendem Fluid in Strömungsrichtung (2) geöffnet und aus einer Grundstellung heraus bewegt ist und bei nichtströmendem Fluid oder Strömung in Gegenrichtung geschlossen und in Grundstellung ist.
20. Verwendung eines mechatronischen Strömungsmessgerätes (4) und/oder eines Strömungsmesseinsatzes (1) nach einem der vorhergehenden Absätze als Durchflussmesser bzw. Strömungsüberwachungs- oder Strömungsmessvorrichtung (600) mit einem Gehäusekörper (401) bzw. Fluidgehäuse (3a) zur Messung und/oder Überwachung der Strömungsgeschwindigkeit eines fluidischen Heiz- und/oder Kühlmittels in einer Temperiervorrichtung (500) für das Formwerkzeug (520) und/oder die Formmasse einer Ur- oder Umformeinrichtung (520), insbesondere einer Spritzgießmaschine (520a) oder Spritzgießanlage oder in einer Thermoumformeinrichtung, insbesondere als Hochtemperatur-Strömungsmessgerät für die Formmassestromkühlung und/oder -heizung, z.B. für POM ((Polyoxymethylen, Polyacetal), für Fluidtemperaturen von größer als 150 Grad und/oder die Werkzeugkühlung und/oder -heizung für Fluidtemperaturen von größer als 80 bis 120 Grad.
21. Mechatronischer Strömungsmesseinsatz, der für den Durchfluss und die Strömungsgeschwindigkeits- und/oder Strömungsvolumenmessung eines heißen Mediums geeignet ist und der in bzw. an einem wärmebeständigen dreistutzigen Fluidgehäuse (3), insbesondere y-förmigen (3ay) oder Schrägsitzventil-Gehäuse (3as), befestigbar, insbesondere verschraubbar, ist, aufweisend eine Messwertaufnehmereinheit 21 innerhalb einer Messeinheit 1c mit einem Gehäuse 3c, die die Strömungsgeschwindigkeit dieses Mediums ohne Mediumskontakt messen kann und die der Wärmebelastung durch das Medium nicht voll, aber zumindest teilweise ausgesetzt ist, weiterhin aufweisend ein Hubkörpermodul 18, das im Betriebszustand Mediumkontakt hat und dessen Hubkörper 18a entsprechend der Strömungsgeschwindigkeit dieses Mediums ausgelenkt wird, wobei dieses Hubkörpermodul 18 ein auf den Messwert dieser Messwertaufnehmereinheit 21 wirkendes Beeinflussungselement 20 trägt oder ein Teil dieser Hubkörpereinheit 18 dieses Beeinflussungselement 20 selber darstellt und wobei die Auslenkung des Hubkörpers 18a ein Maß für die Strömungsgeschwindigkeit ist, aufweisend eine Ausgabeeinheit 300, die das Signal des Sensorelementes (21e) oder der Messwertaufnehmereinheit (21) (Sensorelement (21e) mit einer Vorverarbeitungselektronik), elektronisch verarbeitet und für ein nachfolgendes Gerät oder Einrichtung, wie z.B. eine SPS, am Signalausgang 310 des Strömungsmesseinsatzes 1, vorzugsweise am Kabel- oder Steckeranschluss 310a, z.B. einem Rundstecker, bereitstellt oder bereitstellen kann, dadurch gekennzeichnet, dass der Strömungsmesseinsatz (1) im Bereich der Messwertaufnehmereinheit (21) aus drei ineinander geschraubten, einander überlappenden Hülsen (3b6, 10, 7a) besteht, wobei erstens, die äußere Hülse der Gehäusemantel (3b6) ist, der mediumsseitig offen und in dem Mediummodul mediumsdicht befestigbar ist, zweitens, die mittlere Hülse die Führungshülse (10) ist, die mediumsseitig verschlossen und mit der ersten Hülse verschraubt ist (3b6i, 10a), drittens, die innere Hülse die Messaufnehmerhülse (7d) ist, die an oder in ihrer mediumsseitiger Spitze die Messaufnehmereinheit (21) trägt und die in die mittlere Hülse, d.h. die Führungshülse (10), eingeschraubt ist (10a, 7a2a).
22. Strömungsmesseinsatz nach Absatz 21 dadurch gekennzeichnet, dass die Führungshülse (10) länger ist als die beiden anderen Hülsen, d.h., länger als der Gehäusemantel (3b6) und die Messaufnehmerhülse (7d)
23. Strömungsmesseinsatz nach einem der vorhergehenden Absätze dadurch gekennzeichnet, dass durch die Führungshülse (10) ein flexibles Anschlusskabel (200) mit mehreren Adern in Form von Kupferlitzen verläuft und diese Kupferlitze direkt mit den elektrischen Anschlüssen der Messaufnehmereinheit (21) kontaktiert bzw. verlötet sind.
24. Strömungsmesseinsatz nach einem der vorhergehenden Absätze dadurch gekennzeichnet, dass die Führungshülse (10) aus thermisch isolierendem Material besteht, vorzugsweise aus temperaturbeständigem Material wie PEEK oder PPS.
25. Strömungsmesseinsatz nach einem der vorhergehenden Absätze dadurch gekennzeichnet, dass die äußerer Hülse (Gehäusemantel 3b6) neben dem Innengewinde (3b6i) am mediumsseitigen Ende ein Außengewinde (3b6a) sowie in Längsachsrichtung darüberliegende Schlüsselangriffsflächen aufweist.
26. Strömungsmesseinsatz nach Absatz 22 dadurch gekennzeichnet, dass die Messaufnehmereinheit (21) thermisch mit der Messaufnehmerhülse (7d) gekoppelt ist, dass die Messaufnehmerhülse (7d) aus thermisch gut leitendem Material, vorzugsweise Kupfer, besteht, dass sie eine Wärmeleithülse (7a) darstellt, die einen äußeren Teil (7b) aufweist, der über die Rückfront (3b5) der Messeinheit (1c) hinausreicht, so dass Mediumswärme, die zu dieser Messwertaufnehmereinheit (21) gelangt, in den Wärmeleitkörper (7) in Form der Wärmeleithülse (7a) einschließlich eines oder mehrerer seiner äußeren Teile (7b, 3b7, 3b1) abgeleitet und zumindest von einem dieser äußeren Teile (7b, 3b7, 3b1) die Mediumswärme an die Umgebung des Gehäuses (3b) abgegeben wird.
27. Strömungsmesseinsatz nach Absatz 23 dadurch gekennzeichnet, dass eine vierte Hülse (3b1, 3b7, 7d) mit guter thermischer Leitfähigkeit, die als Deckel (3b1) bzw. Rückfront (3b5) der Messeinheit dient, mit der Messaufnehmerhülse (7d) verschraubt ist und so zur Temperaturreduzierung der Messaufnehmereinheit (21) beiträgt.
28. Strömungsmesseinsatz nach einem der vorhergehenden Absätze dadurch gekennzeichnet, dass die Ausgabeeinheit (300) in einem separaten Gehäuse (330) angeordnet ist, dass über ein flexibles elektrisches Kabel (200) mit der Messeinheit (1c) bzw der Messaufnehmereinheit (21) verbunden ist.
29. Mechatronisches Strömungsmessgerät (4) mit einem in einem Fluidgehäuse (3a) oder Gehäusekörper (401) befestigten, insbesondere eingeschraubten Strömungsmesseinsatz (1) nach einem der vorhergehenden Absätze mit einem Hubkörper (18a), der strömungsgeschwindigkeitsabhängig durch ein Fluid auslenkbar ist bzw. ausgelenkt ist, wobei
   a) der Strömungsmesseinsatz (1) und/oder das Strömungsmessgerät (4) so gestaltet ist, dass das zu messende Fluid nicht am Hubkörper (18a) in Längsachsrichtung vorbeifließt bzw. vorbeifließen kann, wie es z.B. bei Schwebekörpern der Schwebekörper-Durchflußanzeiger oder der Schwebekörper-Durchflussmessgeräte der Fall ist, sondern im Bereich des Hubkörpers (18a) umgelenkt ist bzw. umlenkbar ist, so dass die Abströmrichtung des Fluides nach dem Passieren des Hubkörpers (18a) ungleich der Auslenkrichtung des Schiebeelementes (12) bzw. Hubkörpers (18a) ist,
   b) das Fluidgehäuse (3a) Form hat a) eines dreistutzigen (3a4), insbesondere y- oder T-förmigen Fluidgussgehäuses (3a, 3ay) mit zueinander koaxialen Ein- und Ausgangsstutzen (3a4e, 3a4a), oder b) eines quaderförmigen Mehrfachfluidgehäuses (3m) mit mehreren Funktionsblöcken, insbesondere eines einstückigen quaderförmigen Mehrfachfluidgehäuses (401) zur Aufnahme mehrerer, parallel angeordneter Strömungsmesseinsätze (1) oder
   c) eines quaderförmigen Einfachfluidgehäuses (401) mit einem Funktionsblock (401f), in dem ein oder mehrere Strömungsmesseinsätze (1) befestigt sind.
30. Mechatronisches Strömungsmessgerät nach Absatz 29 mit einem Schrägsitzventil (19) und einem Schrägsitzventilgehäuse (3as) bzw. y-förmigen Fluidgehäuse (3ay), im Wesentlichen bestehend aus dem Hubkörper (18a), dem fluidfernen Stutzen (3a4f) und dem Ventilsitz (3a2, 407) dass bei strömendem Fluid in Strömungsrichtung (2) geöffnet und aus einer Grundstellung heraus bewegt ist und bei nichtströmendem Fluid oder Strömung in Gegenrichtung geschlossen und in Grundstellung ist.
31. Verwendung eines mechatronischen Strömungsmessgerätes (4) und/oder eines Strömungsmesseinsatzes (1) nach einem der vorhergehenden Absätze als Durchflussmesser bzw. Strömungsüberwachungs- oder Strömungsmessvorrichtung (600) mit einem Gehäusekörper (401) bzw. Fluidgehäuse (3a) zur Messung und/oder Überwachung der Strömungsgeschwindigkeit eines fluidischen Heiz- und/oder Kühlmittels in einer Temperiervorrichtung (500) für das Formwerkzeug (520) und/oder die Formmasse einer Ur- oder Umformeinrichtung (520), insbesondere einer Spritzgießmaschine (520a) oder Spritzgießanlage oder in einer Thermoumformeinrichtung, insbesondere als Hochtemperatur-Strömungsmessgerät für die Formmassestromkühlung und/oder -heizung, z.B. für POM ((Polyoxymethylen, Polyacetal), für Fluidtemperaturen von größer als 150 Grad und/oder die Werkzeugkühlung und/oder -heizung für Fluidtemperaturen von größer als 80 bis 120 Grad.
32. Mechatronischer Strömungsmesseinsatz (1), der für den Durchfluss und die Strömungsgeschwindigkeits- und/oder Strömungsvolumenmessung eines heißen Mediums geeignet ist und der in bzw. an einem wärmebeständigen dreistutzigen Fluidgehäuse (3), insbesondere y-förmigen (3ay) oder Schrägsitzventil-Gehäuse (3as), befestigbar, insbesondere verschraubbar, ist, aufweisend eine Messwertaufnehmereinheit 21 innerhalb einer Messeinheit 1c mit einem Gehäuse 3c, die die Strömungsgeschwindigkeit dieses Mediums ohne Mediumskontakt messen kann und die der Wärmebelastung durch das Medium nicht voll, aber zumindest teilweise ausgesetzt ist, weiterhin aufweisend ein Hubkörpermodul 18, das im Betriebszustand Mediumkontakt hat und dessen Hubkörper 18a entsprechend der Strömungsgeschwindigkeit dieses Mediums ausgelenkt wird, wobei dieses Hubkörpermodul 18 ein auf den Messwert dieser Messwertaufnehmereinheit 21 wirkendes Beeinflussungselement 20 trägt oder ein Teil dieser Hubkörpereinheit 18 dieses Beeinflussungselement 20 selber darstellt und wobei die Auslenkung des Hubkörpers 18a ein Maß für die Strömungsgeschwindigkeit ist, aufweisend eine Ausgabeeinheit 300, die das Signal des Sensorelementes (21e) oder der Messwertaufnehmereinheit (21) (Sensorelement (21e) mit einer Vorverarbeitungselektronik), elektronisch verarbeitet und für ein nachfolgendes Gerät oder Einrichtung, wie z.B. eine SPS, am Signalausgang 310 des Strömungsmesseinsatzes 1, vorzugsweise am Kabel- oder Steckeranschluss 310a, z.B. einem Rundstecker, bereitstellt oder bereitstellen kann, dadurch gekennzeichnet, dass die Ausgabeeinheit bezüglich der Messeinheit (1c) eine separate Ausgabeeinheit (300) mit einem separaten Gehäuse (330) und zumindest mit einem Signalausgang (310) in Form eines Kabel- oder Steckerausganges (310a) und mit einer Elektronikeinheit (320) ist, die über ein flexibles Kabel (200) mit der Messeinheit (1c) des Messeinsatzes (1) verbunden ist.
33. Strömungsmesseinsatz nach Absatz 32 dadurch gekennzeichnet, dass die Ausgabeeinheit (300) über ein mehradriges elektrisches flexibles Anschlusskabel (200) mit dem Messeinsatz (1c) verbunden ist und die Kabelanschlüsse auf beiden Seiten fest bzw. ohne Anschlussraum mit der Messeinheit (1c) und der Ausgabeeinheit (300) verbunden sind.
34. Strömungsmesseinsatz nach einem der vorhergehenden Absätze dadurch gekennzeichnet, dass die Ausgabeeinheit (300) ein zylinderförmiges Kunststoff-Gehäuse (330) ist und die ein- und ausgangsseitigen elektrischen Anschlüsse sich auf den Stirnseiten befinden.
35. Strömungsmesseinsatz nach einem der vorhergehenden Absätze dadurch gekennzeichnet, dass die Ausgabeeinheit (300) auch die Spannungsversorgung der Messwertaufnehmereinheit (21) übernimmt und/oder dass die Ausgabeeinheit (300) mindestens ein elektro-optisches Anzeigeelement, z.B. LED oder LCD, aufweist.
36. Strömungsmesseinsatz nach dem vorhergehenden Absatz dadurch gekennzeichnet, dass das mindestens eine Anzeigeelement zur Schaltzustands-, Temperatur- und/oder Strömungsgrenzwertanzeige und/oder zur Betriebsspannungsanzeige dient.
37. Strömungsmesseinsatz nach einem der vorhergehenden Absätze dadurch gekennzeichnet, dass die Ausgabeeinheit (300) ausgangsseitig einen Steckeranschluss (310) aufweist, insbesondere einen Rundsteckeranschluss, z.B. einen M8- oderM12-Anschluß.
38. Strömungsmesseinsatz nach einem der vorhergehenden Absätze dadurch gekennzeichnet, dass das flexible Anschlusskabel der Ausgabeeinheit (300) nicht direkt in das Gehäuse (3b) der Messeinheit (1c) geht, z.B. über den Deckel (3b1) oder den Gehäusemantel (3b6), sondern über den, bzgl. des Gehäuses (3b) überstehenden wärmeleitenden Gehäuseteil (3b7), der zugleich äußerer Teil (7b) des Wärmeleitkörper (7) ist.
39. Strömungsmesseinsatz nach dem vorhergehenden Absatz dadurch gekennzeichnet, dass der Wärmeleitkörper (7) eine Wärmeleithülse (7a) ist, die zugleich Messaufnehmerhülse (7d) ist und mit dem Messaufnehmer (21) in wärmeleitendem Kontakt steht.
40. Strömungsmesseinsatz nach einem der vorhergehenden Absätze dadurch gekennzeichnet, dass die Litze des flexiblen Anschlusskabels (200) direkt mit den elektrischen Anschlüssen des Messaufnehmers (21) verbunden sind.
41. Mechatronisches Strömungsmessgerät (4) mit einem in einem Fluidgehäuse (3a) oder Gehäusekörper (401) befestigten, insbesondere eingeschraubten Strömungsmesseinsatz (1) nach einem der vorhergehenden Absätze mit einem Hubkörper (18a), der strömungsgeschwindigkeitsabhängig durch ein Fluid auslenkbar ist bzw. ausgelenkt ist, wobei
   a) der Strömungsmesseinsatz (1) und/oder das Strömungsmessgerät (4) so gestaltet ist, dass das zu messende Fluid nicht am Hubkörper (18a) in Längsachsrichtung vorbeifließt bzw. vorbeifließen kann, wie es z.B. bei Schwebekörpern der Schwebekörper-Durchflußanzeiger oder der Schwebekörper-Durchflussmessgeräte der Fall ist, sondern im Bereich des Hubkörpers (18a) umgelenkt ist bzw. umlenkbar ist, so dass die Abströmrichtung des Fluides nach dem Passieren des Hubkörpers (18a) ungleich der Auslenkrichtung des Schiebeelementes (12) bzw. Hubkörpers (18a) ist,
   b) das Fluidgehäuse (3a) Form hat a) eines dreistutzigen (3a4), insbesondere y- oder T-förmigen Fluidgussgehäuses (3a, 3ay) mit zueinander koaxialen Ein- und Ausgangsstutzen (3a4e, 3a4a), oder b) eines quaderförmigen Mehrfachfluidgehäuses (3m) mit mehreren Funktionsblöcken, insbesondere eines einstückigen quaderförmigen Mehrfachfluidgehäuses (401) zur Aufnahme mehrerer, parallel angeordneter Strömungsmesseinsätze (1) oder
   c) eines quaderförmigen Einfachfluidgehäuses (401) mit einem Funktionsblock (401f), in dem ein oder mehrere Strömungsmesseinsätze (1) befestigt sind.
42. Mechatronisches Strömungsmessgerät nach Absatz 41 mit einem Schrägsitzventil (19) und einem Schrägsitzventilgehäuse (3as) bzw. y-förmigen Fluidgehäuse (3ay), im Wesentlichen bestehend aus dem Hubkörper (18a), dem fluidfernen Stutzen (3a4f) und dem Ventilsitz (3a2, 407) dass bei strömendem Fluid in Strömungsrichtung (2) geöffnet und aus einer Grundstellung heraus bewegt ist und bei nichtströmendem Fluid oder Strömung in Gegenrichtung geschlossen und in Grundstellung ist.
43. Verwendung eines mechatronischen Strömungsmessgerätes (4) und/oder eines Strömungsmesseinsatzes (1) nach einem der vorhergehenden Absätze als Durchflussmesser zur Messung und/oder Überwachung der Strömungsgeschwindigkeit eines fluidischen Heiz- und/oder Kühlmittels in einer Spritzgießmaschine oder Spritzgießanlage oder in einer Thermoumformeinrichtung, insbesondere als Hochtemperatur-Strömungsmessgerät für die Formmassestromkühlung und/oder -heizung, z.B. für POM ((Polyoxymethylen, Polyacetal), für Fluidtemperaturen von größer als 150 Grad und/oder die Werkzeugkühlung und/oder -heizung für Fluidtemperaturen von größer als 80 bis 120 Grad.
44. Mechatronischer Strömungsmesseinsatz (1), der für den Durchfluss und die Strömungsgeschwindigkeits- und/oder Strömungsvolumenmessung eines heißen Mediums geeignet ist und der in bzw. an einem wärmebeständigen dreistutzigen Fluidgehäuse (3), insbesondere y-förmigen (3ay) oder Schrägsitzventil-Gehäuse (3as), befestigbar, insbesondere verschraubbar, ist, aufweisend eine Messwertaufnehmereinheit 21 innerhalb einer Messeinheit 1c mit einem Gehäuse 3c, die die Strömungsgeschwindigkeit dieses Mediums ohne Mediumskontakt messen kann und die der Wärmebelastung durch das Medium nicht voll, aber zumindest teilweise ausgesetzt ist, weiterhin aufweisend ein Hubkörpermodul 18, das im Betriebszustand Mediumkontakt hat und dessen Hubkörper 18a entsprechend der Strömungsgeschwindigkeit dieses Mediums ausgelenkt wird, wobei dieses Hubkörpermodul 18 ein auf den Messwert dieser Messwertaufnehmereinheit 21 wirkendes Beeinflussungselement 20 trägt oder ein Teil dieser Hubkörpereinheit 18 dieses Beeinflussungselement 20 selber darstellt und wobei die Auslenkung des Hubkörpers 18a ein Maß für die Strömungsgeschwindigkeit ist, aufweisend eine Ausgabeeinheit 300, die das Signal des Sensorelementes (21e) oder der Messwertaufnehmereinheit (21) (Sensorelement (21e) mit einer Vorverarbeitungselektronik), elektronisch verarbeitet und für ein nachfolgendes Gerät oder Einrichtung, wie z.B. eine SPS, am Signalausgang 310 des Strömungsmesseinsatzes 1, vorzugsweise am Kabel- oder Steckeranschluss 310a, z.B. einem Rundstecker, bereitstellt oder bereitstellen kann, dadurch gekennzeichnet, dass eine doppelwandige Wärmeleithülse (7a) vorgesehen ist, die in die Führungshülse 10 mit einem niedrigeren Wärmeleitkoeffizienten einschraubbar ist, wobei dessen äußerer Teil mit einer oder mehreren Kammern und entsprechenden Kühlfluid-Anschlüssen für die Zirkulation eines Kühlfluides, insbesondere Wasser, ausgebildet ist und wobei in dessen innerem Teil das Sensorelement (21e) bzw. die Messwertaufnehmereinheit (21) mit einem Anschlusskabel 200 angeordnet sind, wobei das Anschlußkabel (200) aus der fluidfernen Seite der Wärmeleithülse (7a), z.B. im Bereich der Rückfront (3b5), herausragt.
45. Mechatronischer Strömungsmesseinsatz (1) nach Absatz 44, dadurch gekennzeichnet, dass die Wärmeleithülse 7a aus einem hochwärmeleitfähigen Material besteht mit einem Wärmeleitkoeffizienten, der mindestens zehn Mal so groß ist als der der Führungshülse 10, aber mindestens 20 W/Km beträgt, vorzugsweise aus Messing, Kupfer, Messinglegierung oder Kupferlegierung besteht mit einem Mindestwärmeleitkoeffizienten von 90 W/Km.
46. Mechatronischer Strömungsmesseinsatz (1) nach einem der der vorhergehenden Absätze, dadurch gekennzeichnet, dass die Isoliereinheit (5) und/oder der Gehäusemantel (3b6) aus PPS (Polyphenylensulfid), POM (Polyoxymethylen, Polyacetal) oder PEEK (Polyetheretherketon) besteht, jeweils mit einem Wärmeleitkoeffizient kleiner 1 W/Km.
47. Mechatronischer Strömungsmesseinsatz (1) nach einem der vorhergehenden Absätze, dadurch gekennzeichnet, dass das Anschlusskabel 200 durchgängig flexibel und direkt mechanisch und elektrisch mit dem Sensorelement (21e) bzw. der Messwertaufnehmereinheit (21) verbunden ist, d.h. das die Adern des Kabels (200) einstückig ausgebildet sind.
48. Mechatronischer Strömungsmesseinsatz (1) nach einem der vorhergehenden Absätze, dadurch gekennzeichnet, dass das Sensorelement (21e) bzw. der Messwertaufnehmereinheit (21) ein induktiver oder Magnet-Näherungssensor ist, der keinen Kontakt mit dem zu messenden Fluid hat, sondern zumindest durch die Wandung der Isoliereinheit (5) von diesem Fluid getrennt ist, vorzugsweise auch durch die Wandung der Wärmeleithülse (7a) von diesem Fluid getrennt ist.
49. Mechatronischer Strömungsmesseinsatz (1) nach einem der vorhergehenden Absätze, dadurch gekennzeichnet, dass die Ausgabeeinheit (300) und die innerhalb der Ausgabeeinheit (300) angeordnete Elektronikeinheit (320) so gestaltet und angeordnet sind, dass
   a) sie nicht in der Messeinheit (1c) des Strömungsmesseinsatzes (1) bzw. nicht in dessen Gehäuse (3b) angeordnet sind, sondern am Ende des über die Wärmeleithülse (7a) hinausgehenden Anschlusskabels (200)
   b) und/oder dass das, durch die Elektronikeinheit erzeugte und mittels der Ausgabeeinheit (300) ausgegebene oder ausgebbare Signal ein Standardsignal ist, insbesondere ein binäres (Schaltsignal) oder analoges, lineares Signal, z.B. 0-10 V, 4-20 mA, ist,
   c) und/oder dass die Ausgabeeinheit (300) auch optische Anzeigeelemente wie LEDs oder LCDs und/oder Einstellelemente wie Potentiometer, z.B. zur Einstellung des Schaltpunkte (Strömungsgrenzwerte u.a.) aufweist.
50. Mechatronisches Strömungsmessgerät (4) mit einem in einem Fluidgehäuse (3a) oder Gehäusekörper (401) befestigten, insbesondere eingeschraubten Strömungsmesseinsatz (1) nach einem der vorhergehenden Absätze mit einem Hubkörper (18a), der strömungsgeschwindigkeitsabhängig durch ein Fluid auslenkbar ist bzw. ausgelenkt ist, wobei
   a) der Strömungsmesseinsatz (1) und/oder das Strömungsmessgerät (4) so gestaltet ist, dass das zu messende Fluid nicht am Hubkörper (18a) in Längsachsrichtung vorbeifließt bzw. vorbeifließen kann, wie es z.B. bei Schwebekörpern der Schwebekörper-Durchflußanzeiger oder der Schwebekörper-Durchflussmessgeräte der Fall ist, sondern im Bereich des Hubkörpers (18a) umgelenkt ist bzw. umlenkbar ist, so dass die Abströmrichtung des Fluides nach dem Passieren des Hubkörpers (18a) ungleich der Auslenkrichtung des Schiebeelementes (12) bzw. Hubkörpers (18a) ist,
   b) das Fluidgehäuse (3a) Form hat a) eines dreistutzigen (3a4), insbesondere y- oder T-förmigen Fluidgussgehäuses (3a, 3ay) mit zueinander koaxialen Ein- und Ausgangsstutzen (3a4e, 3a4a), oder b) eines quaderförmigen Mehrfachfluidgehäuses (3m) mit mehreren Funktionsblöcken, insbesondere eines einstückigen quaderförmigen Mehrfachfluidgehäuses (401) zur Aufnahme mehrerer, parallel angeordneter Strömungsmesseinsätze (1) oder
   c) eines quaderförmigen Einfachfluidgehäuses (401) mit einem Funktionsblock (401f), in dem ein oder mehrere Strömungsmesseinsätze (1) befestigt sind.
51. Mechatronisches Strömungsmessgerät nach Absatz 50 mit einem Schrägsitzventil (19) und einem Schrägsitzventilgehäuse (3as) bzw. y-förmigen Fluidgehäuse (3ay), im Wesentlichen bestehend aus dem Hubkörper (18a), dem fluidfernen Stutzen (3a4f) und dem Ventilsitz (3a2, 407) dass bei strömendem Fluid in Strömungsrichtung (2) geöffnet und aus einer Grundstellung heraus bewegt ist und bei nichtströmendem Fluid oder Strömung in Gegenrichtung geschlossen und in Grundstellung ist.
52. Verwendung eines mechatronischen Strömungsmessgerätes (4) und/oder eines Strömungsmesseinsatzes (1) nach einem der vorhergehenden Absätze als Durchflussmesser bzw. Strömungsüberwachungs- oder Strömungsmessvorrichtung (600) mit einem Gehäusekörper (401) bzw. Fluidgehäuse (3a) zur Messung und/oder Überwachung der Strömungsgeschwindigkeit eines fluidischen Heiz- und/oder Kühlmittels in einer Temperiervorrichtung (500) für das Formwerkzeug (520) und/oder die Formmasse einer Ur- oder Umformeinrichtung (520), insbesondere einer Spritzgießmaschine (520a) oder Spritzgießanlage oder in einer Thermoumformeinrichtung, insbesondere als Hochtemperatur-Strömungsmessgerät für die Formmassestromkühlung und/oder -heizung, z.B. für POM ((Polyoxymethylen, Polyacetal), für Fluidtemperaturen von größer als 150 Grad und/oder die Werkzeugkühlung und/oder -heizung für Fluidtemperaturen von größer als 80 bis 120 Grad.
53. Gehäusekörper (401) mit mindestens zwei Hubkörper-Ventilsitzen (407) für eine Strömungsüberwachungs- und/oder Strömungsmessvorrichtung mit einem mechatronischen Strömungsmesseinsatz (1) mit einem durch das zu messende Fluid auslenkbaren Hubkörper (18a) und Strömungsumlenkung im Bereich des Hubkörpers (18a) bzw. Ventilsitzes (407), insbesondere zur Strömungsüberwachung oder Strömungsgeschwindigkeits- oder Strömungsvolumenmessung heißer Medien, mit wenigstens zwei, bezüglich der Gehäuselängsachse (z-Achse) des Gehäusekörpers (401) parallel angeordneten Funktionsblöcken (401f, 401f1, 401f2, 401fx 401fl) mit je einem Hubkörper-Ventilsitz (407), wobei
   a) jeder Funktionsblock (401f, 401f1, 401f2, 401fx, 401fl) mindestens drei, aber nur in der x-y-Ebene und zueinander rechtwinklig angeordnete geradlinige Sacklöcher (405s) aufweist,
   b) das erste Sackloch (405s1) fluidtechnisch gesehen ein aktives Eingangskanalstück (405etk) des Eingangskanales (405e) und dessen Sackloch-Öffnung (402) auf der Oberfläche (404) den Einlass (402e) für die Fluidströmung bildet,
   c) das dritte Sackloch (405s3) ein aktives und zugleich das einzige Ausgangskanalstück (405atk) ist, das den vollständigen Ausgangskanal (405a) bildet und dessen Sackloch-Öffnung (402) auf der Oberfläche (404) den Auslass (402a) für die Fluidströmung im Strömungs- und Anschlußfall darstellt,
   d) das zweite Sackloch (405s2) durch die Überschneidung mit dem dritten Sackloch geteilt ist in das öffnungsseitige (402) Messgeräteinsatz-Kanalstück (405tss) und das öffnungsferne aktive Eingangskanalstück (405etk) und zwischen beiden der Ventilsitz (407) angeordnet ist.
   e) jeweils zwei Sacklöcher (405s) sich zumindest partiell rechtwinklig überlappen bzw. überschneiden und so einen durchgehenden Kanal (402dk) aus zwei aktiven Eingangskanalstücken (405etk), die den Eingangskanal (405ek) bilden, und einem aktiven Ausgangskanalstück (405atk) bilden, so dass das Fluid bei eingesetztem (405tss) mechatronischen Strömungsmesseinsatz (1) nur vom Einlass (402e) über den Ventilsitz (407) und den Hubkörper (18a) zum Auslass (402a) fließen kann, sofern eine 100%-ige Ventilfunktion gegeben ist.
54. Gehäusekörper (401) nach Absatz 53 mit einem Ventilsitz (407), der einstückig mit dem Gehäusekörper (401) ausgebildet ist, vorzugsweise durch eine Durchmesservergrößerung des Messgeräteinsatz-Kanalstückes (405tss) gegenüber dem öffnungsfernen aktiven Eingangskanalstück (405etk) des zweiten Sackloches (405s2).
55. Gehäusekörper (401) nach einem der vorhergehenden Absätze mit einem weiteren Sackloch (405ss) als Sensorkanalteilstück (405ts) zur Aufnahme eines weiteren Sensors bzw. Sensorgerätes, z.B. eines Temperaturfühlers oder eines Drucksensors, wobei das weitere Sackloch (405ss) das dritte Sackloch (405) ebenfalls rechtwinklig schneidet.
56. Gehäusekörper (401) nach einem der vorhergehenden Absätze mit einem als einstückiges Gussteil hergestellten Gehäusekörper (401), vorzugsweise aus einem Buntmetall oder Buntmetall-Legierungen, insbesondere aus Messing, und/oder mit Öffnungen (402) mit Innengewinde (402g).
57. Gehäusekörper (401) nach einem der vorhergehenden Absätze mit mindestens einem in Z-Richtung verlaufenden Kühlkanal (405k), der in der Nähe der Kanalteilstückes (405tss) für den Strömungsmesseinsatz (1) angeordnet ist, aber keine Kanal-Verbindung zu den Sacklöchern 1-3 hat (405s1, 405s2, 405s3)hat.
58. Strömungsüberwachungs- oder Strömungsmessvorrichtung (600) mit einem Gehäusekörper (1) nach einem der vorgehenden Absätze und mindestens einem, in der Öffnung (402ss) des Messgeräteinsatz-Kanalstückes (405tss) des Gehäusekörpers (1) fluiddicht befestigtem mechatronischen Strömungsmesseinsatz (1) mit einem durch das zu messende Fluid auslenkbaren Hubkörper (18a) und Strömungsumlenkung im Bereich des Hubkörpers (18a), insbesondere zur Strömungsüberwachung oder Strömungsgeschwindigkeits- oder Strömungsvolumenmessung heißer Medien.
59. Verwendung eines Gehäusekörpers (401) mit mindestens einem in das zweite Sackloch (405s2) jedes Funktionsblockes (401f) fluiddicht einsetzbaren oder eingesetzten Strömungsmesseinsatzes (1) nach einem der vorhergehenden Absätze zur Messung und/oder Überwachung der Strömungsgeschwindigkeit und/oder des Strömungsvolumens eines fluidischen Heiz- und/oder Kühlmittels in einer Spritzgießmaschine oder Spritzgießanlage oder in einer Thermoumformeinrichtung, insbesondere als Hochtemperatur-Strömungsmessgerät für die Formmassestromkühlung und/oder -heizung, z.B. für POM ((Polyoxymethylen, Polyacetal), für Fluidtemperaturen von größer als 150 Grad und/oder die Werkzeugkühlung und/oder -heizung für Fluidtemperaturen von größer als 80 bis 120 Grad.
60. Gehäusekörper (401) mit mindestens zwei Hubkörper-Ventilsitzen (407) für eine Strömungsüberwachungs- und/oder Strömungsmessvorrichtung (600) mit einem mechatronischen Strömungsmesseinsatz (1) mit einem durch das zu messende Fluid auslenkbaren Hubkörper (18a) und Strömungsumlenkung im Bereich des Hubkörpers (18a) bzw. Ventilsitzes (407), insbesondere zur Strömungsüberwachung oder Strömungsgeschwindigkeits- oder Strömungsvolumenmessung heißer Medien, mit wenigstens zwei, bezüglich der Gehäuselängsachse (z-Achse) des Gehäusekörpers (401) parallel angeordneten Funktionsblöcken (401f, 401f1, 401f2, 401fx 401fl) mit je einem Hubkörper-Ventilsitz (407), wobei
   a) jeder Funktionsblock (401f, 401f1, 401f2, 401fx, 401fl) mindestens drei, in der x-y-Ebene und zueinander rechtwinklig angeordnete und zu einem vom Fluid-Einlass (402e) bis zum Fluidauslass (402a) durchgehenden Kanal (405dk) miteinander verbundene geradlinige Sacklöcher (405s, 405s1, 405s2, 405s3) aufweist,
   b) das erste Sackloch (405s1) fluidtechnisch gesehen keinen Sackkanal (405sk), sondern ein ein Durchgangskanalstück (405dks) bzw. ein aktives Eingangskanalstück (405etk) des Eingangskanales (405e) und dessen Sackloch-Öffnung (402) auf der Oberfläche (404) den Einlass (402e) für die Fluidströmung bildet,
   c) das dritte Sackloch (405s3) ein aktives und zugleich das erste Ausgangskanalstück (405atk) ist, das den Beginn des Ausgangskanales (405a) bildet,
   d) das zweite Sackloch (405s2) durch die rechtwinklige Überschneidung bzw. Durchdringung mit dem dritten Sackloch geteilt ist in das öffnungsseitige (402) Messgeräteinsatz-Kanalstück (405tss) und das öffnungsferne aktive Eingangskanalstück (405etk) und zwischen beiden der Ventilsitz (407) angeordnet ist.
   e) ein Z-Loch (Längsachse in Z-Richtung) in mindestens zwei Funktionsblöcken vorhanden ist, das als Durchgangsloch (405d) oder als Sackloch (405s) und als zweites Teilstück (405at2) des Ausgangskanales (405a) ausgebildet ist und sowohl direkt in den lokalen Auslass (402al) jedes dieser Funktionsblocke (401f) mündet bzw. diesen bildet und letztlich in den eigentlichen Auslass (402a) auf einer oder beiden Stirnseiten (401s, 401sv, 401sh) mündet, wobei im Falle der Ausbildung als Sackloch (405s) dieses so tief gehen, dass mindestens in zwei Funktionsblöcken (401f) je ein Durchgangskanal (405dk) zumindest in der x-y-Ebene vorhanden ist und diese Durchgangskanäle (405dk) durch die Durchgangslöcher in z-Richtung verbunden sind,
   f) jeweils zwei Sacklöcher (405s) sich in jedem Funktionsblock zumindest partiell rechtwinklig überlappen bzw. überschneiden und so in Summe einen durchgehenden Kanal (402dk) aus den zwei aktiven, zueinander rechtwinkligen Eingangskanalstücken (405etk, 405et1, 405et2), die den Eingangskanal (405ek) bilden, und dem ersten und zweiten aktiven Ausgangskanalstück (405atk, 405at1, 405at2) bilden, wobei das erste Ausgangskanalstück (405at1) in y-Richtung verläuft und das zweite (405at2) in z-Richtung,
   g) alle zweiten aktiven Ausgangskanalstücke (405atk, 405at2) bzw. z-Löcher (eines je Funktionsblock (401f)), die durch das dritte Sackloch (405s3) gebildet sind, koaxial hintereinander angeordnet sind, so dass bei eingesetzten (405tss) mechatronischen Strömungsmesseinsätzen (1) wahlweise in Abhängigkeit von der Verwendung und Anzahl der Blindstopfen o.Ä. mindestens drei verschiedene Betriebsmodi möglich sind g1) Die Auslässe (402ag) aller dritten Sacklöcher (405s3) auf der sensornahen Stirnseite (401 sn) sind verschlossen, so das nur der gemeinsame Auslass (402ag) auf der vorderen oder hinteren Stirnseite (401 sv, 401 sh) oder auf beiden Stirnseiten (401 sv, 401 sh) aktiv sein kann,
   g2) Die Auslässe (402ag) aller dritten Sacklöcher (405s3) auf der sensornahen Stirnseite (401sn) sind offen und nur der gemeinsame Auslass (402ag) auf der vorderen und hinteren Stirnseite (401sv, 401sh) ist mit Blindstopfen o.Ä. verschlossen,
   g3) Die Auslässe (402ag) aller dritten Sacklöcher (405s3) auf der sensornahen Stirnseite (401sn) sind offen und ebenso der gemeinsame Auslass (402ag) auf der vorderen und hinteren Stirnseite (401 sv, 401 sh).
61. Gehäusekörper (401) nach Absatz 60 mit einem Ventilsitz (407), der einstückig mit dem Gehäusekörper (401) ausgebildet ist, vorzugsweise mit einem Ventilsitz (407) mit einer annähernd rechtwinkligen Stufe und durch eine Durchmesservergrößerung des Messgeräteinsatz-Kanalstückes (405tss) gegenüber dem öffnungsfernen aktiven Eingangskanalstück (405etk) des zweiten Sackloches (405s2), vorzugsweise in Form eines Fräas- oder Bohrloches.
62. Gehäusekörper (401) nach einem der vorhergehenden Absätze mit einem weiteren Sackloch (405ss) als Sensorkanalteilstück (405ts) zur Aufnahme eines weiteren Sensors bzw. Sensorgerätes, z.B. eines Temperaturfühlers oder eines Drucksensors, wobei das weitere Sackloch (405ss) das dritte Sackloch (405) ebenfalls rechtwinklig schneidet.
63. Gehäusekörper (401) nach einem der vorhergehenden Absätze mit einem als einstückiges Gussteil hergestellten Gehäusekörper (401), vorzugsweise aus einem Buntmetall oder Buntmetall-Legierungen, insbesondere aus Messing, und/oder mit Öffnungen (402) mit Innengewinde (402g).
64. Gehäusekörper (401) nach einem der vorhergehenden Absätze mit mindestens einem in z-Richtung verlaufenden Kühlkanal (405k), der in der Nähe der Kanalteilstückes (405tss) für den Strömungsmesseinsatz (1) angeordnet ist, aber keine Kanal-Verbindung zu den Sacklöchern 1-3 hat (405s1, 405s2, 405s3) hat.
65. Strömungsüberwachungs- oder Strömungsmessvorrichtung (600) mit einem Gehäusekörper (1) nach einem der vorgehenden Absätze und mindestens einem, in der Öffnung (402ss) des Messgeräteinsatz-Kanalstückes (405tss) des Gehäusekörpers (1) fluiddicht befestigtem mechatronischen Strömungsmesseinsatz (1) mit einem durch das zu messende Fluid auslenkbaren Hubkörper (18a) und Strömungsumlenkung im Bereich des Hubkörpers (18a), insbesondere zur Strömungsüberwachung oder Strömungsgeschwindigkeits- oder Strömungsvolumenmessung heißer Medien.
66. Strömungsüberwachungs- oder Strömungsmessvorrichtung (600) nach Absatz 65 und Gewinde-Öffnungen (402ss) im zweiten Sackloch, in die mindestens ein mechatronisches Strömungsmesseinsatz (1) eingeschraubt ist, der die Strömungsgeschwindigkeit durch die Auslenkung eines Hubkörpers (18a) misst bzw. messen kann mittels eines induktiven oder Magnet-Näherungsmessgerätes bzw. -Näherungsschalters.
67. Strömungsüberwachungs- oder Strömungsmessvorrichtung (600) nach Absatz 66, bei der die Ausgangskanalteilstücke (405at) in y-Richtung mittels eines Blindstopfens verschlossen sind, so dass sie passive Ausgangskanalteilstücke (405atp) sind und der Fluidauslass (402a) durch das Ende des zweiten Teilstückes (405at2) des aktiven Auslasskanales (405ak) des ersten und/oder letzten Funktionsblockes (401f1, 401fl) gebildet ist.
68. Verwendung eines Gehäusekörper (401) mit mindestens einem, in das zweite Sackloch (405s2) bzw. Kanalstück in x-Richtung (405tss) jedes Funktionsblockes (401f) fluiddicht einsetzbaren oder eingesetzten Strömungsmesseinsatzes (1) nach einem der vorhergehenden Absätze zur Messung und/oder Überwachung der Strömungsgeschwindigkeit und/oder des Strömungsvolumens eines fluidischen Heiz- und/oder Kühlmittels in einer Spritzgießmaschine oder Spritzgießanlage oder in einer Thermoumformeinrichtung, insbesondere als Hochtemperatur-Strömungsmessgerät für die Formmassestromkühlung und/oder -heizung, z.B. für POM ((Polyoxymethylen, Polyacetal), für Fluidtemperaturen von größer als 150 Grad und/oder die Werkzeugkühlung und/oder -heizung für Fluidtemperaturen von größer als 80 bis 120 Grad.
69. Gehäusekörper (401) mit mindestens zwei Hubkörper-Ventilsitzen (407) für eine Strömungsüberwachungs- und/oder Strömungsmessvorrichtung (600) mit einem mechatronischen Strömungsmesseinsatz (1) mit einem Hubkörper (18a) und Strömungsumlenkung im Bereich des Hubkörpers (18a), insbesondere zur Strömungsüberwachung oder Strömungsgeschwindigkeits- oder Strömungsvolumenmessung heißer Medien, mit wenigstens zwei, bezüglich der Gehäuselängsachse (z-Achse) des Gehäusekörpers (401) parallel angeordneten Funktionsblöcken (401f, 401f1, 401f2, 401fl), wobei jeder Funktionsblock (401f, 401f1, 401f2, 401fl) mindestens eine, als einen Einlass (402e) nutzbare Öffnung (402) mit einem Einlasskanal (405e) und mindestens zwei, als Auslässe (402a) nutzbare Öffnungen (402) mit einem Ausgangskanal (405a) aufweist, jeder Funktionsblock (401f) charakterisiert ist, durch genau einen, in einer Ebene (x-y-Ebene) verlaufenden Eingangskanal (405e) mit einem ersten Teilstück (405et1) in y-Richtung und einem im rechten Winkel anschließenden zweitem Teilstück (405et2) (in x-Richtung), das in ein in dieser x-y-Ebene verlaufendes erstes Teilstück (405at1) des Ausgangskanales (405a) mündet, das wiederum in ein zweites Teilstück (405at2) des Ausgangskanales (405a) mündet, wobei das zweite Teilstück (405at2) senkrecht zum erstes Teilstück (405at1) angeordnet ist und in z-Richtung, d.h. parallel zur Längsachse (z-Achse) des Gehäusekörper (401) verläuft.
   jedes erste Teilstück (405at1) eines Ausgangskanales (405a), das in y-Richtung sich erstreckt, bzgl. der z-Richtung parallel zu einem gleichartigen Teilstück (405at1) eines anderes Ausgangskanales (405a) ausgerichtet ist, und jedes Teilstück (405et1) des Eingangskanales (405e), das in x- oder y-Richtung sich erstreckt, in z-Richtung parallel zu einem gleichartigen Teilstück (405et1) eines anderes Eingangskanales (405e) ausgerichtet ist,
   die Kanäle (405) und Kanalstücke (405at, 405et) benachbarter Funktionsblöcke (401f) innerhalb des Gehäusekörpers (1) nicht verbunden sind, d.h. es sind keine Funktionsblock-übergreifende (401f) Kanäle (405) und Kanalstücke (405at, 405et) in z-Richtung vorhanden,
   am Ende des zweiten Teilstückes eines Eingangskanales (405e) zumindest zweier Funktionsblöcke (401f), der zugleich der Anfang des dazugehörigen ersten Teilstückes des Ausgangskanales (405a) und der Beginn eines Kanalteilstückes (405tss) für die Aufnahme des mechatronischen Strömungsmesseinsatz (1) ist, genau ein Ventilsitz (407) je Funktionsblock (401f) für einen mechatronischen Strömungsmesseinsatz (1) mit einem Hubkörper (18a) und im Betriebfall Strömungsumlenkung im Bereich des Hubkörpers (18a) bzw. Ventilsitzes vorhanden ist sowie eine Öffnung (402, 402s) im zweiten Kanalteilstück (405tss) des Eingangskanales (405e) zur druckdichten Befestigung dieses mechatronischen Strömungsmesseinsatzes (1) zum Erfassen der Geschwindigkeit des fluiden Mediums im Strömungsfall, wobei diese Kanalteilstücke (405tss) konzentrisch und im Durchmesser größer bezüglich der korrespondierenden zweiten Eingangskanalstücke (405et2) ausgebildet sind.
70. Gehäusekörper (401) nach Absatz 69 dadurch gekennzeichnet, dass er einstückig ausgebildet ist, vorzugsweise aus einem Buntmetall, insbesondere Messing und/oder wobei mindestens einer dieser Einlässe (402e), vorzugsweise alle, und/oder mindestens einer dieser Auslässe (402a), vorzugsweise alle, und/oder mindestens eine der Öffnungen (402ss) für die Befestigung eines mechatronischen Strömungsmesseinsatzes (1), vorzugsweise alle, ein normiertes bzw. ein Standardgewinde (Zoll, metrisch) zum Anschluss von Gewinderohren, Gewindenippeln u.Ä. aufweist.
71. Gehäusekörper (401) nach einem der vorhergehenden Absätze dadurch gekennzeichnet, dass das zweite Teilstück (405at2) des Ausgangskanales mindestens eines Funktionsblockes (401f), dessen Längsachse in z-Richtung verläuft, konzentrisch bezüglich des zweiten Teilstückes (405at2) des Ausgangskanales (405a) seines benachbarten Funktionsblockes (401f) angeordnet ist, so dass dieses zweite Teilstück (405at2) gemeinsames Teilstück (405atg) ihrer Ausgangskanäle (5a) ist.
72. Gehäusekörper (401) nach einem der vorhergehenden Absätze dadurch gekennzeichnet, dass alle Funktionsblöcke (401f) identisch aufgebaut sind und/oder in z-Richtung anreihbar und/oder mit Öffnungen (402) mit Innengewinde (402g) versehen sind.
73. Gehäusekörper (401) nach einem der vorhergehenden Absätze dadurch gekennzeichnet, dass zumindest der Auslasskanal (405a) (ggf. auch der Einlasskanal (405e)) und zumindest ein Auslasskanal (405a) der in y- und z-Richtung gehenden Teilstücke (405at) der Auslasskanäle (405a) zumindest ein passives Teilstück (405atp) aufweist, das verschlossen ist, vorzugsweise mit einem Temperaturfühler/Temperaturmeßgerät oder einem Druckmessgerät oder einem Blindstopfen, insbesondere mit einem Gewindeblindstopfen.
74. Gehäusekörper (401) nach dem vorhergehenden Absatz dadurch gekennzeichnet, dass ein passives Teilstück (405atp) des Ausgangskanales (405a) parallel zum aktiven Teilstück (405etk) des Eingangskanales (405e) verläuft, das direkt mit dem Einlaß (402e) verbunden ist.
75. Gehäusekörper (401) nach dem vorhergehenden Absatz dadurch gekennzeichnet, dass er quaderförmig ausgebildet ist, insbesondere mit einer Stufe (403) im Bereich einer Öffnung (402ss) für den mechatronischen Strömungsmesseinsatz (1) und/oder ebene und zueinander parallelen Stirnseiten (401s, 401 sv, 401 sh) sowie durchgehenden Löcher in z-Richtung hat, so dass mehrere Gehäusekörper (1) anreihbar und fluiddicht verschraubbar sind.
76. Gehäusekörper (401) nach dem vorhergehenden Absatz dadurch gekennzeichnet, dass das dem Fluid-Einlaß (402e) nahe erste Teilstück (405et1) des Eingangskanales (405e) rechtwinklig angeordnet ist zum zweiten Teilstück (405et2), das zugleich das Strömungsmesseinsatz-Kanalteilstück (405tss) mit der Öffnung (402ss) für die Befestigung des Strömungsmesseinsatz (1) ist, und rechtwinklig angeordnet ist zum letzten, gemeinsamen Teilstück (405atg) des zweiten Teilstückes (405at2) des Ausgangskanals (405a).
77. Strömungsüberwachungs- oder Strömungsmessvorrichtung (600) mit einem Gehäusekörper (1) nach einem der vorgehenden Absätze und mindestens einem, in der Öffnung (402ss) des Messgeräteinsatz-Kanalstückes (405tss) des Gehäusekörpers (1) fluiddicht befestigtem mechatronischen Strömungsmesseinsatz (1) mit einem durch das zu messende Fluid auslenkbaren Hubkörper (18a) und Strömungsumlenkung im Bereich des Hubkörpers (18a), insbesondere zur Strömungsüberwachung oder Strömungsgeschwindigkeits- oder Strömungsvolumenmessung heißer Medien.
78. Strömungsüberwachungs- oder Strömungsmessvorrichtung (600) nach Absatz 77 und Gewinde-Öffnungen (402ss) im zweiten Sackloch, in die mindestens ein mechatronisches Strömungsmesseinsatz (1) eingeschraubt ist, der die Strömungsgeschwindigkeit durch die Auslenkung eines Hubkörpers (18a) misst bzw. messen kann mittels eines induktiven oder Magnet-Näherungsmessgerätes bzw. -Näherungsschalters.
79. Verwendung eines Gehäusekörper (401) mit mindestens einem, in das zweite Sackloch (405s2) bzw. Kanalstück in x-Richtung (405tss) jedes Funktionsblockes (401f) fluiddicht einsetzbaren oder eingesetzten Strömungsmesseinsatzes (1) nach einem der vorhergehenden Absätze zur Messung und/oder Überwachung der Strömungsgeschwindigkeit und/oder des Strömungsvolumens eines fluidischen Heiz- und/oder Kühlmittels in einer Spritzgießmaschine oder Spritzgießanlage oder in einer Thermoumformeinrichtung, insbesondere als Hochtemperatur-Strömungsmessgerät für die Formmassestromkühlung und/oder -heizung, z.B. für POM ((Polyoxymethylen, Polyacetal), für Fluidtemperaturen von größer als 150 Grad und/oder die Werkzeugkühlung und/oder -heizung für Fluidtemperaturen von größer als 80 bis 120 Grad.
80. Gehäusekörper (401) mit mindestens zwei Hubkörper-Ventilsitzen (407) für eine Strömungsüberwachungs- und/oder Strömungsmessvorrichtung (600) mit einem mechatronischen Strömungsmesseinsatz (1) mit einem durch das zu messende Fluid auslenkbaren Hubkörper (18a) und Strömungsumlenkung im Bereich des Hubkörpers (18a) bzw. Ventilsitzes (407), insbesondere zur Strömungsüberwachung oder Strömungsgeschwindigkeits- oder Strömungsvolumenmessung heißer Medien, mit wenigstens zwei, bezüglich der Gehäuselängsachse (z-Achse) des Gehäusekörpers (401) parallel angeordneten Funktionsblöcken (401f, 401f1, 401f2, 401fx 401fl) mit je einem Hubkörper-Ventilsitz (407), wobei
   a) jeder Funktionsblock (401f, 401f1, 401f2, 401fx, 401fl) mindestens drei, in der x-y-Ebene und zueinander rechtwinklig angeordnete und zu einem vom Fluid-Einlass (402e) bis zum Fluidauslass (402a) durchgehenden Kanal (405dk) miteinander verbundene geradlinige Sacklöcher (405s, 405s1, 405s2, 405s3) aufweist,
   b) das erste Sackloch (405s1) fluidtechnisch gesehen keinen Sackkanal (405sk), sondern ein einen Durchgangskanalstück (405dks) bzw. ein aktives Eingangskanalstück (405etk) des Eingangskanales (405e) und dessen Sackloch-Öffnung (402) auf der Oberfläche (404) den Einlass (402e) für die Fluidströmung bildet,
   c) das dritte Sackloch (405s3) ein aktives und zugleich das erste Ausgangskanalstück (405atk) ist, das den Beginn des Ausgangskanales (405a) bildet,
   d) das zweite Sackloch (405s2) durch die rechtwinklige Überschneidung bzw. Durchdringung mit dem dritten Sackloch geteilt ist in das öffnungsseitige (402) Messgeräteinsatz-Kanalstück (405tss) und das öffnungsferne aktive Eingangskanalstück (405etk) und zwischen beiden der Ventilsitz (407) angeordnet ist.
   e) zwei in y-Richtung nebeneinander angeordnete Z-Löcher (Längsachse in Z-Richtung) in mindestens zwei Funktionsblöcken vorhanden sind, die als Durchgangslöcher (405d) oder Sacklöcher (405s) und als zweite Teilstücke (405at2) des Ausgangskanales (405a) ausgebildet sind und sowohl direkt in den lokalen Auslass (402al) jedes dieser Funktionsblocke (401f) münden bzw. diesen bilden und letztlich in den eigentlichen Auslass (402a) auf einer oder beiden Stirnseiten (401s, 401 sv, 401 sh) münden, wobei im Falle der Ausbildung als Sackloch (405s) oder Sacklöcher (405s) diese so tief gehen, dass mindestens in zwei Funktionsblöcken (401f) je ein Durchgangskanal (405dk) zumindest in der x-y-Ebene vorhanden ist und diese Durchgangskanäle (405dk) durch die Durchgangslöcher in z-Richtung verbunden sind,
   f) jeweils zwei Sacklöcher (405s) sich in jedem Funktionsblock zumindest partiell rechtwinklig überlappen bzw. überschneiden und so in Summe einen durchgehenden Kanal (402dk) aus den zwei aktiven, zueinander rechtwinkligen Eingangskanalstücken (405etk, 405et1, 405et2), die den Eingangskanal (405ek) bilden, und dem ersten und weiteren aktiven Ausgangskanalstücken (405atk, 405at1, 405at2, 405at2z, 405at3z) bilden, wobei das erste Ausgangskanalstück (405at1) in y-Richtung verläuft und das weitere in z- und in y-Richtung, wobei diejenigen in z-Richtung durch die zwei Sacklöcher (405s) in Z-Richtung gebildet sind,
   g) alle zweiten aktiven Ausgangskanalstücke (405atk, 405at2) bzw. z-Löcher (eines je Funktionsblock (401f)), die durch das dritte Sackloch (405s3) gebildet sind, koaxial hintereinander angeordnet sind, so dass bei eingesetzten (405tss) mechatronischen Strömungsmesseinsätzen (1) wahlweise in Abhängigkeit von der Verwendung und Anzahl der Blindstopfen o.Ä. mindestens drei verschiedene Betriebsmodi möglich sind
   g1) Die Auslässe (402ag) aller dritten Sacklöcher (405s3) auf der sensornahen Stirnseite (401sn) sind verschlossen, so dass nur der gemeinsame Auslass (402ag) auf der vorderen oder hinteren Stirnseite (401 sv, 401 sh) oder auf beiden Stirnseiten (401 sv, 401 sh) aktiv sein kann,
   g2) Die Auslässe (402ag) aller dritten Sacklöcher (405s3) auf der sensornahen Stirnseite (401sn) sind offen und nur der gemeinsame Auslass (402ag) auf der vorderen und hinteren Stirnseite (401 sv, 401 sh) ist mit Blindstopfen o.Ä. verschlossen,
   g3) Die Auslässe (402ag) aller dritten Sacklöcher (405s3) auf der sensornahen Stirnseite (401sn) sind offen und ebenso der gemeinsame Auslass (402ag) auf der vorderen und hinteren Stirnseite (401 sv, 401 sh).
81. Gehäusekörper (401) nach Absatz 80 mit einem Ventilsitz (407), der einstückig mit dem Gehäusekörper (401) ausgebildet ist, vorzugsweise mit einem Ventilsitz (407) mit einer annähernd rechtwinkligen Stufe und durch eine Durchmesservergrößerung des Messgeräteinsatz-Kanalstückes (405tss) gegenüber dem öffnungsfernen aktiven Eingangskanalstück (405etk) des zweiten Sackloches (405s2), vorzugsweise in Form eines Fräas- oder Bohrloches.
82. Gehäusekörper (401) nach einem der vorhergehenden Absätze mit einem weiteren Sackloch (405ss) als Sensorkanalteilstück (405ts) zur Aufnahme eines weiteren Sensors bzw. Sensorgerätes, z.B. eines Temperaturfühlers oder eines Drucksensors, wobei das weitere Sackloch (405ss) das dritte Sackloch (405) ebenfalls rechtwinklig schneidet.
83. Gehäusekörper (401) nach einem der vorhergehenden Absätze mit einem als einstückiges Gussteil hergestellten Gehäusekörper (401), vorzugsweise aus einem Buntmetall oder Buntmetall-Legierungen, insbesondere aus Messing, und/oder mit Öffnungen (402) mit Innengewinde (402g).
84. Gehäusekörper (401) nach einem der vorhergehenden Absätze mit mindestens einem in z-Richtung verlaufenden Kühlkanal (405k), der in der Nähe der Kanalteilstückes (405tss) für den Strömungsmesseinsatz (1) angeordnet ist, aber keine Kanal-Verbindung zu den Sacklöchern 1-3 hat (405s1, 405s2, 405s3) hat.
85. Strömungsüberwachungs- oder Strömungsmessvorrichtung (600) mit einem Gehäusekörper (1) nach einem der vorgehenden Absätze und mindestens einem, in der Öffnung (402ss) des Messgeräteinsatz-Kanalstückes (405tss) des Gehäusekörpers (1) fluiddicht befestigtem mechatronischen Strömungsmesseinsatz (1) mit einem durch das zu messende Fluid auslenkbaren Hubkörper (18a) und Strömungsumlenkung im Bereich des Hubkörpers (18a), insbesondere zur Strömungsüberwachung oder Strömungsgeschwindigkeits- oder Strömungsvolumenmessung heißer Medien.
86. Strömungsüberwachungs- oder Strömungsmessvorrichtung (600) nach Absatz 85 und Gewinde-Öffnungen (402ss) im zweiten Sackloch, in die mindestens ein mechatronisches Strömungsmesseinsatz (1) eingeschraubt ist, der die Strömungsgeschwindigkeit durch die Auslenkung eines Hubkörpers (18a) misst bzw. messen kann mittels eines induktiven oder Magnet-Näherungsmessgerätes bzw. -Näherungsschalters.
87. Strömungsüberwachungs- oder Strömungsmessvorrichtung (600) nach Absatz 86, bei der die Ausgangskanalteilstücke (405at) in y-Richtung mittels eines Blindstopfens verschlossen sind, so dass sie passive Ausgangskanalteilstücke (405atp) sind und der Fluidauslass (402a) durch das Ende des zweiten Teilstückes (405at2) des aktiven Auslasskanales (405ak) des ersten und/oder letzten Funktionsblockes (401f1, 401fl) gebildet ist.
88. Verwendung eines Gehäusekörper (401) mit mindestens einem, in das zweite Sackloch (405s2) bzw. Kanalstück in x-Richtung (405tss) jedes Funktionsblockes (401f) fluiddicht einsetzbaren oder eingesetzten Strömungsmesseinsatzes (1) nach einem der vorhergehenden Absätze zur Messung und/oder Überwachung der Strömungsgeschwindigkeit und/oder des Strömungsvolumens eines fluidischen Heiz- und/oder Kühlmittels in einer Spritzgießmaschine oder Spritzgießanlage oder in einer Thermoumformeinrichtung, insbesondere als Hochtemperatur-Strömungsmessgerät für die Formmassestromkühlung und/oder -heizung, z.B. für POM ((Polyoxymethylen, Polyacetal), für Fluidtemperaturen von größer als 150 Grad und/oder die Werkzeugkühlung und/oder -heizung für Fluidtemperaturen von größer als 80 bis 120 Grad.
89. Gehäusekörper (401) mit mindestens zwei Hubkörper-Ventilsitzen (407) für eine Strömungsüberwachungs- und/oder Strömungsmessvorrichtung (600) mit einem mechatronischen Strömungsmesseinsatz (1) mit einem durch das zu messende Fluid auslenkbaren Hubkörper (18a) und Strömungsumlenkung im Bereich des Hubkörpers (18a) bzw. Ventilsitzes (407), insbesondere zur Strömungsüberwachung oder Strömungsgeschwindigkeits- oder Strömungsvolumenmessung heißer Medien, mit wenigstens zwei, bezüglich der Gehäuselängsachse (z-Achse) des Gehäusekörpers (401) parallel angeordneten Funktionsblöcken (401f, 401f1, 401f2, 401fx 401fl) mit mehreren Durchgangskanalstücken (405dks), mit je einem Hubkörper-Ventilsitz (407) und mit genau einem, allen Funktionsblöcken (401f) gemeinsamen, in z-Richtung verlaufenden Eingangskanal (405e) und genau einem, allen Funktionsblöcken (401f) gemeinsamen, ebenfalls in z-Richtung verlaufenden Ausgangskanal (405a), der in y-Richtung daneben angeordnet ist, wobei
   a) der Eingangskanal (402e) und der Ausgangskanal (402a) ein Sackloch (405s) oder ein Durchgangsloch (405d) ist,
   b) direkt zwischen dem Eingangskanal (405e) und dem Ausgangskanal (405a) keine Kanalverbindung (405) vorhanden ist,
   c) jeder Funktionsblock (401f, 401f1, 401f2, 401fx, 401fl) mehrere Durchgangskanalstücke (405dks) aufweist, die einen Durchgangskanal (405dk) vom Einlass (402e) bis zum Auslass (402a) bilden
   d) alle Fluid-Öffnungen (402) auf der sensornahen Schmalseite (401sn) verschlossen sind, z.B. mit Blindstopfen,
   e) jeder Funktionsblock (401f, 401f1, 401f2, 401fx, 401fl) genau zwei, in der y-Richtung und ein in der x-Richtung verlaufende geradlinige Sacklöcher (405s, 405s1, 405s2, 405s3) aufweist, die zueinander rechtwinklig oder parallel verlaufen, wobei zwei benachbarte Sacklöcher (405s) einander zumindest partiell überschneiden bzw. überlappen und so die Durchgangskanalstücke 3,4 und 5 (405dks3, 405dks4, 405dks5) und das fluidtechnisch passive Kanalstück (405tss) für den mechatronischen Strömungsmesseinsatz (1) bilden,
   d) jeder Funktionsblock (401f, 401f1, 401f2, 401fx, 401fl) in y-Richtung ein viertes Sackloch (405s4) an der sensorfernen Schmalseite (401sf) aufweist, das sich mit dem ersten Durchgangskanalstück (405dks1) in z-Richtung, d.h. mit dem gemeinsamen aktiven Eingangskanal (405e, 405ek) zumindest partiell überschneidet, nicht jedoch mit dem gemeinsamen Ausgangskanal (405atg, 405a, 405ak).
90. Gehäusekörper (401) nach Absatz 89 mit einem Ventilsitz (407), der einstückig mit dem Gehäusekörper (401) ausgebildet ist, vorzugsweise mit einem Ventilsitz (407) mit einer annähernd rechtwinkligen Stufe und durch eine Durchmesservergrößerung des Messgeräteinsatz-Kanalstückes (405tss) gegenüber dem öffnungsfernen aktiven Eingangskanalstück (405etk) des zweiten Sackloches (405s2), vorzugsweise in Form eines Fräas- oder Bohrloches.
91. Gehäusekörper (401) nach einem der vorhergehenden Absätze mit einem weiteren Sackloch (405ss) als Sensorkanalteilstück (405ts) zur Aufnahme eines weiteren Sensors bzw. Sensorgerätes, z.B. eines Temperaturfühlers oder eines Drucksensors, wobei das weitere Sackloch (405ss) das dritte Sackloch (405) ebenfalls rechtwinklig schneidet.
92. Gehäusekörper (401) nach einem der vorhergehenden Absätze mit einem als einstückiges Gussteil hergestellten Gehäusekörper (401), vorzugsweise aus einem Buntmetall oder Buntmetall-Legierungen, insbesondere aus Messing, und/oder mit Öffnungen (402) mit Innengewinde (402g).
93. Gehäusekörper (401) nach einem der vorhergehenden Absätze mit mindestens einem in z-Richtung verlaufenden Kühlkanal (405k), der in der Nähe des Kanalteilstückes (405tss) für den Strömungsmesseinsatz (1) angeordnet ist, aber keine Kanal-Verbindung zu den Sacklöchern 1-3 hat (405s1, 405s2, 405s3) hat.
94. Gehäusekörper (401) nach einem der vorhergehenden Absätze mit ebenen und zueinander parallelen Stirnseiten (401s, 401 sv, 401 sh) sowie durchgehenden Löchern in z-Richtung, so dass mehrere Gehäusekörper (401) anreihbar und fluiddicht verschraubbar sind.
95. Strömungsüberwachungs- oder Strömungsmessvorrichtung mit einem Gehäusekörper (1) nach einem der vorgehenden Absätze und mindestens einem, in der Öffnung (402ss) des Messgeräteinsatz-Kanalstückes (405tss) des Gehäusekörpers (1) fluiddicht befestigtem mechatronischen Strömungsmesseinsatz (1) mit einem durch das zu messende Fluid auslenkbaren Hubkörper (18a) und Strömungsumlenkung im Bereich des Hubkörpers (18a), insbesondere zur Strömungsüberwachung oder Strömungsgeschwindigkeits- oder Strömungsvolumenmessung heißer Medien.
96. Strömungsüberwachungs- oder Strömungsmessvorrichtung (600) nach Absatz 95 und Gewinde-Öffnungen (402ss) im zweiten Sackloch, in die mindestens ein mechatronisches Strömungsmesseinsatz (1) eingeschraubt ist, der die Strömungsgeschwindigkeit durch die Auslenkung eines Hubkörpers (18a) misst bzw. messen kann mittels eines induktiven oder Magnet-Näherungsmessgerätes bzw. -Näherungsschalters.
97. Verwendung eines Gehäusekörper (401) mit mindestens einem, in das zweite Sackloch (405s2) bzw. Kanalstück in x-Richtung (405tss) jedes Funktionsblockes (401f) fluiddicht einsetzbaren oder eingesetzten Strömungsmesseinsatzes (1) nach einem der vorhergehenden Absätze zur Messung und/oder Überwachung der Strömungsgeschwindigkeit und/oder des Strömungsvolumens eines fluidischen Heiz- und/oder Kühlmittels in einer Spritzgießmaschine oder Spritzgießanlage oder in einer Thermoumformeinrichtung, insbesondere als Hochtemperatur-Strömungsmessgerät für die Formmassestromkühlung und/oder -heizung, z.B. für POM ((Polyoxymethylen, Polyacetal), für Fluidtemperaturen von größer als 150 Grad und/oder die Werkzeugkühlung und/oder -heizung für Fluidtemperaturen von größer als 80 bis 120 Grad.
98. Temperiereinrichtung (500) einer Ur- oder Umformeinrichtung (520) mit
   a) einem Temperiergerät (510), das zumindest eine Pumpe zum Pumpen des Fluides in den ein- oder mehrkanaligen Zulauf des Formwerkzeuges (525), das auch eine Einrichtung (525e) zur Temperierung der Formmasse selbst sein kann, eine Temperaturänderungseinrichtung zum Heizen des Fluides und/oder zum Kühlen des Fluides sowie eine Temperaturregeleinrichtung für das zu pumpende Fluid aufweist,
   b) einem zu temperierendes Formwerkzeug (525), insbesondere einem Spritz, Gieß- oder Thermoformwerkzeug, wobei das Formwerkzeug (525) mindestens einen Fluidkanal (580if) aufweist,
   c) mindestens einem Vorlaufkanal (580v,580ev) und mindestens einem Rücklaufkanal (580r, 580er), dadurch gekennzeichnet, dass in mindestens einem dieser Kanäle (580v,580ev, 580r, 580er) ein Strömungsüberwachungs- oder Strömungsmessvorrichtung (600) oder ein Strömungsmessgerät (4, 4m, 4me) mit einem mechatronischen Strömungsmesseinsatz (1) mit einem berührungslos arbeitenden Näherungssensorelement (21e), einem zugehörigen Fluidgehäuse (3a) bzw. Gehäusekörper (401) und einem durch die Fluidströmung auslenkbarem Hubkörper (18a) zur elektronischen Messung der Strömungsgeschwindigkeit und/oder der Strömungsänderung und/oder des Strömungsvolumens des temperierenden Fluides angeordnet ist, wobei dieser Strömungsmesseinsatz (1) und/oder dessen zugehöriges Fluidgehäuse (3a, 3as, 3ay) bzw. Gehäusekörper (401) so gestaltet ist, dass das zu messende Fluid nicht am Hubkörper (18a) in dessen Längsachs- bzw. Auslenrichtungrichtung vorbeifließt bzw. vorbeifließen kann, wie es z.B. bei den Schwebekörpern der Schwebekörper-Durchflußanzeiger oder der Schwebekörper-Durchflussmessgeräte der Fall ist, sondern im Bereich des Hubkörpers (18a) und/oder Ventilsitzes umgelenkt ist bzw. umlenkbar ist, so dass die Abströmrichtung des Fluides nach dem Passieren des Hubkörpers (18a) ungleich der Auslenkrichtung des Hubkörpers (18a) ist.
99. Temperiereinrichtung (500) nach Absatz 98, gekennzeichnet durch einen Strömungsmesseinsatz (1) mit einem induktiven oder Magnet-Näherungssensorelement (21e) und/oder einem induktiven oder Magnet-Näherungssensorgerät oder -schalter.
100. Temperiereinrichtung (500) nach einem der vorhergehenden Absätze gekennzeichnet durch ein dreistutziges, y-förmiges metallisches Guss-Fluidgehäuse (3a), wobei der Strömungsmesseinsatz (1) in den seitlichen, fluidfernen Stutzen (3a4f) eingeschraubt ist.
101. Temperiereinrichtung (500) nach einem der vorhergehenden Absätze gekennzeichnet durch einen mechatronischer Strömungsmesseinsatz (1) mit einer Wärmeleithülse (7a) mit einem hohen Wärmeleitkoeffizienten, die in die Führungshülse 10 mit einem niedrigeren Wärmeleitkoeffizienten einschraubbar ist und in der das Sensorelement (21e) bzw. die Messwertaufnehmereinheit (21) mit einem Anschlusskabel 200 angeordnet sind, wobei das Anschlusskabel (200) nicht in einer Steckerbuchse oder einem Stecker mündet, die/der starr mit dem Gehäuse des Strömungsmesseinsatzes (1) verbunden bzw. in dieses eingesetzt ist, sondern über die Wärmeleithülse (7) hinausragt.
102. Temperiereinrichtung (500) nach einem der vorhergehenden Absätze gekennzeichnet durch einen mechatronischen Strömungsmesseinsatz (1), bei dem zwischen dieser Messwertaufnehmereinheit (21) und dem Fluid sich eine Isoliereinheit (5) mit einer Führungshülse (10) mit einem geringen Wärmeleitkoeffizienten befindet und dass
   diese Messwertaufnehmereinheit (21) thermisch mit einem Wärmeleitkörper (7, 7a) gekoppelt ist, dessen äußerer Teil (7b, 3b7, 3b1), zumindest ein Teil davon, Bestandteil der Außenseite dieses Gehäuses (3b) dieses Strömungsmesseinsatzes (1) ist, und der einen mindestens um den Faktor 50 höheren Wärmeleitkoeffizienten als die Isoliereinheit (5) aufweist, so dass im Betriebsfall Fluidwärme, die zu dieser Messwertaufnehmereinheit (21) gelangt, in den Wärmeleitkörper (7, 7a) einschließlich eines oder mehrerer seiner äußeren Teile (7b, 3b7, 3b1) abgeleitet und zumindest von einem dieser äußeren Teile (7b, 3b7, 3b1) die Fluidwärme an die Umgebungsluft des Gehäuses (3b) bzw. der Messeinheit (1c) abgegeben ist bzw. wird.
103. Temperiereinrichtung (500) nach einem der vorhergehenden Absätze gekennzeichnet durch mindestens ein Regelventil (560), wobei das zugeordnete Strömungsmessgerät (4) bzw. das Mehrfachströmungsmessgeärt (4m) bzw. die Strömungsüberwachungs- oder Strömungsmessvorrichtung (600) bezüglich des Regelventiles (560) in Richtung des Formwerkzeuges (525) angeordnet ist.

### Bezugszeichenliste

1 Mechatronischer Strömungsmesseinsatz (mit Hubkörpermodul 18)
1c Messeinheit (ohne Hubkörpermodul 18)
1w Mechatronischer Strömungsmesseinsatz mit Wasserkühlung (mit Hubkörpermodul 18 und doppelwandiger Wärmeleitkörper 7wd)
2 Fließrichtung des Strömungsmediums
3 Gehäuse des Strömungsmessgerätes 4
3a Medium- bzw. Fluidgehäuse (mit Befestigungsmöglichkeit für den Strömungsmesseinsatz 1)
3a1 Anschluss
3a1g Gewindeanschluss
3a2 Ventilsitz
3a3 Messgerätseitiger Gewindeanschluss
3a4 Stutzen
3a4aAusgangsseitiger Stutzen
3a4e Eingangsseitiger Stutzen
3a4f medium- bzw. fluidferner Stutzen bzw. Messstutzen
3as Schrägsitzventilgehäuse
3ay y-förmiges Medium- bzw. Fluidgehäuse
3b Gehäuse des Strömungsmesseinsatzes 1
3b1 Deckel
3b1i Innengewinde
3b5 Rückfront
3b6 Gehäusemantel
3b6aAußengewinde
3b6i Innengewinde
3b7 wärmeleitender Gehäuseteil
3c Gehäuse der Messeinheit 1c
4 Strömungsmessgerät mit einem Hubkörper 18a
4m Mehrfach-Strömungsmessgerät mit Hubkörpern 18a und mindestens zwei
Funktionsblöcken 401f und mindestens einem mechatronischen
Strömungsmesseinsätz 1 je Funktionsblock 401f
4me Mehrfach-Strömungsmessgerät mit Hubkörpern 18a und mindestens zwei
Funktionsblöcken 401f, mindestens einem mechatronischen
Strömungsmesseinsätz 1 je Funktionsblock 401f und einem einstückig
ausgebildeten gemeinsamem Gehäusekörper 401 bzw. Fluidgehäuse 3a
4r Rückwärtiger Teil des Strömungsmessgerätes 4
5 Isoliereinheit
6 Dämpfungsöffnung
7 Wärmeleitkörper
7a Wärmeleithülse
7a1 Rückseitiger Ausgang
7a2 Gewinde
7a2aAußengewinde
7b Äußerer Teil (über die Rückfront 3b5 bzw. den Deckel 3b1 hinausgehend)
7c Innerer Teil (nicht über die Rückfront 3b5 bzw. den Deckel 3b1 hinausgehend)
7d Messaufnehmerhülse
7k Kammer des Wärmeleitkörpers
7ka Außenkammer für Fluidkühlung
7kaa Fluidanschluß der Außenkammer 7ka
7ki Innenkammer zur Aufnahme des Sensorelementes 21e und/oder der Messaufnehmereinheit und/oder des Anschlußkabels 200
7wd Doppelwandiger Wärmeleitkörper mit getrennten Kammern
10 Führungshülse
10a Außengewinde
10b Innengewinde
10i Isolierhülse
11 Dichtungselement
12 Schiebelement
14 Feder
15 Hohlraum
18 Hubkörpermodul
18a Hubkörper
18b Verbindungselement
18b1 Führungsrohr
19 Schrägsitzventil
20 Beeinflussungselement
21 Messwertaufnehmereinheit
21e Berührungslos arbeitendes Näherungs-Sensorelement
22 Ader des Kabels 200, vorzugsweise Litzeader
24 Leiterplatte
26 Dichtungselement (O-Ring)
100 Anschlusseinheit
110 elektrische Anschlusseinheit
200 Anschlusskabel
210 Knickschutz
300 Ausgabeeinheit
310 Signalausgang
310a Steckeranschluss
320 Elektronikeinheit
330 Gehäuse
401 Gehäusekörper zur Aufnahme eines Strömungsmesseinsatzes 1
401f Funktionsblock
401f1 Erster Funktionsblock
401f2 Zweiter Funktionsblock
401fl Letzter Funktionsblock
401fx x-ter Funktionsblock
401s Stirnseite des Gehäusekörpers
401 sf Sensorferne Schmalseite des Gehäusekörpers 401
401 sn Sensornahe Schmalseite des Gehäusekörpers 401
401 sv Vordere (rechte) Stirnseite des Gehäusekörpers
401 sh Hintere (linke) Stirnseite des Gehäusekörpers
402 Öffnung
402aFluid-Auslass
402ag Gemeinsamer Fluid-Auslass aller Funktionsblöcke 401f
402al Lokaler Auslaß eines Funktionsblockes 401f
402av Vorlaufauslass
402e Fluid-Einlass
402eg Gemeinsamer Fluideinlass
402ep Primärer Fluideinlaß (Vorlauf der zu temperierenden bzw.
strömungstechnisch zu messenden (Spritzgieß-)Maschine
402es Sekundärer Fluideinlaß (Rücklauf der zu temperierenden bzw.
strömungstechnisch zu messenden (Spritzgieß-)Maschine
402g Gewinde-Öffnung
402s Öffnung für die Befestigung eines Sensormesseinsatzes oder Sensorgerätes
402ss Öffnung für die Befestigung eines mechatronischen Sensormesseinsatzes 1
403 Stufe
404 Oberfläche des Gehäusekörpers
405 Kanal
405aAusgangskanal
405ak Aktiver Ausgangskanal
   (kein Kanalstück mit Sackloch oder Blindstopfen oder dergleichen)
405at Teilstück des Ausgangskanales 405a
405at1 Ersten Teilstück
405at2 Zweites Teilstück
405at2y Zweites Teilstück in y-Richtung
405at2z Zweites Teilstück in z-Richtung
405at3 Drittes Teilstück
405at3y Drittes Teilstück in y-Richtung
405at3z Drittes Teilstück in z-Richtung
405atg Gemeinsames Teilstück für mehrere Ausgangskanäle 405a
405atk Aktives Teilstück des Ausgangskanals
405atp Passives Teilstück des Ausgangskanals
405b Befestigungskanal
405d Durchgangsloch in Z-Richtung
405d1 Erstes Durchgangsloch in Z-Richtung
405d2 Zweites Durchgangsloch in Z-Richtung
405dk Durchgangskanal (vom Einlass 402e zum Auslass 402a)
405dks Durchgangskanalstück
405dks1 ErstesDurchgangskanalstück gemäß Pfeil 1
405dks6 Sechstes Durchgangskanalstück
405e Eingangskanal
405e1 Erster Eingangskanal (des ersten Funktionsblockes 401f1)
405e2 Zweiter Eingangskanal (des zweiten Funktionsblockes 401f2)
405ek aktiver Eingangskanal
405et Teilstück
405et1 Erstes Teilstück
405et2 Zweites Teilstück
405etk Aktives Teilstück des Eingangskanals
405etp Passives Teilstück des Eingangskanals
405k Kühlkanal
405s Sackloch
405s1 Erstes Sackloch
405s2 Zweites Sackloch
405s3 Drittes Sackloch
405s4 Viertes Sackloch
405sk Sackkanal (keine Durchgangsströmung)
405ss Weiteres Sackloch 405s zur Aufnahme eines weiteren Sensors
405t Teilstück
405ts Sensorkanalteilstück für einen sekundären Sensor, einen Messfühler oder ein Sensormessgerät, vorzugsweise einen Temperatur oder Drucksensor bzw. ein Temperatur- oder Druckmessgerät
405tss Kanalteilstück für einen mechatronischen Strömungsmesseinsatz 1
407 Ventilsitz für einen mechatronischen Strömungsmesseinsatz 1 mit einem Hubkörper 18a
500 Temperiereinrichtung einer oder für eine Ur- oder Umformeinrichtung
510 Temperiergerät als Bestandteil der Temperiereinrichtung 500
520 Ur- oder Umformeinrichtung mit einem Formwerkzeug 525
520s Spritzgießmaschine mit einem Formwerkzeug 525
525 Formwerkzeug der Ur- oder Umformeinrichtung mit temperierenden Kanälen
525e Einrichtung der Ur- oder Umformeinrichtung mit temperierenden Kanälen
525fa Fluidauslaß des Formwerkzeuges 525 oder der Einrichtung 525e
525fe Fluideinlaß des Formwerkzeuges 525 oder der Einrichtung 525e
560 Regelventil
560b Regelventilblock
570 Fluid-Leitung im Vor- oder Rücklauf
580 Kanal für das temperierende Fluid, der Teil des Zulaufes 580z oder Rücklaufes
580r des Formwerkzeuges 525 hinsichtlich des Temperiergerätes 510 ist
580eGerät-externer Kanal, z.B. Rohrleitung
580er Gerät-externer Kanal, z.B. Rohrleitung, im Rücklauf 580r
580ev Gerät-externer Kanal, z.B. Rohrleitung, im Vorlauf 580v
580i Gerätinterner Kanal 580, z.B. innerhalb des Formwerkzeug 525
580if Gerätinterner Kanal 580 innerhalb des Formwerkzeug 525
580is Gerätinterner Kanal 580 innerhalb der Strömungsmess- bzw.
Strömungsüberwachungsvorrichtung 600, z.B. Durchgangskanal 405dk 580v Vorlauf für das temperierende Fluid bzgl. des zu temperierenden Werkzeuges bzw.
der zu temperierenden Formmasse
580vz Streckeabschnitt des Vorlaufes 580v mit einem einzigen Kanal 580, d.h. ohne
Parallelkana 1580rp
580r Rücklauf für das temperierende Fluid
580rp Parallelkanal des Rücklaufes 580r
580rz Streckeabschnitt des Rücklaufes 580r mit einem einzigen Kanal 580, d.h. ohne
Parallelkanal 580rp
600 Strömungsüberwachungs- oder Strömungsmessvorrichtung mit einem Gehäusekörper (401)

## Patentansprüche

1. Mechatronischer Strömungsmesseinsatz (1) mit einem Gehäuse (3) an dem eine Führungshülse (10) angeordnet ist, auf der ein Schiebeelement (12) gegen eine Federkraft, verschiebbar gelagert ist und einem im Innenraum der Führungshülse (10) angeordneten Näherungs-Sensorelement (21e) das die von der Strömungsgeschwindigkeit des zu messenden Mediums abhängige Position des Schiebelements (12) erfasst, **dadurch gekennzeichnet, dass** eine Wärmeleithülse (7a) mit einem hohen Wärmeleitkoeffizienten vorgesehen ist, die in die Führungshülse (10) mit einem niedrigeren Wärmeleitkoeffizienten eingeschraubt ist und in dessen Innenraum am vorderen Ende das Näherungs-Sensorelement (21e) mit einem Anschlusskabel (200) angeordnet ist wobei die Wärmeleithülse (7a) aus einem hochwärmeleitfähigen Material besteht mit einem Wärmeleitkoeffizienten, der mindestens 50 Mal größer ist als der der Führungshülse (10), und mindestens 220 W/Km beträgt

2. Mechatronischer Strömungsmesseinsatz nach Anspruch 1, **dadurch gekennzeichnet, dass** Wärmeleithülse aus Kupfer oder einer Kupferlegierung besteht mit einem Mindestwärmeleitkoeffizienten von 300 W/Km.

3. Mechatronischer Strömungsmesseinsatz (1) nach einem der Ansprüche 1-2,
**dadurch gekennzeichnet, dass** die Führungshülse (10) und/oder der Gehäusemantel (3b6) des Gehäuses (3) aus PPS (Polyphenylensulfid), POM (Polyoxymethylen, Polyacetal) oder PEEK (Polyetheretherketon) besteht, jeweils mit einem Wärmeleitkoeffizient kleiner 1 W/K m.

4. Mechatronisches Strömungsmessgerät (4) mit einem in einem Fluidgehäuse (3a) oder Gehäusekörper (401) eingeschraubten Strömungsmesseinsatz (1) nach einem der vorhergehenden Ansprüche.

5. Verwendung eines mechatronischen Strömungsmesseinsatz nach einem der Ansprüche 1 bis 3 als Durchflussmesser in einer Spritzgießmaschine,
bei der die Temperatur des Spritzgießfluids bei über 150° C liegt.

## Claims

1. Mechatronic flow measuring insert (1) comprising a housing (3), arranged on which is a guide sleeve (10), on which a sliding element (12) is mounted displaceably against a spring force, and comprising a proximity sensor element (21e), which is arranged inside the guide sleeve (10) and senses the position of the sliding element (12), which is dependent on the flow rate of the medium to be measured, **characterized in that** a heat conducting sleeve (7a) with a high heat conducting coefficient is provided, screwed into the guide sleeve (10) with a lower heat conducting coefficient and having the proximity sensor element (21e) with a connection cable (200) arranged inside it at the front end, the heat conducting sleeve (7a) consisting of a highly heat-conductive material with a heat conducting coefficient that is at least 50 times greater than that of the guide sleeve (10) and is at least 220 W/Km.

2. Mechatronic flow measuring insert according to Claim 1, **characterized in that** the heat conducting sleeve consists of copper or a copper alloy with a minimum heat conducting coefficient of 300 W/Km.

3. Mechatronic flow measuring insert (1) according to either of Claims 1 and 2, **characterized in that** the guide sleeve (10) and/or the housing shell (3b6) of the housing (3) consists of PPS (polyphenylene sulfide), POM (polyoxymethylene, polyacetal) or PEEK (polyether ether ketone), in each case with a heat conducting coefficient of less than 1 W/Km.

4. Mechatronic flow meter (4) with a flow measuring insert (1) according to one of the preceding claims, screwed into a fluid housing (3a) or housing body (401).

5. Use of a mechatronic flow measuring insert according to one of Claims 1 to 3 as a flow meter in an injection-moulding machine, in which the temperature of the injection-moulding fluid is over 150°C.

## Revendications

1. Garniture mécatronique (1) de mesure d'écoulement présentant
un boîtier (3) sur lequel est disposée une douille de guidage (10) sur laquelle un élément coulissant (12) est monté à coulissement en opposition à une force élastique et
un élément (21e) de capteur d'approche disposé dans l'espace intérieur de la douille de guidage (10), qui saisit la position de l'élément coulissant (12) qui varie en fonction de la vitesse d'écoulement du fluide à mesurer,
**caractérisée en ce que**
elle présente une douille (7a) thermiquement conductrice présentant un haut coefficient de conductivité thermique, vissée dans la douille de guidage (10) à bas coefficient de conductivité thermique, l'élément (21e) de capteur d'approche étant disposé avec un câble de raccordement (200) à l'extrémité avant de son espace intérieur et
**en ce que** la douille (7a) thermiquement conductrice est constituée d'un matériau à haute conductivité thermique dont le coefficient de conductivité thermique est au moins 50 fois plus grand que celui de la douille de guidage (10) et vaut au moins 220 W/Km.

2. Garniture mécatronique de mesure d'écoulement selon la revendication 1, **caractérisée en ce que** la douille thermiquement conductrice est constituée de cuivre ou d'un alliage de cuivre dont le coefficient minimum de conductivité thermique est de 300 W/Km.

3. Garniture mécatronique (1) de mesure d'écoulement selon l'une des revendications 1 et 2, **caractérisée en ce que** la douille de guidage (10) et/ou l'enveloppe (3b6) du boîtier (3) sont constituées de PPS (poly(sulfure de phénylène)), de POM (polyoxyméthylène, polyacétal) ou de PEEK (polyétheréthercétone) qui présentent chacun un coefficient de conductivité thermique inférieur à 1 W/Km.

4. Appareil (4) de mesure d'écoulement doté d'une garniture (1) de mesure d'écoulement selon l'une des revendications précédentes vissée dans un boîtier (3a) à fluide ou un corps de boîtier (401).

5. Utilisation d'une garniture mécatronique de mesure d'écoulement selon l'une des revendications 1 à 3 comme dispositif de mesure d'écoulement d'une machine de moulage par injection dans laquelle la température du fluide du moulage par injection est supérieure à 150°C.
